Europäisches Patentamt

European Patent Office

Office européen des brevets

(19)

(11) Publication number:     **0 194 387**
**A2**

(12)
# EUROPEAN PATENT APPLICATION

(21) Application number: **85309541.2**

(22) Date of filing: **30.12.85**

(51) Int. Cl.⁴: **H 04 M 1/27**

(30) Priority: **28.12.84 JP 281140/84**
**28.12.84 JP 281141/84**

(43) Date of publication of application:
**17.09.86  Bulletin 86/38**

(84) Designated Contracting States:
**DE FR GB IT**

(71) Applicant: **TOMY KOGYO CO. INC.**
**9-10, Tateishi 7 Chome Katsushika-Ku**
**Tokyo(JP)**

(72) Inventor: **Mitamura, Isao c/o Tomy Kogyo Co. Inc.**
**9-10, Tateishi 7-chome**
**Katsushika-ku Tokyo(JP)**

(72) Inventor: **Kajihara, Yasao c/o Cong Corp.**
**Kojimachi - Pacific Bldg. No. 103**
**4, Kojimachi 4-chome Chiyoda-ku, Tokyo(JP)**

(74) Representative: **Freed, Arthur Woolf et al,**
**MARKS & CLERK 57-60 Lincoln's Inn Fields**
**London WC2A 3LS(GB)**

(54) A voice-controlled telephone and method for controlling same.

(57) A voice controlled telephone which learns the user's voice by visually prompting the user to speak command words and numbers. The user can also store names and numbers for commonly called people. When a registered person is to be called, the user merely speaks the person's name and a command to dial the number. One embodiment includes a dedicated voice recognition circuit and a separate telephone control computer while another embodiment, having speaker-phone capability, uses a general purpose microprocessor for voice recognition and telephone control. When searching for a match with a user's spoken word, both embodiments scan all stored voice templates for the closest match, display the corresponding telephone number on a visual display and dial the number when a dialing command is recognized.

EP 0 194 387 A2

- 1 -

## A VOICE-CONTROLLED TELEPHONE AND METHOD
## FOR CONTROLLING SAME
## BACKGROUND OF THE INVENTION

### Field of the Invention

The present invention relates to a voice-controlled telephone and a method for controlling the voice-controlled telephone and and, more particularly, to a compact low component number telephone and to the use of visual displays to communicate with the user in a readily understandable manner.

### Description of the Related Art

A number of automatic and repertory dialing telephones are known which seek to provide voice-controlled dialing of telephone numbers. Among the limitations of such telephones is the need to manually enter new numbers or changes in numbers, or in other words the absence of "user-friendliness" which makes the use of the device difficult for the uninitiated. Some spoken-word controlled telephones rely on communications with the user via a limited voice synthesized vocabulary which may be difficult to understand and which is unintelligible in high-noise environments or which may be inappropriate where confidential conversations are necessary. In addition, previous devices have been constructed of custom-designed special-purpose components which made them relatively expensive and therefore unavailable to the general public. Another drawback in prior art devices is that errors in operation occur when noise accompanies a voice command signal.

## SUMMARY OF THE INVENTION

It is an object of the present invention to provide a voice controlled telephone that is user friendly and prompts the user, using a visual display, to speak command words, number digits, subscriber names and subscriber telephone numbers that are used to control the telephone.

It is a further object of the present invention to provide a voice controlled telephone simple in construction.

The present invention provides an inexpensive dialess voice-controlled telephone which uses a "calculator" type visual display to communicate with the user in a readily understandable manner. The device recognizes a number of voice commands, such as "DIAL", "RECALL", and "LEARN" which permit the user to vocally instruct the device as to which operation he or she wishes it to perform. These commands appear on the visual display and prompt the user in the operation of the telephone in a manner which makes the device extremely easy to use even in noisy environments or where the conversation must be confidential. The telephone is constructed from standard integrated circuit chips which results in a reliable and inexpensive device. In the present invention, there may be up to four different users, each with his or her own stored repertory of names and numbers with no ambiguity resulting from overlapping names between the repertoire. Further, each user can select names such as "TOMY" to be recognized by the device and vocally instruct that the corresponding telephone number be dialed. Alternately, a number itself may be directly vocalized and directly dialed. The user also receives visual confirmation of his or her vocal instructions. In the present invention, additions and changes of names and/or numbers from a user's repertory is accomplished vocally and in response to visually-displayed cues.

The present invention also allows a command to consist of a sequence of words and numbers such a "SPRINT" followed by the number followed by "CHARGE CODE", which permits the use of alternate communication networks or the keeping of accounting records with respect to time and cost information. It is also possible to register a subscriber's name by voice and enter the telephone numbers and contro_ other functions by keys on a keyboard. The present invention also provides a highly reliable telephone by which the user can speak with the subscriber on the receiving telephone without lifting the handset and can avoid errors in operation even when combining a plurality of voice commands.

These together with other objects and advantages which will be subsequently apparent, reside in the details of construction and operation as more fully hereinafter described and claimed, reference being had to the accompanying drawings forming a part hereof, wherein like numerals refer to like parts throughout.

## BRIEF DESCRIPTION OF THE DRAWINGS

Figs. 1 and 2 illustrate the exterior appearance of a completely hands free first embodiment telephone according to the present invention;

Fig 3 illustrates the component circuit structure of the first embodiment of the present invention;

Figs. 4-6 illustrate the flow of operation of the telephone as seen by the user; and

Fig. 7 illustrates the component structure of another embodiment of the present invention.

## DESCRIPTION OF THE PREFERRED EMBODIMENTS

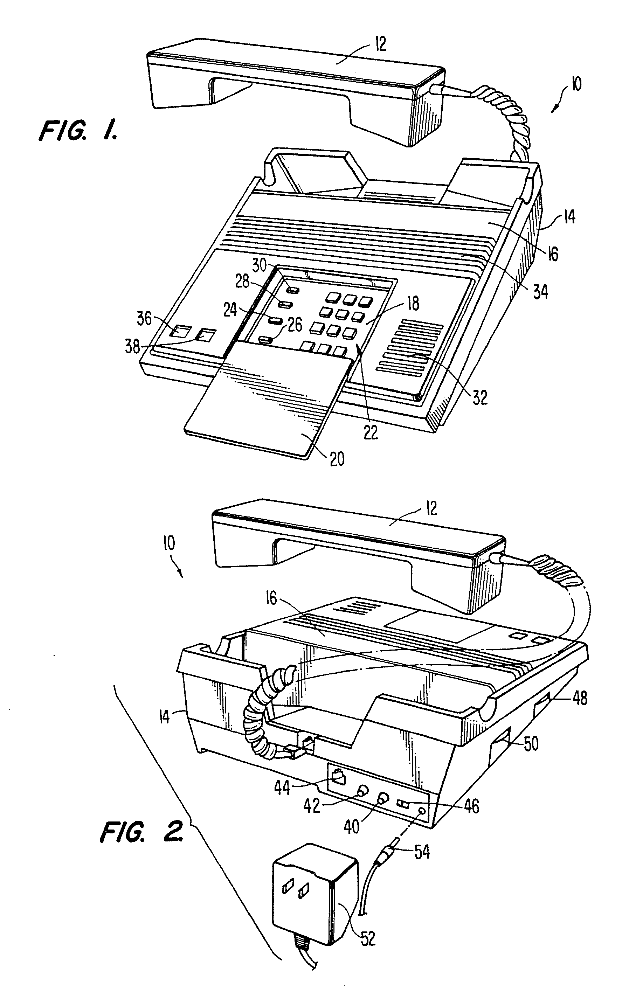

A completely hands free telephone 10 in accordance with the present invention, as illustrated in Figs. 1 and 2, includes a handset 12 and base 14. The base 14 includes a light emitting diode (LED) display 16 and key pad 18 having a key pad slide cover 20. The key pad 18 includes the standard dialing keys 22 which accompany a touch tone telephone along with a user select key 24 which allows the user of the telephone to be selected, a retrain key 26 which puts the telephone in a mode that allows repeating a training sequence, an alarm key 28 which allows the user to program in five telephone call reminder alarms and a time key 30 which allows the telephone clock to be set. The telephone can also function as a speaker telephone whenever a microphone 32 and speaker 34 are activated by hands free button 36. An additional button 38 initiates a recall and redial sequence for the last telephone number dialed. The telephone 10 (Fig. 2) also includes a reset button 40 which resets the telephone 10 prior to training. Training is initiated by the train button 42. A modular jack 44 is used for connection with a telephone line while switch 46 allows the telephone to operate in both a tone and pulse mode. The volume of the speaker is adjusted by volume control 48 while ringer volume is controlled by volume control 50. The telephone is powered by a wall plug power supply adaptor 52 through a connector 54.

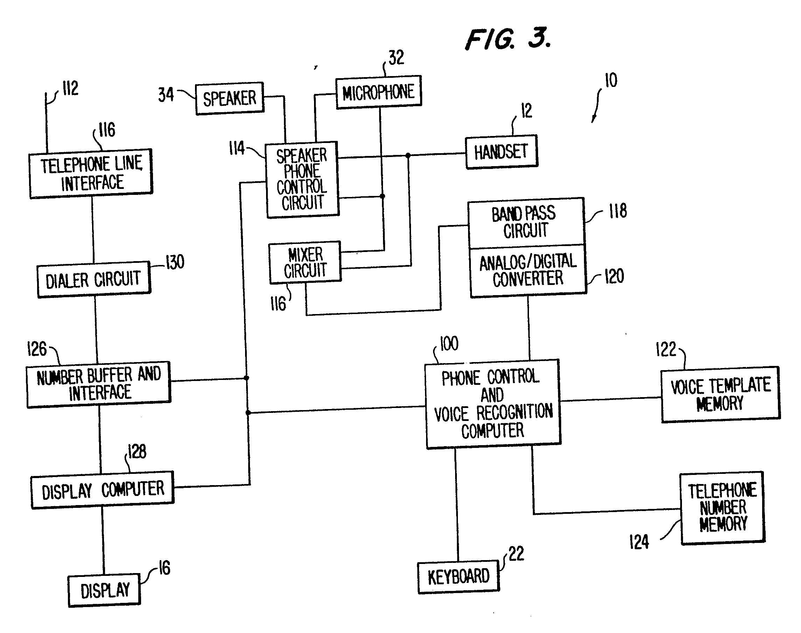

The circuit component details of the present invention are illustrated in Fig. 3. The telephone is controlled by a telephone control and voice recognition computer 100 such as an HD6803 microprocessor by Hitachi connected to read only memory (ROM) circuits storing the program of Appendix I. The telephone control and voice recognition computer 100 interacts with the user through handset 12 or microphone 14 and speaker 34, keyboard 22 and display 16 to make telephone calls over telephone line 112. A speaker-phone/handset control circuit 114 such as BA6571 by Rohm allows the user to communicate in a speaker telephone mode or a hand set mode through telephone line interface 116. The telephone line interface 116 is a standard speaker-phone/handset line interface which can be provided by one of ordinary skill in the art and which includes a tone ringer circuit such as a BA6564 from Rohm that causes the speaker 34 in the telephone to emit a ringing tone whenever a ringing signal is received over telephone line 112.

When the user is programming the telephone or using the telephone in the voice control dialing mode, a voice signal from the user entering through handset 12 or microphone 32 passes through a known speaker-phone/handset mixer circuit 116, is band limited by band pass circuit 118 and converted into digital values by analog/digital converter 120. The band pass circuit 118 and analog/digital converter 120 can be a single component when a circuit designated IFE from Interstate Voice Products is used. The telephone and voice recognition computer 100 samples the voice signal and, in the voice controlled dialing mode, compares the signal to voice templates stored in voice template memory (RAM) 122. During voice recognition for voice control dialing, the voice command input by the user is compared to all of the voice templates that are stored in voice template memory 122 and the command or telephone number closest to the input signal is performed or dialed. That is, the computer 100 scans all the voice templates for all users whenever the telephone is in the voice activated mode.

If a user spoken word is recognized, the telephone control and voice recognition computer 100 retrieves the appropriate telephone number or other user designated number from telephone number memory (RAM) 124. The telephone number is transferred through a number buffer and interface 126, which can be provided by one or ordinary skill in the art, and displayed on display 16 by display control computer 128. The preferred display control computer 128 is a HMCS45A microprocessor manufactured by Hitachi with appropriate ROM storage for the program of Appendix II. The number is displayed on display 16, such as an LED display F1P10A6R by NEC. The number interface 126 also transfers the telephone number one digit at a time to dialer circuit 130, such as a dialer circuit BU8302A by Rohm. The dialer circuit 130 converts the telephone number into multifrequency tones or pulses that are applied through telephone line interface 116 to telephone line 112.

During programming of the telephone, once the user has trained the telephone to the voice activatible commands and numbers, the user can enter a number for storage in telephone number memory 124 either by voice or by keyboard 22. In addition, a user who has not trained the telephone to his voice can operate the telephone through keyboard 22.

When first plugged into a source of power, telephone 10 will display six digits on LED display 16, representing the time in hours, minutes and seconds, and the user can set the time and select a user number.

To effect the programming operation of the voice-actuated telephone device 10, the handset 12 is picked up and the train pushbutton 42 is pressed which causes the device to leave the "reset" mode and enter the voice-controlled training mode. Under control of the program of Appendix I, the information "DIAL-4" will be displayed on LED display 16. "DIAL" is a command to be uttered by the user which the telephone 10 will memorize so that the user can later tell the telephone 10 to "dial" a number. The repetition number "4" is a cue to the user to repeat the word "DIAL" four times. Each time the word "DIAL" is uttered into the microphone in the mouthpiece of the handset 12 and communicated via band pass circuit 118 and A/D converter 120 to voice recognition computer 100 and received thereby, a visual verification will be indicated on display 16 by decreasing the number shown by one, i.e, from "4" to "3" to "2" to "1" and then to "0". In all cases, the user must speak the displayed word until the number has been down-counted to zero. When the number reaches zero, the voice template of the user for the word "DIAL" is stored in voice template memory 122. The process of displaying the word "DIAL" and the repetition number is performed by display microprocessor 128 in accordance with the program of Appendix II based on signals from the computer 100.

Following the recognition of the word "DIAL" four times, the repetition numeral "4" is preceded by the second word in the command word repertory, of seventeen commands which will be recognizable by computer 100 and displayed on the display 16. In the train mode, each of the seventeen command words including numerals zero through nine will be displayed for each user and the user will be prompted to speak the displayed word or numeral so that each word is recorded by the computer 100 a total of four times.

The voice-controlled telephone 10 is provided with the retrain pushbutton 26 which permits the user to retrain the voice recognition computer 100 on a particular one of the seventeen command words by repeatedly depressing the pushbutton 26 until the particular word or numeral appears on the display 16 followed by the repetition number. . The user then performs the training process on this particular word as just described, with respect to the initial training.

Following the training procedure, the display 16 will go blank under control of computers 100 and 128 and the user can then speak the desired number to be dialed digit-by-digit. Each digit will be recognized by the voice recognition computer 100 by searching the voice templates in template memory 122 for the closest match and will be visually displayed on the display 16 as each digit is recognized. The displayed telephone number will be shifted left one digit as each subsequent digit is recognized and displayed on the display 16. If, at any point, a digit is displayed incorrectly, the user can correct the digit by speaking the correct digit, after uttering "BACK" another of the seventeen commands.

Once the correct number has been enunciated and displayed, the user speaks the word "DIAL". The computer 100 will generate the appropriate numbers for the dialer circuit 130. The dialer circuit 130 will convert the numbers into appropriate dialing signals for the telephone interface 116, which will proceed to initiate the call. The telephone number will continue to be displayed during the call. After the call is terminated, the time and user number once again will be displayed on display 16 which verifies that the call has been terminated.

To redial the most-recently dialed number, the user initiates the redial by speaking the word "RECALL", another of the seventeen commands, at which point the most-recently dialed number will be displayed on the display 16. The user then speaks the word "DIAL" which causes the displayed number to be redialed.

With the voice-controlled telephone 10 of the present invention, the user can fabricate a common telephone number list which permits voice controlled dialing of subscribers having corresponding telephone numbers.

Under control of a learn routine in the program of Appendix I, the user initiates this feature by speaking the word "LEARN" which causes the display 180 to display a repetition number, for example, 8. Following this, the user is to utter the name of the subscriber he wishes to add to his list, for example, "TOMY". After he says "TOMY" once, the displayed repetition number will be one less than that displayed originally, i.e., "7". The user is then to repeat the subscriber's name seven more times, each utterance will be recognized and visually verified by the repetition number being decreased by one. The user continues to repeat the name until the number is down-counted to zero. The voice template for the subscriber is then stored in the voice template memory 122.

At this point the display 16 will go blank and the user proceeds as though he wanted TOMY'S number dialed by speaking the telephone number one digit at a time. The number is then stored in telephone number memory 124. As an alternative to speaking the number for Tomy, the user can enter the desired number by operating numeral keys on keyboard 22. In both methods, the number will be displayed on display 16 as each digit is entered. If the telephone number requires a time delay between digits, for special dialing, etc., uttering "PAUSE" will insert a delay.

The user places a call to TOMY by uttering the word "TOMY", at which point TOMY'S telephone number will appear on the display 16, he then initiates the call by saying "DIAL". The voice-controlled telephone 10 of the present invention does not limit a subscriber's name to a single word and the name may consist of various phrases.

Entries in a user's list of commonly-called numbers can be altered by voice control. The user initiates this feature by lifting the handset 12 and speaking the word "FORGET" and speaking the telephone number desired to be altered or entering the number using numeral keys on keyboard 22 or speaking the subscribers name. By saying the word "FORGET" after the number to be erased is displayed, the current telephone number associated with the subscriber is deleted. A repetition numeral is then displayed on the display 16 indicating the number of times a the subscribers name is to be uttered and recognized. Following the entry of the name and number, the telephone 10 returns to the ready to dial mode. At any time, during telephone operation under voice control, the current operation can be cancelled by uttering the word "CANCEL". The telephone returns to a command waiting state when "CANCEL" is recognized.

The microphone of the handset 12 is interlocked with the microphone 32 of the speaker-phone, and only one of the microphones can be used at a time. Telephone line connection and disconnection operations can be performed completely hands free through microphone 32 by uttering a plurality of words during a predetermined time interval. For example, two words consisting of "PHONE" + "FREE" will terminate a call or start a call when the telephone is ringing. Under these conditions, if the user speaks "FREE" within two seconds of uttering "PHONE", the computer 100 recognizes these words as one command and provides a predetermined display to display 16 and terminates a call in progress or answers an incoming call ringing the telephone 10. When initiating a call and the words are repeated within the predetermined time, the telephone waits the specific commands for telephone number and/or subscribers name. After a dial command is entered, the telephone is automatically connected to the telephone line. Thus, the user can speak with the subscriber to be called by operating in a hands-free mode without picking up the handset, using the microphone 32 and the speaker 34.

While the above description of the voice-controlled telephone of the present invention is illustrative of the possible method of use, it is understood that a wide variety of methods of voice-control using a visual display are within scope of the present invention. The voice recognition computer 100 can accommodate up to a 100-word vocabulary, the use of the template words "FORGET", "ONE", "TWO",..., "NINE" "ZERO", "RECALL", and "DIAL" are merely illustrative templates and each user can voice-program the device according to his or her own needs, and in conjunction, utilize various visual displays other than those described above such as time and alarm in accordance with the programs of Appendices I and II.

The voice-controlled telephone 10 is equipped with the user-select pushbutton 24 which permits four users to use the telephone according to the present invention. The subscriber list is common for all users. As described above, the telephone 10, when connected to a power source displays the time is on the display 16 followed to the user's number. The user-select pushbutton 24 is depressed to increase the user's number.

The keyboard 22 can also be used to enter the telephone number independent from the voice-control dialing.

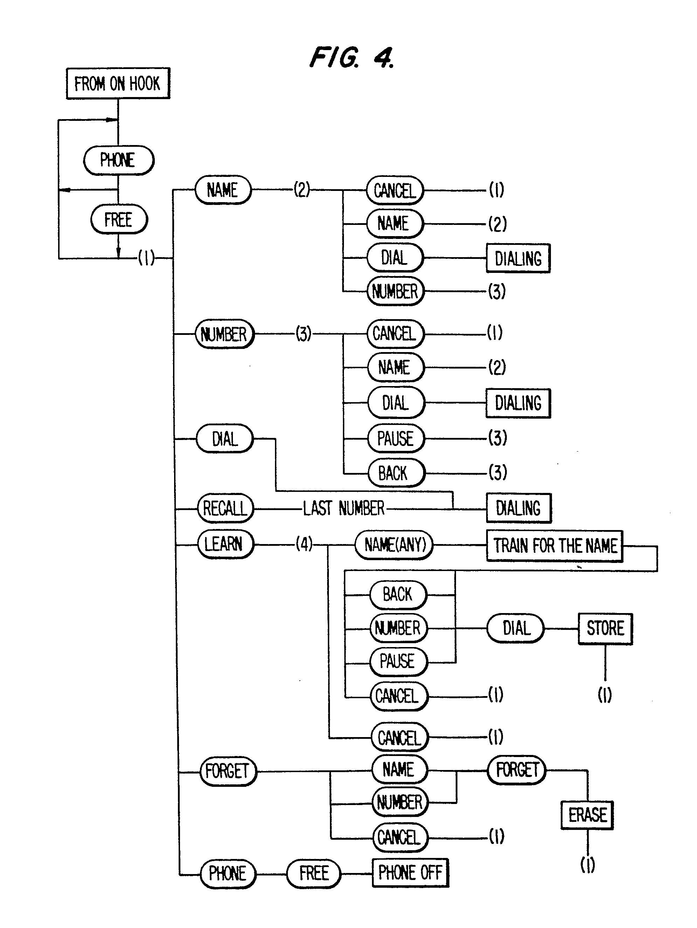

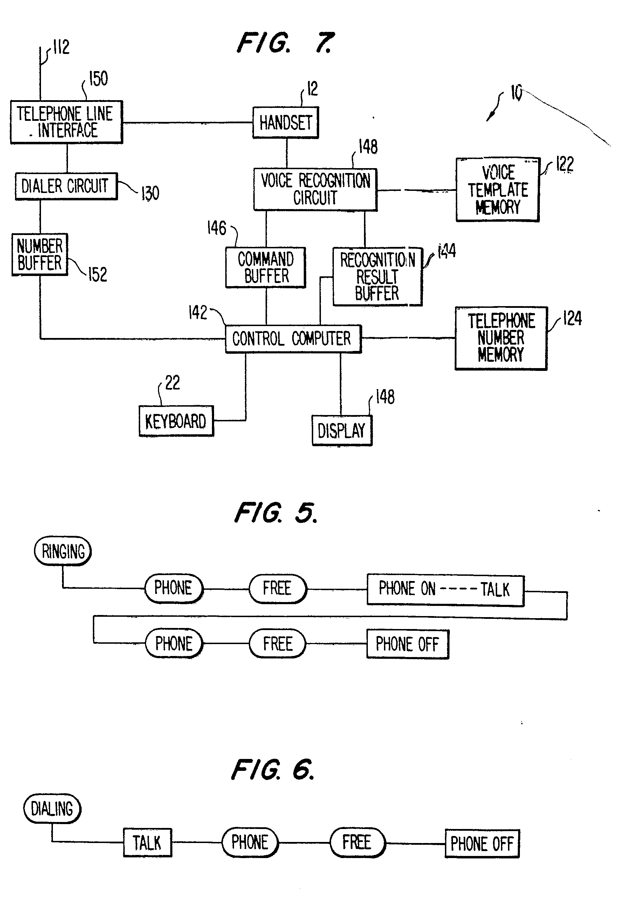

Figs. 4-6 illustrate the command structure and the appropriate functions performed by the telephone in response to voice commands as previously discussed.

Fig. 7 illustrates an alternate version of the present invention which does not include speaker telephone capability, is less expensive and yet performs the same function as the previously-discussed telephone. In this version, a dedicated voice recognition circuit 148, such as a T6658 manufactured by Toshiba, interfaces to a control computer 146 using a microprocessor such as an HD44790A by Hitachi and appropriate ROM storage, through a recognition result buffer 144. The control computer 142 controls the voice recognition circuit 140 through command buffer 146. The control computer 142 performs the same functions as the previously-discussed telephone according to the control routine set forth in Appendix III. The display 148 of this version of the telephone is a liquid crystal display such as an EDD073Z42A4 manufactured by Matushita. A standard telephone interface 150 for a non-speaker telephone receives the telephone numbers via number buffer 152. This telephone also searches all the voice templates in voice template memory 122 for a match with the input voice.

- 16 -                          0194387

The many features and advantages of
the present invention are apparent from the
detailed specification and thus, it is intended
by the appended claims to cover all such
features and advantages of the invention which
fall within the true spirit and scope thereof.
Further, since numerous modifications and
changes will readily occur to those skilled in
the art, it is not desired to limit the
invention to the exact construction and
operation and described, and according, all
suitable modifications and equivalents may be
resorted to, falling within the scope of the
invention.

0194387

APPENDIX    I

```
00001                                   NAM     MPLS
00002              F000  A  INITRN EQU     $F000
00003              F003  A  TRN    EQU     $F003
00004              F006  A  INREC  EQU     $F006
00005              F009  A  REC    EQU     $F009
00006              F00C  A  FORGET EQU     $F00C
00007A E006          _          ORG     $E006
00008A E006 7E E100  A  STARTX JMP     START
00009A E009 7E EE94  A  INTEL  JMP     I0
00010A E012                    ORG     $E012
00011A E012 7E ED24  A  RINGDT JMP     RG1
00012A E015     0A   A  KDATA  FCB     $0A,$07,$04,$01
      A E016     07   A
      A E017     04   A
      A E018     01   A
00013A E019     00   A         FCB     $00,$08,$05,$02
      A E01A     08   A
      A E01B     05   A
      A E01C     02   A
00014A E01D     0B   A         FCB     $0B,$09,$06,$03
      A E01E     09   A
      A E01F     06   A
      A E020     03   A
00015A E021     17   A         FCB     $17,$16,$14,$0C
      A E022     16   A
      A E023     14   A
      A E024     0C   A
00016A E025     0D   A         FCB     $0D,$0D,$18,$15
      A E026     0D   A
      A E027     18   A
      A E028     15   A
00017A E029     11   A         FCB     $11,$10
      A E02A     10   A
00018A E02B     30   A  WDATA  FCB     $30,$40,$38,$3F,$3E,$35
      A E02C     40   A
      A E02D     38   A
      A E02E     3F   A
      A E02F     3E   A
      A E030     35   A
00019A E031     30   A         FCB     $30,$30,$36,$42,$35,$35
      A E032     30   A
      A E033     36   A
      A E034     42   A
      A E035     35   A
      A E036     35   A
00020A E037     30   A         FCB     $30,$30,$30,$30,$30,$20
      A E038     30   A
      A E039     30   A
      A E03A     30   A
      A E03B     30   A
      A E03C     20   A
00021A E03D     30   A         FCB     $30,$30,$30,$30,$30,$21
      A E03E     30   A
      A E03F     30   A
      A E040     30   A
      A E041     30   A
      A E042     21   A
```

**0194387**

```
00022A E043      30      A          FCB      $30,$30,$30,$30,$30,$22
     A E044      30      A
     A E045      30      A
     A E046      30      A
     A E047      30      A
     A E048      22      A
00023A E049      30      A          FCB      $30,$30,$30,$30,$30,$23
     A E04A      30      A
     A E04B      30      A
     A E04C      30      A
     A E04D      30      A
     A E04E      23      A
00024A E04F      30      A          FCB      $30,$30,$30,$30,$30,$24
     A E050      30      A
     A E051      30      A
     A E052      30      A
     A E053      30      A
     A E054      24      A
00025A E055      30      A          FCB      $30,$30,$30,$30,$30,$25
     A E056      30      A
     A E057      30      A
     A E058      30      A
     A E059      30      A
     A E05A      25      A
00026A E05B      30      A          FCB      $30,$30,$30,$30,$30,$26
     A E05C      30      A
     A E05D      30      A
     A E05E      30      A
     A E05F      30      A
     A E060      26      A
00027A E061      30      A          FCB      $30,$30,$30,$30,$30,$27
     A E062      30      A
     A E063      30      A
     A E064      30      A
     A E065      30      A
     A E066      27      A
00028A E067      30      A          FCB      $30,$30,$30,$30,$30,$28
     A E068      30      A
     A E069      30      A
     A E06A      30      A
     A E06B      30      A
     A E06C      28      A
00029A E06D      30      A          FCB      $30,$30,$30,$30,$30,$29
     A E06E      30      A
     A E06F      30      A
     A E070      30      A
     A E071      30      A
     A E072      29      A
00030A E073      30      A          FCB      $30,$40,$31,$45,$43,$35
     A E074      40      A
     A E075      31      A
     A E076      45      A
     A E077      43      A
     A E078      35      A
00031A E079      30      A          FCB      $30,$30,$34,$39,$31,$3C
     A E07A      30      A
     A E07B      34      A
```

```
        A E07C    39      A
        A E07D    31      A
        A E07E    3C      A
00032A  E07F    33      A       FCB    $33,$31,$3E,$33,$35,$3C
        A E080    31      A
        A E081    3E      A
        A E082    33      A
        A E083    35      A
        A E084    3C      A
00033A  E085    30      A       FCB    $30,$30,$32,$31,$33,$3B
        A E086    30      A
        A E087    32      A
        A E088    31      A
        A E089    33      A
        A E08A    3B      A
00034A  E08B    30      A       FCB    $30,$3C,$35,$31,$42,$3E
        A E08C    3C      A
        A E08D    35      A
        A E08E    31      A
        A E08F    42      A
        A E090    3E      A
00035A  E091    36      A       FCB    $36,$3F,$42,$37,$35,$44
        A E092    3F      A
        A E093    42      A
        A E094    37      A
        A E095    35      A
        A E096    44      A
00036A  E097    30      A       FCB    $30,$30,$44,$39,$3D,$35
        A E098    30      A
        A E099    44      A
        A E09A    39      A
        A E09B    3D      A
        A E09C    35      A
00037A  E09D    30      A       FCB    $30,$31,$3C,$31,$42,$3D
        A E09E    31      A
        A E09F    3C      A
        A E0A0    31      A
        A E0A1    42      A
        A E0A2    3D      A
00038A  E0A3    3E      A       FCB    $3E,$45,$3D,$32,$35,$42
        A E0A4    45      A
        A E0A5    3D      A
        A E0A6    32      A
        A E0A7    35      A
        A E0A8    42      A
00039A  E0A9    30      A       FCB    $30,$30,$36,$45,$3C,$3C
        A E0AA    30      A
        A E0AB    36      A
        A E0AC    45      A
        A E0AD    3C      A
        A E0AE    3C      A
00040A  E0AF    30      A       FCB    $30,$33,$31,$3C,$3C,$30
        A E0B0    33      A
        A E0B1    31      A
        A E0B2    3C      A
        A E0B3    3C      A
        A E0B4    30      A
```

```
00041A E100                              ORG     $E100
00042A E100 0E           START           CLI
00043A E101 86 54    A                    LDAA    #$54 \
00044A E103 BD EB99  A                    JSR     H45
00045A E106 86 53    A                    LDAA    #$53
00046A E108 BD EB99  A                    JSR     H45
00047A E10B 86 51    A                    LDAA    #$51
00048A E10D BD EB99  A                    JSR     H45
00049A E110 4F                            CLRA
00050A E111 97 D0    A                    STAA    $D0
00051A E113 97 D1    A                    STAA    $D1
00052A E115 86 01    A MD0                LDAA    #$01
00053A E117 BD EB4E  A                    JSR     INRECX
00054A E11A 86 57    A                    LDAA    #$57
00055A E11C BD EB99  A                    JSR     H45
00056A E11F 86 5A    A                    LDAA    #$5A
00057A E121 BD EB99  A                    JSR     H45
00058A E124 BD EC0E  A                    JSR     DLY2
00059A E127 4F                            CLRA
00060A E128 97 D0    A                    STAA    $D0
00061A E12A 97 D1    A                    STAA    $D1
00062A E12C 4F         M0                 CLRA
00063A E12D 97 D2    A                    STAA    $D2
00064A E12F 97 D3    A                    STAA    $D3
00065A E131 97 D4    A                    STAA    $D4
00066A E133 86 91    A                    LDAA    #$91
00067A E135 BD EB99  A                    JSR     H45
00068A E138 96 D1    A                    LDAA    $D1
00069A E13A 26 2C E168                    BNE     M2
00070A E13C 96 D7    A                    LDAA    $D7
00071A E13E 26 1E E15E                    BNE     M1
00072A E140 B6 6060  A                    LDAA    $6060
00073A E143 27 2B E170                    BEQ     M3
00074A E145 8B 52    A                    ADDA    #$52
00075A E147 97 E3    A                    STAA    $E3
00076A E149 BD ED78  A                    JSR     CCLR
00077A E14C BD EDC6  A                    JSR     LDM
00078A E14F 86 1E    A                    LDAA    #$30
00079A E151 B7 6065  A                    STAA    $6065
00080A E154 86 5B    A                    LDAA    #$5B
00081A E156 BD EB99  A                    JSR     H45
00082A E159 7C 00D7  A                    INC     $00D7
00083A E15C 20 5D E1BB                    BRA     M6
00084A E15E B6 6065  A M1                 LDAA    $6065
00085A E161 26 61 E1C4                    BNE     M7
00086A E163 BD ECBD  A                    JSR     ACLR
00087A E166 20 00 E168                    BRA     M2
00088A E168 86 50    A M2                 LDAA    #$50
00089A E16A BD EB99  A                    JSR     H45
00090A E16D 7F 00D7  A                    CLR     $00D7
00091A E170 BD ED78  A M3                 JSR     CCLR
00092A E173 96 D1    A                    LDAA    $D1
00093A E175 27 0D E184                    BEQ     M3A
00094A E177 86 01    A                    LDAA    #$01
00095A E179 BD ECE1  A                    JSR     WSET
00096A E17C 86 17    A                    LDAA    #$17
00097A E17E BD ECE1  A                    JSR     WSET
```

```
00098A E181 09                      DEX
00099A E182 20 3A E1BE              BRA      M6A
00100A E184 CE 6000   A M3A         LDX      #$6000
00101A E187 A6 78     A             LDAA     $78,X
00102A E189 C6 2D     A             LDAB     #$2D
00103A E18B 81 31     A             CMPA     #$31
00104A E18D 27 02 E191              BEQ      M4
00105A E18F C6 2E     A             LDAB     #$2E
00106A E191 E7 02     A M4          STAB     2,X
00107A E193 EC 79     A             LDD      $79,X
00108A E195 4D                      TSTA
00109A E196 26 02 E19A              BNE      M5
00110A E198 86 10     A             LDAA     #$10
00111A E19A C3 2020   A M5          ADDD     #$2020
00112A E19D ED 00     A             STD      $0,X
00113A E19F EC 7B     A             LDD      $7B,X
00114A E1A1 C3 2020   A             ADDD     #$2020
00115A E1A4 ED 03     A             STD      3,X
00116A E1A6 EC 7D     A             LDD      $7D,X
00117A E1A9 C3 2020   A             ADDD     #$2020
00118A E1AB ED 06     A             STD      6,X
00119A E1AD 86 2C     A             LDAA     #$2C
00120A E1AF A7 05     A             STAA     5,X
00121A E1B1 86 30     A             LDAA     #$30
00122A E1B3 A7 08     A             STAA     8,X
00123A E1B5 96 C7     A             LDAA     $C7
00124A E1B7 8B 20     A             ADDA     #$20
00125A E1B9 A7 09     A             STAA     9,X
00126A E1BB CE 600A   A M6          LDX      #$600A
00127A E1BE FF 602E   A M6A         STX      $602E
00128A E1C1 BD EBE0   A             JSR      DSP
00129A E1C4 BD E9DF   A M7          JSR      KEY
00130A E1C7 26 14 E1DD              BNE      M9
00131A E1C9 BD EC99   A             JSR      HOOKX
00132A E1CC 27 64 E232 M8           BEQ      M13A
00133A E1CE 86 50     A             LDAA     #$50
00134A E1D0 BD EB99   A             JSR      H45
00135A E1D3 96 D1     A             LDAA     $D1
00136A E1D5 27 5E E235              BEQ      MINA
00137A E1D7 BD ED78   A             JSR      CCLR
00138A E1DA 7E E6F4   A             JMP      DIAL
00139A E1DD 81 18     A M9          CMPA     #$18
00140A E1DF 26 05 E1E6              BNE      M10
00141A E1E1 BD EC79   A             JSR      ONX
00142A E1E4 20 E6 E1CC              BRA      M8
00143A E1E6 81 12     A M10         CMPA     #$12
00144A E1E8 26 09 E1F3              BNE      M11
00145A E1EA BD EC1C   A             JSR      PHONEX
00146A E1ED 27 DD E1CC              BEQ      M8
00147A E1EF 96 D8     A             LDAA     $D8
00148A E1F1 20 D9 E1CC              BRA      M8
00149A E1F3 81 17     A M11         CMPA     #$17
00150A E1F5 26 12 E209              BNE      M13
00151A E1F7 96 C7     A             LDAA     $C7
00152A E1F9 91 C6     A             CMPA     $C6
00153A E1FB 26 01 E1FE              BNE      M12
00154A E1FD 4F                      CLRA
```

0194387

```
00155A E1FE 4C              M12     INCA
00156A E1FF 97 C7      A             STAA    $C7
00157A E201 B7 609F    A             STAA    $609F
00158A E204 4A                       DECA
00159A E205 97 87      A             STAA    $87
00160A E207 20 29 E232               BRA     M13A
00161A E209 81 15      A M13         CMPA    #$15
00162A E20B 26 25 E232               BNE     M13A
00163A E20D 86 13      A             LDAA    #$13
00164A E20F D6 C1      A             LDAB    $C1
00165A E211 DD 83      A             STD     $83
00166A E213 C0 12      A             SUBB    #$12
00167A E215 D7 E3      A             STAB    $E3
00168A E217 BD F00C    A             JSR     FORGET
00169A E21A BD ED78    A             JSR     CCLR
00170A E21D BD EDEF    A M13B        JSR     STM
00171A E220 7A 00E3    A             DEC     $00E3
00172A E223 26 F8 E21D               BNE     M13B
00173A E225 CE 606F    A             LDX     #$606F
00174A E228 D6 C7      A             LDAB    $C7
00175A E22A 3A                       ABX
00176A E22B 6F 00      A             CLR     0,X
00177A E22D 86 5E      A             LDAA    #$5E
00178A E22F BD EB99    A             JSR     H45
00179A E232 7E E12C    A M13A        JMP     M0
00180A E235 86 03      A MINA        LDAA    #$03
00181A E237 BD EB4E    A             JSR     INRECX
00182A E23A 96 D7      A             LDAA    $D7
00183A E23C 26 03 E241               BNE     MI0
00184A E23E BD ED78    A             JSR     CCLR
00185A E241 BD EBE0    A MI0         JSR     DSP
00186A E244 86 58      A             LDAA.   #$58
00187A E246 BD EB99    A             JSR     H45
00188A E249 86 14      A             LDAA    #20
00189A E24B E7 6066    A             STAA    $6066
00190A E24E BD E9DF    A MI1         JSR     KEY
00191A E251 26 1A E26D               BNE     MI5
00192A E253 BD EC98    A             JSR     HOOKX
00193A E256 26 0A E262 MI2           BNE     MI4
00194A E258 96 D7      A MI2A        LDAA    $D7
00195A E25A 27 03 E25F               BEQ     MI3
00196A E25C BD ECBD    A             JSR     ACLR
00197A E25F 7E E115    A MI3         JMP     MDO
00198A E262 7D 6066    A MI4         TST     $6066
00199A E265 26 E7 E24E               BNE     MI1
00200A E267 96 D4      A             LDAA    $D4
00201A E269 27 E3 E24E               BEQ     MI1
00202A E26B 20 EB E258               BRA     MI2A
00203A E26D 81 18      A MI5         CMPA    #$18
00204A E26F 26 05 E276               BNE     MI7
00205A E271 BD EC79    A MI6         JSR     ONX
00206A E274 20 E0 E256               BRA     MI2
00207A E276 81 12      A MI7         CMPA    #$12
00208A E278 26 07 E281               BNE     MI8
00209A E27A BD EC1C    A             JSR     PHONEX
00210A E27D 26 B6 E235               BNE     MINA
00211A E27F 20 D5 E256               BRA     MI2
```

**0194387**

```
00212A E281 7D 00D7  A MI8     TST    $00D7
00213A E284 27 0A E290         BEQ    MI9
00214A E286 81 0D     A        CMPA   #$0D
00215A E288 26 C4 E24E         BNE    MI1
00216A E28A BD ECBD   A        JSR    ACLR
00217A E28D 7E E6F4   A        JMP    DIAL
00218A E290 81 1F     A MI9    CMPA   #$1F
00219A E292 23 03 E297         BLS    MI11
00220A E294 7E E694   A MI10   JMP    OTEL
00221A E297 81 0C     A MI11   CMPA   #$0C
00222A E299 26 03 E29E         BNE    MI12
00223A E29B 7E E840   A        JMP    ALARM
00224A E29E 24 11 E2B1 MI12    BCC    MI13
00225A E2A0 C1 02     A        CMPB   #$02
00226A E2A2 27 F0 E294         BEQ    MI10
00227A E2A4 BD ED78   A        JSR    CCLR
00228A E2A7 96 E0     A        LDAA   $E0
00229A E2A9 8B 20     A        ADDA   #$20
00230A E2AB B7 6000   A        STAA   $6000
00231A E2AE 7E E706   A        JMP    DIAL2
00232A E2B1 81 16     A MI13   CMPA   #$16
00233A E2B3 26 03 E2B8         BNE    MI14
00234A E2B5 7E E485   A        JMP    RETRN
00235A E2B8 81 15     A MI14   CMPA   #$15
00236A E2BA 26 03 E2BF         BNE    MI15
00237A E2BC 7E E418   A        JMP    TRAIN
00238A E2BF 81 14     A MI15   CMPA   #$14
00239A E2C1 26 03 E2C6         BNE    MI16
00240A E2C3 7E E833   A        JMP    TIME
00241A E2C6 81 11     A MI16   CMPA   #$11
00242A E2C8 26 03 E2CD         BNE    MI17
00243A E2CA 7E E543   A        JMP    FOG
00244A E2CD 81 10     A MI17   CMPA   #$10
00245A E2CF 26 03 E2D4         BNE    MI18
00246A E2D1 7E E2EB   A        JMP    LEARN
00247A E2D4 81 0D     A MI18   CMPA   #$0D
00248A E2D6 27 03 E2DB         BEQ    MI19
00249A E2D8 7E E24E   A MI18A  JMP    MI1
00250A E2DB BD EE36   A MI19   JSR    OLDA
00251A E2DE C6 2A     A        LDAB   #42
00252A E2E0 BD EDD5   A        JSR    LD2
00253A E2E3 7D 6000   A        TST    $6000
00254A E2E6 27 F0 E2D8         BEQ    MI18A
00255A E2E8 7E E6F4   A        JMP    DIAL
00256A E2EB 86 57     A LEARN  LDAA   #$57
00257A E2ED BD EB99   A        JSR    H45
00258A E2F0 7F 00E3   A        CLR    $00E3
00259A E2F3 7C 00E3   A L1     INC    $00E3
00260A E2F6 BD ED78   A        JSR    CCLR
00261A E2F9 BD EE4E   A        JSR    OK
00262A E2FC 25 68 E366         BCS    L3
00263A E2FE BD EDC6   A        JSR    LDM
00264A E301 7D 6000   A        TST    $6000
00265A E304 26 ED E2F3         BNE    L1
00266A E306 4F                 CLRA
00267A E307 BD EB4E   A        JSR    INRECX
00268A E30A CC 3030   A        LDD    #$3030
```

```
00269A E30D FD 6000    A        STD     $6000
00270A E310 FD 6002    A        STD     $6002
00271A E313 B7 600A    A        STAA    $600A
00272A E316 86 11      A        LDAA    #$11
00273A E318 BD ECE1    A        JSR     WSET
00274A E31B BD ED90    A        JSR     BCD
00275A E31E DC E4      A        LDD     $E4
00276A E320 FD 600B    A        STD     $600B
00277A E323 86 0D      A        LDAA    #$0D
00278A E325 B7 602F    A        STAA    $602F
00279A E328 BD EBE0    A        JSR     DSP
00280A E32B 96 E3      A        LDAA    $E3
00281A E32D 8B 12      A        ADDA    #$12
00282A E32F 97 83      A        STAA    $83
00283A E331 97 84      A        STAA    $84
00284A E333 86 03      A        LDAA    #$03
00285A E335 97 88      A        STAA    $88
00286A E337 86 64      A        LDAA    #100
00287A E339 97 8A      A        STAA    $8A
00298A E33B BD F000    A        JSR     INITRN
00289A E33E D6 C7      A        LDAB    $C7
00290A E340 CE 606F    A        LDX     #$606F
00291A E343 3A                  ABX
00292A E344 A6 00      A        LDAA    0,X
00293A E346 4C                  INCA
00294A E347 91 E3      A        CMPA    $E3
00295A E349 26 02 E34D          BNE     L2
00296A E34B A7 00      A        STAA    0,X
00297A E34D BD F003   A L2      JSR     TRN
00298A E350 4D                  TSTA
00299A E351 27 2B E37E          BEQ     L4
00300A E353 81 FF      A        CMPA    #$FF
00301A E355 27 40 E397          BEQ     L8
00302A E357 86 52      A        LDAA    #$52
00303A E359 BD EB99    A        JSR     H45
00304A E35C BD EC0E    A        JSR     DLY2
00305A E35F 86 51      A        LDAA    #$51
00306A E361 BD EB99    A        JSR     H45
00307A E364 20 E7 E34D          BRA     L2
00308A E366 86 16     A L3      LDAA    #$16
00309A E368 BD ECE1    A        JSR     WSET
00310A E36B FF 602E    A        STX     $602E
00311A E36E BD EBE0    A        JSR     DSP
00312A E371 86 5D      A        LDAA    #$5D
00313A E373 BD EB99    A        JSR     H45
00314A E376 BD EC13    A        JSR     DLY1
00315A E379 BD EC13    A        JSR     DLY1
00316A E37C 20 0D E38B          BRA     L6
00317A E37E BD E9DF   A L4      JSR     KEY
00318A E381 26 0B E38E          BNE     L7
00319A E383 BD EC98    A        JSR     HOOKX
00320A E386 26 C5 E34D L5       BNE     L2
00321A E388 BD F00C   A LBAK    JSR     FORGET
00322A E38B 7E E870   A L6      JMP     CBAK
00323A E38E 81 18     A L7      CMPA    #$18
00324A E390 26 BB E34D          BNE     L2
00325A E392 BD EC79    A        JSR     ONX
```

```
00326A E395 20 EF E386          BRA    L5
00327A E397 CE 6000   A L8      LDX    #$6000
00328A E39A 86 30     A         LDAA   #$30
00329A E39C A7 0D     A         STAA   $0D,X
00330A E39E A7 14     A         STAA   $14,X
00331A E3A0 86 15     A         LDAA   #$15
00332A E3A2 A7 2F     A         STAA   $2F,X
00333A E3A4 BD ECE1   A         JSR    WSET
00334A E3A7 86 02     A         LDAA   #$02
00335A E3A9 BD EB4E   A         JSR    INRECX
00336A E3AC BD EBE0   A L9      JSR    DSP
00337A E3AF BD E9DF   A L10     JSR    KEY
00338A E3B2 26 0D E3C1          BNE    L12
00339A E3B4 BD EC98   A         JSR    HOOKX
00340A E3B7 26 F6 E3AF L11      BNE    L10
00341A E3B9 BD ED78   A         JSR    CCLR
00342A E3BC BD EDEF   A         JSR    STM
00343A E3BF 20 C7 E388          BRA    LBAK
00344A E3C1 81 18     A L12     CMPA   #$18
00345A E3C3 26 05 E3CA          BNE    L13
00346A E3C5 BD EC79   A         JSR    ONX
00347A E3C8 20 ED E3B7          BRA    L11
00348A E3CA 81 12     A L13     CMPA   #$12
00349A E3CC 26 07 E3D5          BNE    L14
00350A E3CE BD EC1C   A         JSR    PHONEX
00351A E3D1 26 D9 E3AC          BNE    L9
00352A E3D3 20 E2 E3B7          BRA    L11
00353A E3D5 81 0E     A L14     CMPA   #$0E
00354A E3D7 27 DE E3B7          BEQ    L11
00355A E3D9 81 17     A         CMPA   #$17
00356A E3DB 27 DA E3B7          BEQ    L11
00357A E3DD 81 0D     A         CMPA   #$0D
00358A E3DF 26 0A E3EB          BNE    L15
00359A E3E1 7D 6015   A         TST    $6015
00360A E3E4 27 C9 E3AF          BEQ    L10
00361A E3E6 BD EDEF   A         JSR    STM
00362A E3E9 20 A0 E38B          BRA    L6
00363A E3EB 81 16     A L15     CMPA   #$16
00364A E3ED 27 04 E3F3          BEQ    L15A
00365A E3EF 81 0F     A         CMPA   #$0F
00366A E3F1 26 10 E403          BNE    L16
00367A E3F3 FE 602E   A L15A    LDX    $602E
00368A E3F6 8C 6015   A         CPX    #$6015
00369A E3F9 27 B4 E3AF          BEQ    L10
00370A E3FB 09                  DEX
00371A E3FC 6F 00     A         CLR    0,X
00372A E3FE FF 602E   A         STX    $602E
00373A E401 20 A9 E3AC          BRA    L9
00374A E403 81 0C     A L16     CMPA   #$0C
00375A E405 22 A8 E3AF          BHI    L10
00376A E407 FE 602E   A         LDX    $602E
00377A E40A 8C 602A   A         CPX    #$602A
00378A E40D 27 A0 E3AF          BEQ    L10
00379A E40F 8B 20     A         ADDA   #$20
00380A E411 A7 00     A         STAA   0,X
00381A E413 7C 602F   A         INC    $602F
00382A E416 20 94 E3AC          BRA    L9
```

```
00383A E418 4F              TRAIN CLRA
00384A E419 BD EB4E    A          JSR   INRECX
00385A E41C 86 57      A          LDAA  #$57
00386A E41E BD EB99    A          JSR   H45
00387A E421 7F 00E3    A          CLR   $00E3
00388A E424 CC 0112    A          LDD   #$0112
00389A E427 DD 83      A          STD   $83
00390A E429 86 03      A          LDAA  #$03
00391A E42B 97 88      A          STAA  $88
00392A E42D 86 62      A          LDAA  #98
00393A E42F 97 8A      A          STAA  $8A
00394A E431 BD F000    A          JSR   INITRN
00395A E434 96 E3      A TR1      LDAA  $E3
00396A E436 81 12      A          CMPA  #$12
00397A E438 26 01 E43B            BNE   TR2
00398A E43A 4F                    CLRA
00399A E43B 4C           TR2      INCA
00400A E43C 97 E3      A TR0      STAA  $E3
00401A E43E BD ED78    A          JSR   CCLR
00402A E441 CC 4442    A          LDD   #$4442
00403A E444 FD 6000    A          STD   $6000
00404A E447 CC 3130    A          LDD   #$3130
00405A E44A FD 6002    A          STD   $6002
00406A E44D 96 E3      A          LDAA  $E3
00407A E44F BD ECE1    A          JSR   WSET
00408A E452 FF 602E    A          STX   $602E
00409A E455 BD EBE0    A          JSR   DSP
00410A E458 BD F003    A TR3      JSR   TRN
00411A E45B 4D                    TSTA
00412A E45C 27 11 E46F            BEQ   TR5
00413A E45E 81 FF      A          CMPA  #$FF
00414A E460 26 DA E43C            BNE   TR0
00415A E462 86 01      A          LDAA  #$01
00416A E464 D6 C7      A TR4      LDAB  $C7
00417A E466 CE 6073    A          LDX   #$6073
00418A E469 3A                    ABX
00419A E46A A7 00      A          STAA  0,X
00420A E46C 7E E870    A          JMP   CBAK
00421A E46F BD E9DF    A TR5      JSR   KEY
00422A E472 26 08 E47C            BNE   TR7
00423A E474 BD EC98    A          JSR   HOOKX
00424A E477 26 DF E458 TR6        BNE   TR3
00425A E479 4F                    CLRA
00426A E47A 20 E8 E464            BRA   TR4
00427A E47C 81 18      A TR7      CMPA  #$18
00428A E47E 26 D8 E458            BNE   TR3
00429A E480 BD EC79    A          JSR   ONX
00430A E483 20 F2 E477            BRA   TR6
00431A E485 86 57      A RETRN    LDAA  #$57
00432A E487 BD EB99    A          JSR   H45
00433A E48A D6 C7      A          LDAB  $C7
00434A E48C CE 6073    A          LDX   #$6073
00435A E48F 3A                    ABX
00436A E490 6D 00      A          TST   0,X
00437A E492 26 07 E49B            BNE   RE1
00438A E494 86 5D      A          LDAA  #$5D
00439A E496 BD EB99    A          JSR   H45
```

**0194387**

```
00440A E499 20 35 E4D0          BRA     RE4
00441A E49B 7F 00E3   A RE1     CLR     $00E3
00442A E49E 96 E3     A RE1A    LDAA    $E3
00443A E4A0 81 12     A         CMPA    #$12
00444A E4A2 27 2C E4D0          BEQ     RE4
00445A E4A4 7C 00E3   A         INC     $00E3
00446A E4A7 BD ED78   A         JSR     CCLR
00447A E4AA CC 4442   A         LDD     #$4442
00448A E4AD FD 6000   A         STD     $6000
00449A E4B0 CC 312C   A         LDD     #$312C
00450A E4B3 FD 6002   A         STD     $6002
00451A E4B6 96 E3     A         LDAA    $E3
00452A E4B8 BD ECE1   A         JSR     WSET
00453A E4BB FF 602E   A         STX     $602E
00454A E4BE 86 02     A         LDAA    #$02
00455A E4C0 BD EB4E   A         JSR     INRECX
00456A E4C3 BD EBE0   A RE1B    JSR     DSP
00457A E4C6 BD E9DF   A RE2     JSR     KEY
00458A E4C9 26 08 E4D3          BNE     RE5
00459A E4CB BD EC98   A         JSR     HOOKX
00460A E4CE 26 F6 E4C6 RE3      BNE     RE2
00461A E4D0 7E E870   A RE4     JMP     CBAK
00462A E4D3 81 18     A RE5     CMPA    #$18
00463A E4D5 26 05 E4DC          BNE     RE6
00464A E4D7 BD EC79   A         JSR     ONX
00465A E4DA 20 F2 E4CE          BRA     RE3
00466A E4DC 81 12     A RE6     CMPA    #$12
00467A E4DE 26 07 E4E7          BNE     RE7
00468A E4E0 BD EC1C   A         JSR     PHONEX
00469A E4E3 26 DE E4C3          BNE     RE1B
00470A E4E5 20 E7 E4CE          BRA     RE3
00471A E4E7 81 0E     A RE7     CMPA    #$0E
00472A E4E9 27 E5 E4D0          BEQ     RE4
00473A E4EB 81 17     A         CMPA    #$17
00474A E4ED 27 E1 E4D0          BEQ     RE4
00475A E4EF 81 16     A         CMPA    #$16
00476A E4F1 27 AB E49E          BEQ     RE1A
00477A E4F3 81 15     A         CMPA    #$15
00478A E4F5 26 CF E4C6          BNE     RE2
00479A E4F7 86 2A     A         LDAA    #$2A
00480A E4F9 B7 6003   A         STAA    $6003
00481A E4FC BD EBE0   A         JSR     DSP
00482A E4FF 4F                  CLRA
00483A E500 BD EB4E   A         JSR     INRECX
00484A E503 96 E3     A         LDAA    $E3
00485A E505 97 83     A         STAA    $83
00486A E507 97 84     A         STAA    $84
00487A E509 86 03     A         LDAA    #$03
00488A E50B 97 88     A         STAA    $88
00489A E50D 86 64     A         LDAA    #100
00490A E50F 97 8A     A         STAA    $8A
00491A E511 BD F000   A         JSR     INITRN
00492A E514 BD F003   A RE8     JSR     TRN
00493A E517 4D                  TSTA
00494A E518 27 13 E52D          BEQ     RE9
00495A E51A 81 FF     A         CMPA    #$FF
00496A E51C 27 80 E49E          BEQ     RE1A
```

```
00497A E51E 86 52      A         LDAA    #$52
00498A E520 BD EB99    A         JSR     H45
00499A E523 BD EC0E    A         JSR     DLY2
00500A E526 86 51      A         LDAA    #$51
00501A E528 BD EB99    A         JSR     H45
00502A E52B 20 E7 E514           BRA     RE8
00503A E52D BD E9DF    A RE9     JSR     KEY
00504A E530 26 08 E53A           BNE     RE11
00505A E532 BD EC98    A         JSR     HOOKX
00506A E535 26 DD E514 RE10      BNE     RE8
00507A E537 7E E870    A         JMP     CBAK
00508A E53A 81 18      A RE11     CMPA    #$18
00509A E53C 26 D6 E514           BNE     RE8
00510A E53E BD EC79    A         JSR     ONX
00511A E541 20 F2 E535           BRA     RE10
00512A E543 86 03      A FOG     LDAA    #$03
00513A E545 BD EB4E    A         JSR     INRECX
00514A E548 86 57      A         LDAA    #$57
00515A E54A BD EB99    A         JSR     H45
00516A E54D 7F 00E3    A F1      CLR     $00E3
00517A E550 BD ED78    A F1A     JSR     CCLR
00518A E553 7F 00D5    A         CLR     $00D5
00519A E556 86 14      A         LDAA    #$14
00520A E558 CE 6000    A F2      LDX     #$6000
00521A E55B A7 2F      A         STAA    $2F,X
00522A E55D 86 30      A         LDAA    #$30
00523A E55F A7 00      A F3      STAA    0,X
00524A E561 08                   INX
00525A E562 8C 600A    A         CPX     #$600A
00526A E565 26 F8 E55F           BNE     F3
00527A E567 86 12      A         LDAA    #$12
00528A E569 BD ECE1    A         JSR     WSET
00529A E56C CC 3030    A         LDD     #$3030
00530A E56F FD 6010    A         STD     $6010
00531A E572 BD ED90    A         JSR     BCD
00532A E575 DC E4      A         LDD     $E4
00533A E577 FD 6012    A         STD     $6012
00534A E57A 86 30      A         LDAA    #$30
00535A E57C B7 6014    A         STAA    $6014
00536A E57F BD EE4E    A         JSR     OH
00537A E582 25 03 E587           BCS     F3A
00538A E584 BD EDC6    A         JSR     LDM
00539A E587 CE 6015    A F3A     LDX     #$6015
00540A E58A 6D 00      A F4      TST     0,X
00541A E58C 26 04 E592           BNE     F5
00542A E58E 86 30      A         LDAA    #$30
00543A E590 A7 00      A         STAA    0,X
00544A E592 08            F5     INX
00545A E593 8C 601C    A         CPX     #$601C
00546A E596 26 F2 E58A           BNE     F4
00547A E598 BD EBE0    A F5A     JSR     DSP
00548A E59B BD E9DF    A F6      JSR     KEY
00549A E59E 26 3B E5DB           BNE     F12
00550A E5A0 BD EC98    A         JSR     HOOKX
00551A E5A3 26 03 E5A8 F7        BNE     F9
00552A E5A5 7E E870    A F8      JMP     CBAK
00553A E5A8 96 D5      A F9      LDAA    $D5
```

85.12.11

**0194387**

```
E5AA 27 EF E59B        BEQ    F6
E5AC 7D 6067  A        TST    $6067
E5AF 26 EA E59B        BNE    F6
E5B1 7C 6067  A        INC    $6067
E5B4 81 01    A        CMPA   #$01
E5B6 26 05 E5BD        BNE    F10
E5B8 7C 00E3  A        INC    $00E3
E5BB 20 03 E5C0        BRA    F11
E5BD 7A 00E3  A F10    DEC    $00E3
E5C0 7D 00E3  A F11    TST    $00E3
E5C3 27 88 E54D        BEQ    F1
E5C5 CE 606F  A        LDX    #$606F
E5C8 D6 C7    A        LDAB   $C7
E5CA 3A                ABX
E5CB A6 00    A        LDAA   0,X
E5CD 91 E3    A        CMPA   $E3
E5CF 25 07 E5D8        BCS    F11A
E5D1 BD ED78  A        JSR    CCLR
E5D4 86 1C    A        LDAA   #$1C
E5D6 20 80 E558        BRA    F2
E5D8 7E E54D  A F11A   JMP    F1
E5DB 81 18    A F12    CMPA   #$18
E5DD 26 05 E5E4        BNE    F13
E5DF BD EC79  A        JSR    ONX
E5E2 20 BF E5A3        BRA    F7
E5E4 81 12    A F13    CMPA   #$12
E5E6 26 07 E5EF        BNE    F14
E5E8 BD EC1C  A        JSR    PHONEX
E5EB 26 AB E598        BNE    F5A
E5ED 20 B4 E5A3        BRA    F7
E5EF 81 17    A F14    CMPA   #$17
E5F1 27 B2 E5A5        BEQ    F8
E5F3 81 0E    A        CMPA   #$0E
E5F5 27 AE E5A5        BEQ    F8
E5F7 81 11    A        CMPA   #$11
E5F9 26 1D E618        BNE    F15
E5FB BD EE4E  A        JSR    OK
E5FE 25 A8 E5A8        BCS    F9
E600 96 E3    A        LDAA   $E3
E602 8B 12    A        ADDA   #$12
E604 97 83    A        STAA   $83
E606 97 84    A        STAA   $84
E608 BD F00C  A        JSR    FORGET
E60B 86 5E    A        LDAA   #$5E
E60D BD EB99  A        JSR    H45
E610 BD ED78  A        JSR    CCLR
E613 BD EDEF  A        JSR    STM
E616 20 8D E5A5        BRA    F8
E618 81 0A    A F15    CMPA   #$0A
E61A 26 1C E638        BNE    F17
E61C CE 606F  A        LDX    #$606F
E61F D6 C7    A        LDAB   $C7
E621 3A                ABX
E622 A6 00    A        LDAA   0,X
E624 7D 00E3  A        TST    $00E3
E627 27 04 E62D        BEQ    F15A
E629 91 E3    A        CMPA   $E3
```

```
00611A E62B 22 02 E62F        BHI    F15B
00612A E62D 97 E3      A F15A STAA   $E3
00613A E62F 86 02      A F15B LDAA   #$02
00614A E631 97 D5      A      STAA   $D5
00615A E633 B7 6067    A F16  STAA   $6067
00616A E636 20 88 E5C0        BRA    F11
00617A E638 81 0B _    A F17  CMPA   #$0B
00618A E63A 26 0E E64A        BNE    F18
00619A E63C 96 E3      A      LDAA   $E3
00620A E63E 26 03 E643        BNE    F17A
00621A E640 7C 00E3    A      INC    $00E3
00622A E643 86 01      A F17A LDAA   #$01
00623A E645 97 D5      A      STAA   $D5
00624A E647 4C                INCA
00625A E648 20 E9 E633        BRA    F16
00626A E64A 81 0D      A F18  CMPA   #$0D
00627A E64C 26 0F E65D        BNE    F19
00628A E64E BD EE4E    A      JSR    OK
00629A E651 25 3E E691        BCS    F20B
00630A E653 86 14      A      LDAA   #$14
00631A E655 B7 602F    A      STAA   $602F
00632A E658 BD EE6B    A      JSR    SDSP
00633A E65B 20 34 E691        BRA    F20B
00634A E65D 7D 00D5    A F19  TST    $00D5
00635A E660 26 2F E691        BNE    F20B
00636A E662 81 09      A      CMPA   #$09
00637A E664 22 0D E673        BHI    F19B
00638A E666 8B 20      A      ADDA   #$20
00639A E668 D6 E5      A      LDAB   $E5
00640A E66A D7 E4      A F19A STAB   $E4
00641A E66C 97 E5      A      STAA   $E5
00642A E66E BD EDAD    A      JSR    BNL
00643A E671 20 1E E691        BRA    F20B
00644A E673 81 0F      A F19B CMPA   #$0F
00645A E675 27 04 E67B        BEQ    F19C
00646A E677 81 16      A      CMPA   #$16
00647A E679 26 0B E686        BNE    F20
00648A E67B 5F              F19C CLRB
00649A E67C 96 E4      A      LDAA   $E4
00650A E67E 81 30      A      CMPA   #$30
00651A E680 26 E8 E66A        BNE    F19A
00652A E682 86 20      A      LDAA   #$20
00653A E684 20 E4 E66A        BRA    F19A
00654A E686 81 1F      A F20  CMPA   #$1F
00655A E688 22 03 E68D        BHI    F20A
00656A E68A 7E E5A8    A      JMP    F9
00657A E68D 80 1F      A F20A SUBA   #$1F
00658A E68F 97 E3      A      STAA   $E3
00659A E691 7E E550    A F20B JMP    F1A
00660A E694 86 03      A OTEL LDAA   #$03
00661A E696 BD EB4E    A      JSR    INRECX
00662A E699 86 57      A      LDAA   #$57
00663A E69B BD EB99    A      JSR    H45
00664A E69E BD ED78    A      JSR    CCLR
00665A E6A1 96 E0      A      LDAA   $E0
00666A E6A3 BD ED37    A OT1  JSR    NSET
00667A E6A6 BD E9DF    A OT2  JSR    KEY
```

                    MFLS

```
00668A E6A9 26 08 E6B3        BNE    OT5
00669A E6AB BD EC98  A        JSR    HOOKX
00670A E6AE 26 F6 E6A6 OT3    BNE    OT2
00671A E6B0 7E E870  A OT4    JMP    CBAK
00672A E6B3 81 18    A OT5    CMPA   #$18
00673A E6B5 26 05 E6BC        BNE    OT6
00674A E6B7 BD EC79  A        JSR    ONX
00675A E6BA 20 F2 E6AE        BRA    OT3
00676A E6BC 81 12    A OT6    CMPA   #$12
00677A E6BE 26 0A E6CA        BNE    OT7
00678A E6C0 BD EC1C  A        JSR    FHONEX
00679A E6C3 27 E9 E6AE        BEQ    OT3
00680A E6C5 BD EBE0  A        JSR    DSP
00681A E6C8 20 DC E6A6        BRA    OT2
00682A E6CA 81 17    A OT7    CMPA   #$17
00683A E6CC 27 E2 E6B0        BEQ    OT4
00684A E6CE 81 0E    A        CMPA   #$0E
00685A E6D0 27 DE E6B0        BEQ    OT4
00686A E6D2 81 16    A        CMPA   #$16
00687A E6D4 27 04 E6DA        BEQ    OT7A
00688A E6D6 81 0F    A        CMPA   #$0F
00689A E6D8 26 13 E6ED        BNE    OT8
00690A E6DA FE 602E  A OT7A   LDX    $602E
00691A E6DD 09                DEX
00692A E6DE 6F 00    A        CLR    0,X
00693A E6E0 8C 6000  A        CPX    #$6000
00694A E6E3 27 CB E6B0        BEQ    OT4
00695A E6E5 FF 602E  A        STX    $602E
00696A E6E8 BD EBE0  A        JSR    DSP
00697A E6EB 20 B9 E6A6        BRA    OT2
00698A E6ED 81 0D    A OT8    CMPA   #$0D
00699A E6EF 26 B2 E6A3        BNE    OT1
00700A E6F1 7E E6F4  A        JMP    DIAL
00701A E6F4 86 54    A DIAL   LDAA   #$54
00702A E6F6 BD EB99  A        JSR    H45
00703A E6F9 86 53    A        LDAA   #$53
00704A E6FB BD EB99  A        JSR    H45
00705A E6FE 86 58    A        LDAA   #$58
00706A E700 BD EB99  A        JSR    H45
00707A E703 BD EC13  A        JSR    DLY1
00708A E706 7F 602F  A DIAL2  CLR    $602F
00709A E709 7F 6067  A        CLR    $6067
00710A E70C CE 6099  A        LDX    #$6099
00711A E70F 6F 00    A D1     CLR    0,X
00712A E711 08                INX
00713A E712 8C 609E  A        CPX    #$609E
00714A E715 26 F8 E70F        BNE    D1
00715A E717 86 01    A        LDAA   #$01
00716A E719 97 DC    A        STAA   $DC
00717A E71B BD EB4E  A        JSR    INRECX
00718A E71E 7F 00D9  A        CLR    $00D9
00719A E721 7F 00D0  A D2     CLR    $00D0
00720A E724 BD E9DF  A        JSR    KEY
00721A E727 26 60 E789        BNE    D8
00722A E729 BD EC98  A        JSR    HOOKX
00723A E72C 26 15 E743 D3     BNE    D6
00724A E72E 96 D1    A        LDAA   $D1
```

0194387

```
00725A E730 26 0B E73D        BNE    D5
00726A E732 CE 6000   A       LDX    #$6000
00727A E735 DF E7     A       STX    $E7
00728A E737 BD EE36   A       JSR    OLDA
00729A E73A BD EDFF   A       JSR    ST2
00730A E73D 7F 00D1   A D5    CLR    $00D1
00731A E740 7E E870   A       JMP    CBAK
00732A E743 96 02     A D6    LDAA   $02
00733A E745 84 80     A       ANDA   #$80
00734A E747 26 D8 E721        BNE    D2
00735A E749 FE 602E   A       LDX    $602E
00736A E74C A6 00     A       LDAA   0,X
00737A E74E 27 03 E753        BEQ    D6A
00738A E750 7E E7D6   A       JMP    D15
00739A E753 7D 6067   A D6A   TST    $6067
00740A E756 26 C9 E721        BNE    D2
00741A E758 86 90     A       LDAA   #$90
00742A E75A BD EE99   A       JSR    H45
00743A E75D 7F 00DC   A       CLR    $00DC
00744A E760 CE 00F0   A       LDX    #$00F0
00745A E763 86 30     A       LDAA   #$30
00746A E765 A7 00     A D7    STAA   0,X
00747A E767 08                INX
00748A E768 8C 00FA   A       CPX    #$00FA
00749A E76B 26 F8 E765        BNE    D7
00750A E76D CE 6099   A       LDX    #$6099
00751A E770 A6 00     A       LDAA   0,X
00752A E772 8B 20     A       ADDA   #$20
00753A E774 97 F1     A       STAA   $F1
00754A E776 EC 01     A       LDD    1,X
00755A E778 C3 2020   A       ADDD   #$2020
00756A E77B DD F3     A       STD    $F3
00757A E77D EC 03     A.      LDD    3,X
00758A E77F C3 2020   A       ADDD   #$2020
00759A E782 DD F6     A       STD    $F6
00760A E784 BD EBC7   A       JSR    WDSP
00761A E787 20 98 E721        BRA    D2
00762A E789 81 18     A D8    CMPA   #$18
00763A E78B 26 05 E792        BNE    D9
00764A E78D BD EC79   A       JSR    ONX
00765A E790 20 9A E72C        BRA    D3
00766A E792 81 12     A D9    CMPA   #$12
00767A E794 26 05 E79B        BNE    D10
00768A E796 BD EC1C   A       JSR    PHONEX
00769A E799 20 91 E72C        BRA    D3
00770A E79B 81 0C     A D10   CMPA   #$0C
00771A E79D 22 13 E7B2        BHI    D12
00772A E79F CE 5FFF   A       LDX    #$5FFF
00773A E7A2 08            D11  INX
00774A E7A3 8C 602A   A       CPX    #$602A
00775A E7A6 27 9B E743        BEQ    D6
00776A E7A8 6D 00     A       TST    0,X
00777A E7AA 26 F6 E7A2        BNE    D11
00778A E7AC 8B 20     A       ADDA   #$20
00779A E7AE A7 00     A       STAA   0,X
00780A E7B0 20 91 E743        BRA    D6
00781A E7B2 81 0D     A D12   CMPA   #$0D
```

**0194387**

```
00782A E7B4 26 8D E743        BNE    D6
00783A E7B6 96 02      A D13  LDAA   $02
00784A E7B8 84 80      A      ANDA   #$80
00785A E7BA 26 FA E7B6        BNE    D13
00786A E7BC 86 57      A      LDAA   #$57
00787A E7BE BD EB99    A      JSR    H45
00788A E7C1 DC 80      A      LDD    $80
00789A E7C3 C3 0064    A      ADDD   #100
00790A E7C6 DD E7      A      STD    $E7
00791A E7C8 DE E7      A      LDX    $E7
00792A E7CA 9C 80      A D14  CPX    $80
00793A E7CC 26 FC E7CA        BNE    D14
00794A E7CE 86 58      A      LDAA   #$58
00795A E7D0 BD EB99    A      JSR    H45
00796A E7D3 7E E743    A      JMP    D6
00797A E7D6 C6 20      A D15  LDAB   #$20
00798A E7D8 D7 02      A      STAB   $02
00799A E7DA D6 03      A      LDAB   $03
00800A E7DC 86 55      A      LDAA   #$55
00801A E7DE C4 10      A      ANDB   #$10
00802A E7E0 27 02 E7E4        BEQ    D16
00803A E7E2 96 56      A      LDAA   #$56
00804A E7E4 BD EB99    A D16  JSR    H45  .
00805A E7E7 96 D9      A      LDAA   $D9
00806A E7E9 26 2E E819        BNE    D18
00807A E7EB 7C 602F    A      INC    $602F
00808A E7EE 86 54      A      LDAA   #$54
00809A E7F0 BD EB99    A      JSR    H45
00810A E7F3 CE 6000    A      LDX    #$6000
00811A E7F6 F6 602F    A      LDAB   $602F
00812A E7F9 CB F5      A      ADDB   #$F5
00813A E7FB 25 01 E7FE        BCS    D16A
00814A E7FD 5F         A      CLRB
00815A E7FE 3A         A D16A ABX
00816A E7FF BD EBE8    A      JSR    DS1
00817A E802 FE 602E    A      LDX    $602E
00818A E805 09         A      DEX
00819A E806 A6 00      A      LDAA   0,X
00820A E808 81 2C      A      CMPA   #$2C
00821A E80A 27 1D E829        BEQ    D19
00822A E80C 80 10      A      SUBA   #$10
00823A E80E BD EB99    A      JSR    H45
00824A E811 86 02      A D17  LDAA   #$02
00825A E813 B7 6067    A      STAA   $6067
00826A E816 7E E721    A      JMP    D2
00827A E819 DE DA      A D18  LDX    $DA
00828A E81B 9C 80      A      CPX    $80
00829A E81D 27 F2 E811        BEQ    D17
00830A E81F 08         A      INX
00831A E820 DF DA      A      STX    $DA
00832A E822 7A 00D9    A      DEC    $00D9
00833A E825 26 F2 E819        BNE    D18
00834A E827 20 E8 E811        BRA    D17
00835A E829 86 C8      A D19  LDAA   #200
00836A E82B 97 D9      A      STAA   $D9
00837A E82D DE 80      A      LDX    $80
00838A E82F DF DA      A      STX    $DA
```

0194387

```
00839A E831 20 DE E811          BRA   D17
00840A E833 86 02    A TIME     LDAA  #$02
00841A E835 BD EB4E  A          JSR   INRECX
00842A E838 BD ED78  A          JSR   CCLR
00843A E83B CC 1330  A          LDD   #$1330
00844A E83E 20 0B E84B          BRA   A1
00845A E840 86 03    A ALARM    LDAA  #$03
00846A E842 BD EB4E  A          JSR   INRECX
00847A E845 BD ED78  A          JSR   CCLR
00848A E848 CC 1400  A          LDD   #$1400
00849A E84B CE 6000  A A1       LDX   #$6000
00850A E84E E7 03    A          STAB  3,X
00851A E850 C6 30    A          LDAB  #$30
00852A E852 E7 02    A          STAB  2,X
00853A E854 E7 01    A          STAB  1,X
00854A E856 E7 00    A          STAB  0,X
00855A E858 BD ECE1  A          JSR   WSET
00856A E85B FF 602E  A          STX   $602E
00857A E85E 86 57    A          LDAA  #$57
00858A E860 BD EB99  A          JSR   H45
00859A E863 BD EBE0  A A2       JSR   DSP
00860A E866 BD E9DF  A A3       JSR   KEY
00861A E869 26 26 E891          BNE   A5
00862A E86B BD EC98  A          JSR   HOOKX
00863A E86E 26 F6 E866 A4       BNE   A3
00864A E870 BD ED78  A CBAK     JSR   CCLR
00865A E873 BD EBE0  A          JSR   DSP
00866A E876 BD EBFB  A          JSR   CDSP
00867A E879 96 D1    A          LDAA  $D1
00868A E87B 26 03 E880          BNE   CB1
00869A E87D 7E E235  A          JMP   MINA
00870A E880 96 E0    A CB1      LDAA  $E0
00871A E882 81 13    A          CMPA  #$13
00872A E884 27 08 E88E          BEQ   CB2
00873A E886 BD EC98  A          JSR   HOOKX
00874A E889 27 03 E88E          BEQ   CB2
00875A E88B 7E E6F4  A          JMP   DIAL
00876A E88E 7E E115  A CB2      JMP   MDO
00877A E891 81 18    A A5       CMPA  #$18
00878A E893 26 05 E89A          BNE   A6
00879A E895 BD EC79  A          JSR   ONX
00880A E898 20 D4 E86E          BRA   A4
00881A E89A 81 12    A A6       CMPA  #$12
00882A E89C 26 07 E8A5          BNE   A7
00883A E89E BD EC1C  A          JSR   PHONEX
00884A E8A1 26 C0 E863          BNE   A2
00885A E8A3 20 C9 E86E          BRA   A4
00886A E8A5 81 0E    A A7       CMPA  #$0E
00887A E8A7 27 C7 E870          BEQ   CBAK
00888A E8A9 81 17    A          CMPA  #$17
00889A E8AB 27 C3 E870          BEQ   CBAK
00890A E8AD CE 6000  A          LDX   #$6000
00891A E8B0 E6 2F    A          LDAB  $2F,X
00892A E8B2 81 16    A          CMPA  #$16
00893A E8B4 27 04 E8BA          BEQ   A7A
00894A E8B6 81 0F    A          CMPA  #$0F
00895A E8B8 26 1A E8D4          BNE   A9
```

```
00896A E8BA 3A              A7A    ABX
00897A E8BB 09                     DEX
00898A E8BC C1 0A      A           CMPB   #$0A
00899A E8BE 23 A3 E863             BLS    A2
00900A E8C0 6F 00      A A8        CLR    0,X
00901A E8C2 09                     DEX
00902A E8C3 A6 00      A           LDAA   0,X
00903A E8C5 81 30      A           CMPA   #$30
00904A E8C7 27 F7 E8C0             BEQ    A8
00905A E8C9 8C 600C    A           CPX    #$600C
00906A E8CC 27 F2 E8C0             BEQ    A8
00907A E8CE 08                     INX
00908A E8CF FF 602E    A           STX    $602E
00909A E8D2 20 8F E863             BRA    A2
00910A E8D4 81 0D      A A9        CMPA   #$0D
00911A E8D6 26 52 E92A             BNE    A9A
00912A E8D8 C1 0B      A           CMPB   #$0B
00913A E8DA 26 58 E934             BNE    A12
00914A E8DC A6 0A      A           LDAA   $0A,X
00915A E8DE 84 0F      A           ANDA   #$0F
00916A E8E0 16                     TAB'
00917A E8E1 CB 52      A           ADDB   #82
00918A E8E3 D7 E3      A           STAB   $E3
00919A E8E5 CE 607B    A           LDX    #$607B
00920A E8E8 C6 05      A           LDAB   #$05
00921A E8EA 3A              A10    ABX
00922A E8EB 4A                     DECA
00923A E8EC 26 FC E8EA             BNE    A10
00924A E8EE E6 00      A           LDAB   0,X
00925A E8F0 27 35 E927 ·           BEQ    A11A
00926A E8F2 86 30      A           LDAA   #$30
00927A E8F4 FD 600B    A           STD    $600B
00928A E8F7 B7 6011    A           STAA   $6011
00929A E8FA B7 6014    A           STAA   $6014
00930A E8FD CC 3D30    A           LDD    #$3D30
00931A E900 FD 600D    A           STD    $600D
00932A E903 EC 01      A           LDD    1,X
00933A E905 C3 2020    A           ADDD   #$2020
00934A E908 FD 600F    A           STD    $600F
00935A E90B EC 03      A           LDD    3,X
00936A E90D C3 2020    A           ADDD   #$2020
00937A E910 FD 6012    A           STD    $6012
00938A E913 BD EDC6    A           JSR    LDM
00939A E916 BD EE6B    A           JSR    SDSP
00940A E919 CE 600B    A           LDX    #$600B
00941A E91C FF 602E    A           STX    $602E
00942A E91F 6F 00      A A11       CLR    0,X
00943A E921 08                     INX
00944A E922 8C 602A    A           CPX    #$602A
00945A E925 26 F8 E91F             BNE    A11
00946A E927 7E E863    A A11A      JMP    A2
00947A E92A 81 11      A A9A       CMPA   #$11
00948A E92C 26 38 E966             BNE    A15
00949A E92E C1 0B      A           CMPB   #$0B
00950A E930 26 F5 E927             BNE    A11A
00951A E932 20 04 E938             BRA    A12A
00952A E934 C1 13      A A12       CMPB   #$13
```

0194387

```
00953A E936 23 EF E927        BLS    A11A
00954A E938 A6 0A      A A12A  LDAA   $0A,X
00955A E93A 81 30      A       CMPA   #$30
00956A E93C 27 19 E957         BEQ    A14
00957A E93E 84 0F      A       ANDA   #$0F
00958A E940 16                 TAB
00959A E941 CB 52      A       ADDB   #82
00960A E943 D7 E3      A       STAB   $E3
00961A E945 CE 607B    A       LDX    #$607B
00962A E948 C6 05      A       LDAB   #$05
00963A E94A 3A            A13  ABX
00964A E94B 4A                 DECA
00965A E94C 26 FC E94A         BNE    A13
00966A E94E BD ED0C    A       JSR    TSUB
00967A E951 BD EDEF    A       JSR    STM
00968A E954 7E E870    A       JMP    CBAK
00969A E957 4F            A14  CLRA
00970A E958 5F                 CLRB
00971A E959 ED 7D      A       STD    $7D,X
00972A E95B A7 7F      A       STAA   $7F,X
00973A E95D CE 6078    A       LDX    #$6078
00974A E960 BD ED0C    A       JSR    TSUB
00975A E963 7E E870    A       JMP    CBAK
00976A E966 81 0C      A A15   CMPA   #$0C
00977A E968 23 04 E96E         BLS    A16
00978A E96A 81 1F      A       CMPA   #$1F
00979A E96C 23 34 E9A2         BLS    A21A
00980A E96E C1 14      A A16   CMPB   #$14
00981A E970 22 0A E97C         BHI    A17
00982A E972 26 0D E981         BNE    A18
00983A E974 C6 30      A       LDAB   #$30
00984A E976 E1 0A      A       CMPB   $0A,X
00985A E978 27 28 E9A2         BEQ    A21A
00986A E97A E7 14      A       STAB   $14,X
00987A E97C BD ED37 A A17      JSR    NSET
00988A E97F 20 21 E9A2         BRA    A21A
00989A E981 81 09      A A18   CMPA   #$09
00990A E983 22 1D E9A2         BHI    A21A
00991A E985 C1 11      A       CMPB   #$11
00992A E987 26 0B E994         BNE    A21
00993A E989 81 05      A A19   CMPA   #$05
00994A E98B 22 15 E9A2         BHI    A21A
00995A E98D 3A            A20  ABX
00996A E98E C6 30      A       LDAB   #$30
00997A E990 E7 00      A       STAB   0,X
00998A E992 20 E8 E97C         BRA    A17
00999A E994 C1 10      A A21   CMPB   #$10
01000A E996 26 12 E9AA         BNE    A22
01001A E998 E6 0F      A       LDAB   $0F,X
01002A E99A C1 20      A       CMPB   #$20
01003A E99C 27 07 E9A5         BEQ    A21B
01004A E99E 81 02      A       CMPA   #$02
01005A E9A0 23 DA E97C         BLS    A17
01006A E9A2 7E E863 A A21A     JMP    A2
01007A E9A5 4D           A21B  TSTA
01008A E9A6 26 D4 E97C         BNE    A17
01009A E9A8 20 F8 E9A2         BRA    A21A
```

```
01010A E9AA C1 0E      A A22    CMPB    #$0E
01011A E9AC 26 06 E9B4         BNE     A23
01012A E9AE 81 01      A        CMPA    #$01
01013A E9B0 23 DB E98D         BLS     A20
01014A E9B2 20 EE E9A2         BRA     A21A
01015A E9B4 C1 0B      A A23    CMPB    #$0B
01016A E9B6 27 08 E9C0         BEQ     A24
01017A E9B8 C1 0A      A        CMPB    #$0A
01018A E9BA 26 1A E9D6         BNE     A26
01019A E9BC C6 30      A        LDAB    #$30
01020A E9BE E7 0A      A        STAB    $0A,X
01021A E9C0 C6 30      A A24    LDAB    #$30
01022A E9C2 E7 0B      A        STAB    $0B,X
01023A E9C4 C6 31      A        LDAB    #$31
01024A E9C6 4D                 TSTA
01025A E9C7 27 02 E9CB         BEQ     A25
01026A E9C9 C6 40      A        LDAB    #$40
01027A E9CB E7 0C      A A25    STAB    $0C,X
01028A E9CD CC 3D0E    A        LDD     #$3D0E
01029A E9D0 A7 0D      A        STAA    $0D,X
01030A E9D2 E7 2F      A        STAB    $2F,X
01031A E9D4 20 CC E9A2         BRA     A21A
01032A E9D6 C1 09      A A26    CMPB    #$09
01033A E9D8 26 A2 E97C         BNE     A17
01034A E9DA 4D                 TSTA
01035A E9DB 26 AC E989         BNE     A19
01036A E9DD 20 C3 E9A2         BRA     A21A
01037                    *
01038                    *** SUBROUTINE ***
01039                    *
01040A E9DF 96 D0      A KEY    LDAA    $D0
01041A E9E1 27 07 E9EA         BEQ     KMDO
01042A E9E3 7F 00D0    A        CLR     $00D0
01043A E9E6 96 D2      A        LDAA    $D2
01044A E9E8 26 00 E9EA         BNE     KMDO
01045A E9EA FE 606E    A KMDO   LDX     $606E
01046A E9ED 9C 80      A        CPX     $80
01047A E9EF 26 03 E9F4         BNE     K0
01048A E9F1 7E EAC3    A        JMP     K17
01049A E9F4 08           K0     INX
01050A E9F5 FF 606E    A        STX     $606E
01051A E9F8 CE 6000    A        LDX     #$6000
01052A E9FB A6 7F      A        LDAA    $7F,X
01053A E9FD 4C                 INCA
01054A E9FE A7 7F      A        STAA    $7F,X
01055A EA00 81 C8      A        CMPA    #200
01056A EA02 26 E6 E9EA         BNE     KMDO
01057A EA04 6F 7F      A        CLR     $7F,X
01058A EA06 A6 68      A        LDAA    $68,X
01059A EA08 26 05 EA0F         BNE     K1
01060A EA0A 7F 00D1    A        CLR     $00D1
01061A EA0D 20 02 EA11         BRA     K2
01062A EA0F 6A 68      A K1     DEC     $68,X
01063A EA11 A6 65      A K2     LDAA    $65,X
01064A EA13 27 02 EA17         BEQ     K3
01065A EA15 6A 65      A        DEC     $65,X
01066A EA17 A6 66      A K3     LDAA    $66,X
```

```
01067A EA19 27 02 EA1D          BEQ     K4
01068A EA1B 6A 66     A         DEC     $66,X
01069A EA1D A6 67     A K4      LDAA    $67,X
01070A EA1F 27 02 EA23          BEQ     K5
01071A EA21 6A 67     A         DEC     $67,X
01072A EA23 96 DC     A K5      LDAA    $DC
01073A EA25 26 1A EA41          BNE     K7
01074A EA27 CE 609C   A         LDX     #$609C
01075A EA2A BD EB82   A         JSR     TCNT
01076A EA2D 26 12 EA41          BNE     K7
01077A EA2F 09                  DEX
01078A EA30 09                  DEX
01079A EA31 BD EB82   A         JSR     TCNT
01080A EA34 26 0B EA41          BNE     K7
01081A EA36 09                  DEX
01082A EA37 A6 00     A         LDAA    0,X
01083A EA39 4C                  INCA
01084A EA3A 81 0A     A         CMPA    #$0A
01085A EA3C 26 01 EA3F          BNE     K6
01086A EA3E 4F                  CLRA
01087A EA3F A7 00     A K6      STAA    0,X
01088A EA41 CE 607D   A K7      LDX     #$607D
01089A EA44 BD EB82  .A         JSR     TCNT
01090A EA47 26 A1 E9EA          BNE     KMD0
01091A EA49 09                  DEX
01092A EA4A 09                  DEX
01093A EA4B BD EB82   A         JSR     TCNT
01094A EA4E 26 34 EA84          BNE     K11
01095A EA50 CE 6000   A         LDX     #$6000
01096A EA53 A6 7A     A         LDAA    $7A,X
01097A EA55 4C                  INCA
01098A EA56 A7 7A     A         STAA    $7A,X
01099A EA58 81 0A     A         CMPA    #$0A
01100A EA5A 26 08 EA64          BNE     K8
01101A EA5C 6F 7A     A         CLR     $7A,X
01102A EA5E 86 01     A         LDAA    #$01
01103A EA60 A7 79     A         STAA    $79,X
01104A EA62 20 20 EA84          BRA     K11
01105A EA64 6D 79     A K8      TST     $79,X
01106A EA66 27 1C EA84          BEQ     K11
01107A EA68 81 03     A         CMPA    #$03
01108A EA6A 26 08 EA74          BNE     K9
01109A EA6C 86 01     A         LDAA    #$01
01110A EA6E A7 7A     A         STAA    $7A,X
01111A EA70 6F 79     A         CLR     $79,X
01112A EA72 20 10 EA84          BRA     K11
01113A EA74 81 02     A K9      CMPA    #$02
01114A EA76 26 0C EA84          BNE     K11
01115A EA78 A6 78     A         LDAA    $78,X
01116A EA7A C6 31     A         LDAB    #$31
01117A EA7C 81 31     A         CMPA    #$31
01118A EA7E 26 02 EA82          BNE     K10
01119A EA80 C6 40     A         LDAB    #$40
01120A EA82 E7 78     A K10     STAB    $78,X
01121A EA84 86 01     A K11     LDAA    #$01
01122A EA86 97 E6     A K12     STAA    $E6
01123A EA88 CE 6078   A         LDX     #$6078
```

```
01124A EA8B DF E7    A           STX     $E7
01125A EA8D CE 607B  A           LDX     ##$607B
01126A EA90 C6 05    A           LDAB    ##$05
01127A EA92 3A            K13     ABX
01128A EA93 4A                    DECA
01129A EA94 26 FC EA92            BNE     K13
01130A EA96 DF E9    A            STX     $E9
01131A EA98 DE E9    A K14        LDX     $E9
01132A EA9A A6 00    A            LDAA    0,X
01133A EA9C 08                    INX
01134A EA9D DF E9    A            STX     $E9
01135A EA9F DE E7    A            LDX     $E7
01136A EAA1 A1 00    A            CMPA    0,X
01137A EAA3 26 14 EAB9            BNE     K16
01138A EAA5 08 .                  INX
01139A EAA6 DF E7    A            STX     $E7
01140A EAA8 8C 607D  A            CPX     ##$607D
01141A EAAB 26 EB EA98            BNE     K14
01142A EAAD CE 605F  A            LDX     ##$605F
01143A EAB0 08            K15     INX
01144A EAB1 6D 00    A            TST     0,X
01145A EAB3 26 FB EAB0            BNE     K15
01146A EAB5 96 E6    A            LDAA    $E6
01147A EAB7 A7 00    A            STAA    0,X
01148A EAB9 96 E6    A K16        LDAA    $E6
01149A EABB 4C                    INCA
01150A EABC 81 06    A            CMPA    ##$06
01151A EABE 26 C6 EA86            BNE     K12
01152A EAC0 7E E9EA  A            JMP     KMDO
01153A EAC3 4F            K17     CLRA
01154A EAC4 97 E0    A            STAA    $E0
01155A EAC6 97 E1    A            STAA    $E1
01156A EAC8 4C                    INCA
01157A EAC9 20 05 EAD0            BRA     K18A
01158A EACB 48            K18     ASLA
01159A EACC 81 40    A            CMPA    ##$40
01160A EACE 27 4B EB1B            BEQ     K24
01161A EAD0 97 02    A K18A       STAA    $02
01162A EAD2 01                    NOP
01163A EAD3 01                    NOP
01164A EAD4 01                    NOP
01165A EAD5 01                    NOP
01166A EAD6 01                    NOP
01167A EAD7 D6 03    A            LDAB    $03
01168A EAD9 81 20    A            CMPA    ##$20
01169A EADB 26 02 EADF            BNE     K18B
01170A EADD C4 05    A            ANDB    ##$05
01171A EADF 56            K18B    RORB
01172A EAE0 24 03 EAE5            BCC     K19
01173A EAE2 5F                    CLRB
01174A EAE3 20 14 EAF9            BRA     K22
01175A EAE5 56            K19     RORB
01176A EAE6 56                    RORB
01177A EAE7 24 04 EAED            BCC     K20
01178A EAE9 C6 01    A            LDAB    ##$01
01179A EAEB 20 0C EAF9            BRA     K22
01180A EAED 56            K20     RORB
```

```
01181A EAEE 24 04 EAF4                BCC    K21
01182A EAF0 C6 02      A              LDAB   #$02
01183A EAF2 20 05 EAF9                BRA    K22
01184A EAF4 56                K21     RORB
01185A EAF5 24 D4 EACB                BCC    K18
01186A EAF7 C6 03      A              LDAB   #$03
01187A EAF9 44         _      K22     LSRA
01188A EAFA 27 04 EB00                BEQ    K22A
01189A EAFC CB 04      A              ADDB   #$04
01190A EAFE 20 F9 EAF9                BRA    K22
01191A EB00 CE E015   A K22A          LDX    #KDATA
01192A EB03 3A                        ABX
01193A EB04 A6 00      A              LDAA   0,X
01194A EB06 97 E0      A              STAA   $E0
01195A EB08 C6 03      A              LDAB   #$03
01196A EB0A 96 E2      A              LDAA   $E2
01197A EB0C 27 04 EB12                BEQ    K23
01198A EB0E D7 E2      A              STAB   $E2
01199A EB10 20 10 EB22                BRA    K25
01200A EB12 D7 E2      A K23          STAB   $E2
01201A EB14 96 E0      A              LDAA   $E0
01202A EB16 C6 01      A              LDAB   #$01
01203A EB18 D7 E1      A              STAB   $E1
01204A EB1A 39                        RTS
01205A EB1B 96 E2      A K24          LDAA   $E2
01206A EB1D 27 03 EB22                BEQ    K25
01207A EB1F 4A                        DECA
01208A EB20 97 E2      A              STAA   $E2
01209A EB22 96 D6      A K25          LDAA   $D6
01210A EB24 27 27 EB4D  .             BEQ    K34
01211A EB26 BD F009    A              JSR  . REC
01212A EB29 4D                        TSTA
01213A EB2A 27 21 EB4D                BEQ    K34
01214A EB2C 81 FF      A              CMPA   #$FF
01215A EB2E 27 1D EB4D                BEQ    K34
01216A EB30 81 02      A              CMPA   #$02
01217A EB32 22 04 EB38                BHI    K30
01218A EB34 8B 11      A              ADDA   #$11
01219A EB36 20 11 EB49                BRA    K33
01220A EB38 81 0C      A K30          CMPA   #$0C
01221A EB3A 22 04 EB40                BHI    K31
01222A EB3C 80 03      A    .         SUBA   #$03
01223A EB3E 20 09 EB49                BRA    K33
01224A EB40 81 12      A K31          CMPA   #$12
01225A EB42 22 03 EB47                BHI    K32
01226A EB44 4A                        DECA
01227A EB45 20 02 EB49                BRA    K33
01228A EB47 8B 0D      A K32          ADDA   #$0D
01229A EB49 C6 02      A K33          LDAB   #$02
01230A EB4B DD E0      A              STD    $E0
01231A EB4D 39                K34     RTS
01232                          *
01233A EB4E 97 D6      A INRECX STAA   $D6
01234A EB50 27 04 EB56                BEQ    IRX1
01235A EB52 81 01      A      .       CMPA   #$01
01236A EB54 26 04 EB5A                BNE    IRX2
01237A EB56 86 02      A IRX1         LDAA   #$02
```

**0194387**

MPLS

```
01238A EB58 20 12 EB6C          BRA     IRX4
01239A EB5A 81 02     A IRX2    CMPA    #$02
01240A EB5C 26 04 EB62          BNE     IRX3
01241A EB5E 86 12     A         LDAA    #$12
01242A EB60 20 0A EB6C          BRA     IRX4
01243A EB62 CE 606F   A IRX3    LDX     #$606F
01244A EB65 D6 C7     A         LDAB    $C7
01245A EB67 3A                  ABX
01246A EB68 A6 00     A         LDAA    0,X
01247A EB6A 8B 12     A         ADDA    #$12
01248A EB6C CE 2000   A IRX4    LDX     #$2000
01249A EB6F C6 01     A         LDAB    #$01
01250A EB71 E7 00     A         STAB    0,X
01251A EB73 C6 FD     A         LDAB    #$FD
01252A EB75 E7 01     A         STAB    1,X
01253A EB77 5F                  CLRB
01254A EB78 ED 02     A         STD     2,X
01255A EB7A 86 6B     A         LDAA    #107
01256A EB7C 97 89     A         STAA    $89
01257A EB7E BD F006   A         JSR     INREC
01258A EB81 39                  RTS
01259                      *
01260A EB82 A6 01     A TCNT    LDAA    1,X
01261A EB84 4C                  INCA
01262A EB85 A7 01     A         STAA    1,X
01263A EB87 81 0A     A         CMPA    #$0A
01264A EB89 26 0D EB98          BNE     TC1
01265A EB8B 6F 01     A         CLR     1,X
01266A EB8D A6 00     A         LDAA    0,X
01267A EB8F 4C                  INCA
01268A EB90 A7 00     A         STAA    0,X
01269A EB92 81 06     A         CMPA    #$06
01270A EB94 26 02 EB98          BNE     TC1
01271A EB96 6F 00     A         CLR     0,X
01272A EB98 39            TC1   RTS
01273                      *
01274A EB99 D6 02     A H45     LDAB    $02
01275A EB9B C4 80     A         ANDB    #$80
01276A EB9D 26 FA EB99          BNE     H45
01277A EB9F 16                  TAB
01278A EBA0 C4 0F     A         ANDB    #$0F
01279A EBA2 44                  LSRA
01280A EBA3 44                  LSRA
01281A EBA4 44                  LSRA
01282A EBA5 44                  LSRA
01283A EBA6 8A 40     A         ORAA    #$40
01284A EBA8 97 02     A         STAA    $02
01285A EBAA 96 02     A H451    LDAA    $02
01286A EBAC 84 80     A         ANDA    #$80
01287A EBAE 27 FA EBAA          BEQ     H451
01288A EBB0 7F 0002   A         CLR     $0002
01289A EBB3 CA 60     A         ORAB    #$60
01290A EBB5 96 02     A H452    LDAA    $02
01291A EBB7 84 80     A         ANDA    #$80
01292A EBB9 26 FA EBB5          BNE     H452
01293A EBBB D7 02     A         STAB    $02
01294A EBBD 96 02     A H453    LDAA    $02
```

                                                    **0194387**

```
01295A EBBF 84 80     A        ANDA    #$80
01296A EBC1 27 FA EBBD          BEQ     H453
01297A EBC3 7F 0002  A         CLR     $0002
01298A EBC6 39                  RTS
01299                    *
01300A EBC7 86 54     A WDSP    LDAA    #$54
01301A EBC9 BD EB99   A         JSR     H45
01302A EBCC CE 00F0   A         LDX     #$00F0
01303A EBCF A6 00     A WD1     LDAA    0,X
01304A EBD1 26 02 EBD5           BNE     WD2
01305A EBD3 86 30     A         LDAA    #$30
01306A EBD5 BD EB99   A WD2     JSR     H45
01307A EBD8 08                  INX
01308A EBD9 8C 00FA   A         CPX     #$00FA
01309A EBDC 26 F1 EBCF           BNE     WD1
01310A EBDE 20 15 EBF5           BRA     DS2
01311                    *
01312A EBE0 86 54     A DSP     LDAA    #$54
01313A EBE2 BD EB99   A         JSR     H45
01314A EBE5 CE 6000   A         LDX     #$6000
01315A EBE8 A6 00     A DS1     LDAA    0,X
01316A EBEA 27 09 EBF5           BEQ     DS2
01317A EBEC BD EB99   A         JSR     H45
01318A EBEF 08                  INX
01319A EBF0 BC 602E   A         CPX     $602E
01320A EBF3 26 F3 EBE8           BNE     DS1
01321A EBF5 86 53     A DS2     LDAA    #$53
01322A EBF7 BD EB99   A         JSR     H45
01323A EBFA 39        .          RTS
01324                    *
01325A EBFB 86 54     A CDSP    LDAA    #$54
01326A EBFD BD EB99   A         JSR     H45
01327A EC00 20 F3 EBF5           BRA     DS2
01328                    *
01329A EC02 CE 00F0   A WCLR    LDX     #$00F0
01330A EC05 6F 00     A WC1     CLR     0,X
01331A EC07 08                  INX
01332A EC08 8C 00FA   A         CPX     #$00FA
01333A EC0B 26 F8 EC05           BNE     WC1
01334A EC0D 39                  RTS
01335                    *
01336A EC0E CE 5000   A DLY2    LDX     #$5000
01337A EC11 20 03 EC16           BRA     DL1
01338A EC13 CE 0000   A DLY1    LDX     #$0000
01339A EC16 01           DL1     NOP
01340A EC17 01                  NOP
01341A EC18 09                  DEX
01342A EC19 26 FB EC16           BNE     DL1
01343A EC1B 39                  RTS
01344                    *
01345A EC1C 86 01     A PHONEX  LDAA    #$01
01346A EC1E 97 D8     A         STAA    $D8
01347A EC20 97 D2     A         STAA    $D2
01348A EC22 BD EC02   A         JSR     WCLR
01349A EC25 CC 4038   A         LDD     #$4038
01350A EC28 DD F0     A         STD     $F0
01351A EC2A CC 3F3E   A         LDD     #$3F3E
```

0194387

```
01352A EC2D DD F2    A          STD    $F2
01353A EC2F 86 35    A          LDAA   #$35
01354A EC31 97 F4    A          STAA   $F4
01355A EC33 BD EBC7  A          JSR    WDSP
01356A EC36 86 05    A          LDAA   #$05
01357A EC38 B7 6067  A          STAA   $6067
01358A EC3B 7D 6067  A PH1      TST    $6067
01359A EC3E 26 09 EC49          BNE    PH3
01360A EC40 7F 00D2  A PH2      CLR    $00D2
01361A EC43 7F 00D8  A          CLR    $00D8
01362A EC46 86 01    A          LDAA   #$01
01363A EC48 39                  RTS
01364A EC49 BD E9DF  A PH3      JSR    KEY
01365A EC4C 26 14 EC62          BNE    PH4
01366A EC4E 96 D3    A          LDAA   $D3
01367A EC50 27 06 EC58          BEQ    PH3A
01368A EC52 BD EC98  A          JSR    HOOKX
01369A EC55 26 E4 EC3B          BNE    PH1
01370A EC57 39                  RTS
01371A EC58 BD EC98  A PH3A     JSR    HOOKX
01372A EC5B 27 DE EC3B          BEQ    PH1
01373A EC5D 96 D3    A          LDAA   $D3
01374A EC5F 27 DA EC3B          BEQ    PH1
01375A EC61 39                  RTS
01376A EC62 81 18    A PH4      CMPA   #$18
01377A EC64 27 13 EC79          BEQ    ONX
01378A EC66 81 13    A          CMPA   #$13
01379A EC68 26 D6 EC40          BNE    PH2
01380A EC6A CC 3036  A          LDD    #$3036
01381A EC6D DD F5    A          STD    $F5
01382A EC6F CC 4235  A          LDD    #$4235
01383A EC72 DD F7    A          STD    $F7
01384A EC74 D7 F9    A          STAB   $F9
01385A EC76 BD EBC7  A          JSR    WDSP
01386A EC79 96 D4    A ONX      LDAA   $D4
01387A EC7B 27 0E EC8B          BEQ    ON3
01388A EC7D 86 5A    A          LDAA   #$5A
01389A EC7F BD EB99  A          JSR    H45
01390A EC82 BD EC0E  A          JSR    DLY2
01391A EC85 7F 00D4  A          CLR    $00D4
01392A EC88 96 D3    A          LDAA   $D3
01393A EC8A 39                  RTS
01394A EC8B 86 59    A ON3      LDAA   #$59
01395A EC8D BD EB99  A          JSR    H45
01396A EC90 BD EC0E  A          JSR    DLY2
01397A EC93 86 01    A          LDAA   #$01
01398A EC95 97 D4    A          STAA   $D4
01399A EC97 39                  RTS
01400A EC98 86 20    A HOOKX    LDAA   #$20
01401A EC9A 97 02    A          STAA   $02
01402A EC9C 96 03    A          LDAA   $03
01403A EC9E 84 08    A          ANDA   #$08
01404A ECA0 26 15 ECB7          BNE    HO2
01405A ECA2 96 D3    A          LDAA   $D3
01406A ECA4 26 10 ECB6          BNE    HO1
01407A ECA6 4C                  INCA
01408A ECA7 97 D3    A          STAA   $D3
```

```
01409A ECA9 7F 00D4   A        CLR     $00D4
01410A ECAC 86 5A     A        LDAA    #$5A
01411A ECAE BD EB99   A        JSR     H45
01412A ECB1 BD EC0E   A        JSR     DLY2
01413A ECB4 86 01     A        LDAA    #$01
01414A ECB6 39            HD1   RTS
01415A ECB7 7F 00D3   A HO2    CLR     $00D3
01416A ECBA 96 D4     A        LDAA    $D4
01417A ECBC 39              RTS
01418                      *
01419A ECBD 7F 00D7   A ACLR  CLR     $00D7
01420A ECC0 CE 6060   A        LDX     #$6060
01421A ECC3 A6 00     A        LDAA    0,X
01422A ECC5 E6 01     A AC1    LDAB    1,X
01423A ECC7 E7 00     A        STAB    0,X
01424A ECC9 08              INX
01425A ECCA 8C 6064   A        CPX     #$6064
01426A ECCD 26 F6 ECC5        BNE     AC1
01427A ECCF 6F 00     A        CLR     0,X
01428A ECD1 C6 05     A        LDAB    #$05
01429A ECD3 CE 607B   A        LDX     #$607B
01430A ECD6 3A             AC2   ABX
01431A ECD7 4A              DECA
01432A ECD8 26 FC ECD6        BNE     AC2
01433A ECDA 6F 00     A AC3    CLR     0,X
01434A ECDC 08              INX
01435A ECDD 5A              DECB
01436A ECDE 26 FA ECDA        BNE     AC3
01437A ECE0 39              RTS
01438                      *
01439A ECE1 CE 5FFF   A WSET  LDX     #$5FFF
01440A ECE4 08             WS1   INX
01441A ECE5 6D 00     A        TST     0,X
01442A ECE7 26 FB CCC4        BNE     WS1
01443A ECE9 DF E7     A        STX     $E7
01444A ECEB CE E02B   A        LDX     #WDATA
01445A ECEE C6 06     A        LDAB    #$06
01446A ECF0 4A             WS2   DECA
01447A ECF1 27 03 ECF6        BEQ     WS3
01448A ECF3 3A              ABX
01449A ECF4 20 FA ECF0        BRA     WS2
01450A ECF6 C6 06     A WS3    LDAB    #$06
01451A ECF8 DF E9     A WS4    STX     $E9
01452A ECFA A6 00     A        LDAA    0,X
01453A ECFC DE E7     A        LDX     $E7
01454A ECFE A7 00     A        STAA    0,X
01455A ED00 08              INX
01456A ED01 5A              DECB
01457A ED02 27 07 ED0B        BEQ     WS5
01458A ED04 DF E7     A        STX     $E7
01459A ED06 DE E9     A        LDX     $E9
01460A ED08 08              INX
01461A ED09 20 ED ECF8        BRA     WS4
01462A ED0B 39             WS5   RTS
01463                      *
01464A ED0C B6 600C   A TSUB  LDAA    $600C
01465A ED0F A7 00     A        STAA    0,X
```

```
01466A ED11 FC 600F    A        LDD     $600F
01467A ED14 84 0F      A        ANDA    #$0F
01468A ED16 C4 0F      A        ANDB    #$0F
01469A ED18 ED 01      A        STD     1,X
01470A ED1A FC 6012    A        LDD     $6012
01471A ED1D 84 0F      A        ANDA    #$0F
01472A ED1F C4-0F      A        ANDB    #$0F
01473A ED21 ED 03      A        STD     3,X
01474A ED23 39                  RTS
01475                      *
01476A ED24 B6 6068    A RG1     LDAA    $6068
01477A ED27 81 03      A        CMPA    #$03
01478A ED29 22 0B ED36          BHI     RG2
01479A ED2B 86 01      A        LDAA    #$01
01480A ED2D 97 D0      A        STAA    $D0
01481A ED2F 97 D1      A        STAA    $D1
01482A ED31 86 08      A        LDAA    #$08
01483A ED33 B7 6068    A        STAA    $6068
01484A ED36 39           RG2     RTS
01485                      *
01486A ED37 7D 6029    A NSET    TST     #6029
01487A ED3A 26 3B ED77          BNE     NS5
01488A ED3C 81 0C      A        CMPA    #$0C
01489A ED3E 22 0E ED4E          BHI     NS2
01490A ED40 CE 5FFF    A        LDX     #$5FFF
01491A ED43 08           NS1     INX
01492A ED44 6D 00      A        TST     0,X
01493A ED46 26 FB ED43          BNE     NS1
01494A ED48 8B 20      A        ADDA    #$20
01495A ED4A A7 00      A        STAA    0,X
01496A ED4C 20 1B ED69          BRA     NS3
01497A ED4E 81 1F      A NS2     CMPA    #$1F
01498A ED50 23 25 ED77          BLS     NS5
01499A ED52 80 1F      A        SUBA    #$1F
01500A ED54 97 E3      A        STAA    $E3
01501A ED56 BD EC02    A        JSR     WCLR
01502A ED59 BD ED90    A        JSR     BCD
01503A ED5C DC E4      A        LDD     $E4
01504A ED5E DD F0      A        STD     $F0
01505A ED60 BD EBC7    A        JSR     WDSP
01506A ED63 BD EC13    A        JSR     DLY1
01507A ED66 BD EDC6    A        JSR     LDM
01508A ED69 CE 6000    A NS3     LDX     #$6000
01509A ED6C 08           NS4     INX
01510A ED6D 6D 00      A        TST     0,X
01511A ED6F 26 FB ED6C          BNE     NS4
01512A ED71 FF 602E    A        STX     $602E
01513A ED74 BD EBE0    A        JSR     DSP
01514A ED77 39           NS5     RTS
01515                      *
01516A ED78 CE 6000    A CCLR    LDX     #$6000
01517A ED7B 6F 00      A CC1     CLR     0,X
01518A ED7D 08                  INX
01519A ED7E 8C 602A    A        CPX     #$602A
01520A ED81 26 F8 ED7B          BNE     CC1
01521A ED83 39                  RTS
01522                      *
```

```
                MPLS

01523A ED84 CE 6014    A NCLR   LDX     #$6014
01524A ED87 6F 00      A NC1    CLR     0,X
01525A ED89 08                  INX
01526A ED8A 8C 602A    A        CPX     #$602A
01527A ED8D 26 F8 ED87          BNE     NC1
01528A ED8F 39                  RTS
01529                    *
01530A ED90 4F            BCD    CLRA
01531A ED91 D6 E3      A        LDAB    $E3
01532A ED93 27 09 ED9E          BEQ     BC2
01533A ED95 C1 09      A BC1    CMPB    #$09
01534A ED97 23 08 EDA1          BLS     BC3
01535A ED99 C0 0A      A        SUBB    #$0A
01536A ED9B 4C                  INCA
01537A ED9C 20 F7 ED95          BRA     BC1
01538A ED9E CC 1010    A BC2    LDD     #$1010
01539A EDA1 C3 2020    A BC3    ADDD    #$2020
01540A EDA4 81 20      A        CMPA    #$20
01541A EDA6 26 02 EDAA          BNE     BC4
01542A EDA8 86 30      A        LDAA    #$30
01543A EDAA DD E4      A BC4    STD     $E4
01544A EDAC 39                  RTS
01545                    *
01546A EDAD DC E4      A BNL    LDD     $E4
01547A EDAF 4D                  TSTA
01548A EDB0 27 04 EDB6          BEQ     BN1
01549A EDB2 81 30      A        CMPA    #$30
01550A EDB4 26 02 EDB8          BNE     BN2
01551A EDB6 86 20      A BN1    LDAA    #$20
01552A EDB8 83 2020    A BN2    SUBD    #$2020
01553A EDBB 4D           BN3    TSTA
01554A EDBC 27 05 EDC3          BEQ     BN4
01555A EDBE 4A                  DECA
01556A EDBF C3 0A      A        ADDD    #$0A
01557A EDC1 20 F8 EDBB          BRA     BN3
01558A EDC3 D7 E3      A BN4    STAB    $E3
01559A EDC5 39                  RTS
01560                    *
01561A EDC6 BD EE15    A LDM    JSR     MAD
01562A EDC9 96 E3      A        LDAA    $E3
01563A EDCB 27 21 EDEE          BEQ     LD4
01564A EDCD C6 15      A        LDAB    #21
01565A EDCF 3A           LD1    ABX
01566A EDD0 4A                  DECA
01567A EDD1 26 FC EDCF          BNE     LD1
01568A EDD3 C6 15      A        LDAB    #21
01569A EDD5 DF E9      A LD2    STX     $E9
01570A EDD7 A6 00      A        LDAA    0,X
01571A EDD9 CE 5FFF    A        LDX     #$5FFF
01572A EDDC 08           LD3    INX
01573A EDDD 8C 602A    A        CPX     #$602A
01574A EDE0 27 0C EDEE          BEQ     LD4
01575A EDE2 6D 00      A        TST     0,X
01576A EDE4 26 F6 EDDC          BNE     LD3
01577A EDE6 A7 00      A        STAA    0,X
01578A EDE8 DE E9      A        LDX     $E9
01579A EDEA 08                  INX
```

```
01580A EDEB 5A                          DECB
01581A EDEC 26 E7 EDD5                   BNE     LD2
01582A EDEE 39              LD4          RTS
01583                       *
01584A EDEF CE 6015  A STM  LDX     #$6015
01585A EDF2 DF E7    A                   STX     $E7
01586A EDF4 BD EE15  A                   JSR     MAD
01587A EDF7 96 E3    A                   LDAA    $E3
01588A EDF9 C6 15    A                   LDAB    #21
01589A EDFB 3A              ST1          ABX
01590A EDFC 4A                           DECA
01591A EDFD 26 FC EDFB                   BNE     ST1
01592A EDFF DF E9    A ST2   STX     $E9
01593A EE01 DE E7    A                   LDX     $E7
01594A EE03 8C 602A  A                   CPX     #$602A
01595A EE06 27 0C EE14                   BEQ     ST3
01596A EE08 A6 00    A                   LDAA    0,X
01597A EE0A 08                           INX
01598A EE0B DF E7    A                   STX     $E7
01599A EE0D DE E9    A                   LDX     $E9
01600A EE0F A7 00    A                   STAA    0,X
01601A EE11 08                           INX
01602A EE12 20 EB EDFF                   BRA     ST2
01603A EE14 39              ST3          RTS
01604                       *
01605A EE15 96 E3    A MAD  LDAA    $E3
01606A EE17 81 52    A                   CMPA    #82
01607A EE19 22 05 EE20                   BHI     MAD1
01608A EE1B 96 C7    A                   LDAA    $C7
01609A EE1D 4A                           DECA
01610A EE1E 26 04 EE24                   BNE     MAD2
01611A EE20 CE 60C8  A MAD1 LDX     #$60C8
01612A EE23 39                           RTS
01613A EE24 4A              MAD2         DECA
01614A EE25 26 04 EE2B                   BNE     MAD3
01615A EE27 CE 6368  A                   LDX     #$6368
01616A EE2A 39                           RTS
01617A EE2B 4A              MAD3         DECA
01618A EE2C 26 04 EE32                   BNE     MAD4
01619A EE2E CE 64A3  A                   LDX     #$64A3
01620A EE31 39                           RTS
01621A EE32 CE 6536  A MAD4 LDX     #$6536
01622A EE35 39                           RTS
01623                       *
01624A EE36 96 C7    A OLDA LDAA    $C7
01625A EE38 CE 6030  A                   LDX     #$6030
01626A EE3B 4A                           DECA
01627A EE3C 27 0F EE4D                   BEQ     OLDA1
01628A EE3E CE 6700  A                   LDX     #$6700
01629A EE41 4A                           DECA
01630A EE42 27 09 EE4D                   BEQ     OLDA1
01631A EE44 CE 6730  A                   LDX     #$6730
01632A EE47 4A                           DECA
01633A EE48 27 03 EE4D                   BEQ     OLDA1
01634A EE4A CE 6760  A                   LDX     #$6760
01635A EE4D 39              OLDA1        RTS
01636                       *
```

0194387

```
01637A EE4E 96 E3     A OK    LDAA    $E3
01638A EE50 26 03 EE55        BNE     OK1
01639A EE52 80 01     A       SUBA    #$01
01640A EE54 39                RTS
01641A EE55 96 C6     A OK1   LDAA    $C6
01642A EE57 C6 52     A       LDAB    #82
01643A EE59 4A                DECA
01644A EE5A 27 0C EE68        BEQ     OK2
01645A EE5C C6 20     A       LDAB    #32
01646A EE5E 4A                DECA
01647A EE5F 27 07 EE68        BEQ     OK2
01648A EE61 C6 0F     A       LDAB    #15
01649A EE63 4A                DECA
01650A EE64 27 02 EE68        BEQ     OK2
01651A EE66 C6 07     A       LDAB    #7
01652A EE68 D1 E3     A OK2   CMPB    $E3
01653A EE6A 39                RTS
01654                    *
01655A EE6B FE 602E   A SDSP  LDX     $602E
01656A EE6E DF E7     A       STX     $E7
01657A EE70 FE 602E   A SD1   LDX     $602E
01658A EE73 A6 00     A       LDAA    0,X
01659A EE75 27 11 EE88        BEQ     SD2
01660A EE77 08                INX
01661A EE78 8C 602B   A       CPX     #$602B
01662A EE7B 27 0B EE88        BEQ     SD2
01663A EE7D FF 602E   A       STX     $602E
01664A EE80 BD EBE0   A       JSR     DSP
01665A EE83 BD EC0E   A       JSR     DLY2
01666A EE86 20 E8 EE70        BRA     SD1
01667A EE88 BD EC13   A SD2   JSR     DLY1
01668A EE8B DE E7     A       LDX     $E7
01669A EE8D FF 602E   A       STX     $602E
01670A EE90 BD EBE0   A       JSR     DSP
01671A EE93 39                RTS
01672                    *
01673A EE94 0F            I0   SEI
01674A EE95 86 7F     A I1    LDAA    #$7F
01675A EE97 97 00     A       STAA    $00
01676A EE99 7F 0001   A       CLR     $0001
01677A EE9C DC 80     A       LDD     $80
01678A EE9E FD 606E   A       STD     $606E
01679A EEA1 7F 00D0   A       CLR     $00D0
01680A EEA4 7F 00E2   A       CLR     $00E2
01681A EEA7 4F                CLRA
01682A EEA8 BD EB4E   A       JSR     INRECX
01683A EEAB BD E9DF   A       JSR     KEY
01684A EEAE 26 0A EEBA        BNE     I4
01685A EEB0 FE 60A0   A I3    LDX     $60A0
01686A EEB3 8C 55AA   A       CPX     #$55AA
01687A EEB6 27 43 EEFB        BEQ     I7
01688A EEB9 86 01     A       LDAA    #$01
01689A EEBA 81 04     A I4    CMPA    #$04
01690A EEBC 23 06 EEC4        BLS     I4A
01691A EEBE 81 05     A       CMPA    #$05
01692A EEC0 26 EE EEB0        BNE     I3
01693A EEC2 20 7A EF3E        BRA     I8
```

```
EEC4 4D          I4A    TSTA
EEC5 27 E9 EE80         BEQ   I3
EEC7 CE 00C1  A         LDX   #$00C1
EECA 6F 00    A I5      CLR   0,X
EECC 08                 INX
EECD 8C 0100  A         CPX   #$0100
EED0 26 F8 EECA         BNE   I5
EED2 CE 6000  A         LDX   #$6000
EED5 6F 00    A I6      CLR   0,X
EED7 08                 INX
EED8 8C 6800  A         CPX   #$6800
EEDB 26 F8 EED5         BNE   I6
EEDD 16                 TAB
EEDE FD 609E  A         STD   $609E
EEE1 4F                 CLRA
EEE2 97 C0    A         STAA  $C0
EEE4 97 87    A         STAA  $87
EEE6 4C                 INCA
EEE7 C6 64    A         LDAB  #100
EEE9 DD 83    A         STD   $83
EEEB D7 C1    A         STAB  $C1
EEED BD F00C  A         JSR   FORGET
EEF0 86 31    A         LDAA  #$31
EEF2 B7 6078  A         STAA  $6078
EEF5 CC 0102  A         LDD   #$0102
EEF8 FD 6079  A         STD   $6079
EEFB FC 609E  A I7      LDD   $609E
EEFE DD C6    A         STD   $C6
EF00 4A                 DECA
EF01 5A                 DECB
EF02 97 C0    A         STAA  $C0
EF04 D7 87    A         STAB  $87
EF06 86 54    A         LDAA  #$54
EF09 BD EB99  A         JSR   H45
EF0B 86 53    A         LDAA  #$53
EF0D BD EB99  A         JSR   H45
EF10 86 5E    A         LDAA  #$5E
EF12 BD EB99  A         JSR   H45
EF15 86 51    A         LDAA  #$51
EF17 BD EB99  A         JSR   H45
EF1A DC 80    A         LDD   $80
EF1C FD 606E  A         STD   $606E
EF1F CC 55AA  A         LDD   #$55AA
EF22 FD 60A0  A         STD   $60A0
EF25 96 C6    A         LDAA  $C6
EF27 C6 64    A         LDAB  #100
EF29 81 01    A         CMPA  #$01
EF2B 27 0E EF3B         BEQ   I7A
EF2D C6 32    A         LDAB  #50
EF2F 81 02    A         CMPA  #$02
EF31 27 08 EF3B         BEQ   I7A
EF33 C6 21    A         LDAB  #33
EF35 81 03    A         CMPA  #$03
EF37 27 02 EF3B         BEQ   I7A
EF39 C6 19    A         LDAB  #25
EF3B D7 C1    A I7A     STAB  $C1
EF3D 39                 RTS
```

0194387

MPLS

```
01751A EF3E 86 5F      A  I2      LDAA    #$5F
01752A EF40 BD EB99    A          JSR     H45
01753A EF43 86 50      A          LDAA    #$50
01754A EF45 BD EB99    A          JSR     H45
01755A EF48 4F                    CLRA
01756A EF49 CE 0080    A          LDX     #$0080
01757A EF4C A7 00      A  I9      STAA    0,X
01758A EF4E 4C            I10      INCA
01759A EF4F 27 FD EF4E            BEQ     I10
01760A EF51 08                    INX
01761A EF52 8C 0100    A          CPX     #$0100
01762A EF55 26 05 EF5C            BNE     I11A
01763A EF57 CE 2000    A          LDX     #$2000
01764A EF5A 20 F0 EF4C            BRA     I9
01765A EF5C 8C 2400    A  I11A    CPX     #$2400
01766A EF5F 26 05 EF66            BNE     I11
01767A EF61 CE 2500    A          LDX     #$2500
01768A EF64 20 E6 EF4C            BRA     I9
01769A EF66 8C 3000    A  I11     CPX     #$3000
01770A EF69 26 05 EF70            BNE     I12
01771A EF6B CE 6000    A          LDX     #$6000
01772A EF6E 20 DC EF4C            BRA     I9
01773A EF70 8C 6800    A  I12     CPX     #$6800
01774A EF73 26 D7 EF4C            BNE     I9
01775A EF75 C6 21      A          LDAB    #$21
01776A EF77 4F                    CLRA
01777A EF78 CE 0080    A          LDX     #$0080
01778A EF7B 5C            I13     INCB
01779A EF7C A1 00      A  I14     CMPA    0,X
01780A EF7E 26 2A EFAA  .         BNE     I18
01781A EF80 4C            I15     INCA
01782A EF81 27 FD EF80            BEQ     I15
01783A EF83 08                    INX
01784A EF84 8C 0100    A          CPX     #$0100
01785A EF87 26 05 EF8E            BNE  -  I16A
01786A EF89 CE 2000    A          LDX     #$2000
01787A EF8C 20 ED EF7B            BRA     I13
01788A EF8E 8C 2400    A  I16A    CPX     #$2400
01789A EF91 26 05 EF98            BNE     I16
01790A EF93 CE 2500    A          LDX     #$2500
01791A EF96 20 E3 EF7B            BRA     I13
01792A EF98 8C 3000    A  I16     CPX     #$3000
01793A EF9B 26 05 EFA2            BNE     I17
01794A EF9D CE 6000    A          LDX     #$6000
01795A EFA0 20 D9 EF7B            BRA     I13
01796A EFA2 8C 6800    A  I17     CPX     #$6800
01797A EFA5 26 D5 EF7C            BNE     I14
01798A EFA7 7E F100    A          JMP     $F100
01799A EFAA BD EC02    A  I18     JSR     WCLR
01900A EFAD D7 F0      A          STAB    $F0
01801A EFAF CC 3542    A          LDD     #$3542
01802A EFB2 DD F2      A          STD     $F2
01803A EFB4 86 3F      A          LDAA    #$3F
01804A EFB6 DD F5      A          STD     $F5
01805A EFB8 D7 F4      A          STAB    $F4
01806A EFBA BD EBC7    A          JSR     WDSP
01807A EFBD 86 5C      A          LDAA    #$5C
```

```
01808A EFBF BD EB99  A            JSR     H45
01809A EFC2 20 FE EFC2 I19        BRA     I19
                                  ****************************************
01810                             *
01811                             *
01812                             *TEST
01813                             ORG     $F000
01814A F000                       NOP
01815A F000 01                    NOP
01816A F001 01                    NOP
01817A F002 01                    NOP
01818A F003 01                    NOP
01819A F004 01                    NOP
01820A F005 01                    NOP
01821A F006 01                    NOP
01822A F007 01                    NOP
01823A F008 01                    NOP
01824A F009 01                    NOP
01825A F00A 01                    NOP
01826A F00B 01                    NOP
01827A F00C 01                    RTS
01828A F00D 39                    RTS
01829A F00E 8E 00BF  A MAIN       LDS     #$00BF
01830A F011 86 08    A            LDAA    #$08
01831A F013 97 08    A            STAA    $08
01832A F015 BD E009  A            JSR     INTEL
01833A F018 7F 0082  A            CLR     $0082
01834A F01B 7E E100  A            JMP     START
01835A F100                       ORG     $F100
01836A F100 39                    RTS
01837A F101 01                    NOP
01838A F102 01                    NOP
01839A F103 39                    RTS
01840A F104 01                    NOP
01841A F105 01                    NOP
01842A F106 39                    RTS
01843A F107 3B            XX       RTI
01844A F108 BD E012  A NMI        JSR     RINGDT
01845A F10B 3B                    RTI
01846A F10C 96 08    A OCF        LDAA    $08
01847A F10E DC 0B    A            LDD     $0B
01848A F110 C3 1388  A            ADDD    #5000
01849A F113 DD 0B    A            STD     $0B
01850A F115 DE 80    A            LDX     $80
01851A F117 08                    INX
01852A F118 DF 80    A            STX     $80
01853A F11A 3B                    RTI
01854A FFF0                       ORG     $FFF0
01855A FFF0     F107  A           FDB     XX
01856A FFF2     F107  A           FDB     XX
01857A FFF4     F10C  A           FDB     OCF
01858A FFF6     F107  A           FDB     XX
01859A FFF8     F107  A           FDB     XX
01860A FFFA     F107  A           FDB     XX
01861A FFFC     F108  A           FDB     NMI
01862A FFFE     F00E  A           FDB     MAIN
01863                             ****************************
01864                             **
```

01865 **
01866 END
TOTAL ERRORS 00000--00000


```
E84B A1      00844 00849*
E9EA A10     00921*00923
E91F A11     00942*00945
E927 A11A    00925 00946*00950 00953
E934 A12     00913 00952*
E938 A12A    00951 00954*
E94A A13     00963*00965
E957 A14     00956 00969*
E966 A15     00948 00976*
E96E A16     00977 00980*
E97C A17     00981 00987*00998 01005 01008 01033
E981 A18     00982 00989*
E989 A19     00993*01035
E863 A2      00859*00884 00899 00909 00946 01006
E98D A20     00995*01013
E994 A21     00992 00999*
E9A2 A21A    00979 00985 00988 00990 00994 01006*01009 01014 01031 01(
E9A5 A21B    01003 01007*
E9AA A22     01000 01010*
E9B4 A23     01011 01015*
E9C0 A24     01016 01021*
E9CB A25     01025 01027*
E9D6 A26     01018 01032*
E866 A3      00860*00863
E86E A4      00863*00890 00885
E891 A5      00861 00877*
E89A A6      00878 00881*
E8A5 A7      00082 00886*
E8BA A7A     00897 00896*
E8C0 A8      00900*00904 00906
E8D4 A9      00895 00910*
E92A A9A     00911 00947*
ECC5 AC1     01422*01426
ECD6 AC2     01430*01432
ECDA AC3     01433*01436
ECBD ACLR    00086 00196 00216 01419*
E940 ALARM   00223 00845*
ED95 BC1     01533*01537
ED9E BC2     01532 01538*
EDA1 BC3     01534 01539*
EDAA BC4     01541 01543*
ED90 BCD     00274 00531 01502 01530*
EDB6 BN1     01549 01551*
EDB9 BN2     01550 01552*
EDBB BN3     01553*01557
EDC3 BN4     01554 01558*
EDAD BNL     00642 01546*
E880 CB1     00868 00870*
E88E CB2     00872 00874 00876*
E870 CBAK    00322 00420 00461 00507 00552 00671 00731 00864*00887 00(
             00968 00975
```

```
ED7B CC1       01517*01520
ED7S CCLR      00076 00091 00137 00169 00184 00227 00260 00341 00401 004
               00517 00571 00599 00664 00842 00847 00864 01516*
EBFB CDSP      00866 01325*
E70F D1        00711*00714
E79B D10       00767 00770*
E7AC D11       00773*00777
E7BC D12       00771 00781*
E7B6 D13       00783*00785
E7CA D14       00792*00793
E7D6 D15       00738 00797*
E7E4 D16       00802 00804*
E7FE D16A      00813 00815*
E811 D17       00824*00829 00834 00839
E819 D18       00806 00827*00833
E829 D19       00821 00835*
E721 D2        00719*00734 00740 00761 00826
E72C D3        00723*00765 00769
E73D D5        00725 00730*
E743 D6        00723 00732*00775 00780 00782 00796
E753 D6A       00737 00739*
E765 D7        00746*00749
E789 D8        00721 00762*
E792 D9        00763 00766*
E6F4 DIAL      00138 00217 00255 00700 00701*00875
E706 DIAL2     00231 00708*
EC16 DL1       01337 01339*01342
EC13 DLY1      00314 00315 00707 01338*01506 01667
EC0E DLY2      00058 00304 00499 01336*01390 01396 01412 01665
EBE8 DS1       00816 01315*01320
EBF5 DS2       01310 01316 01321*01327
EBE0 DSP       00128 03185 00279 00311 00336 00409 00456 00481 00547 006
               00696 00859 00965 01312*01513 01664 01670
E54D F1        00516*00564 00574
E5BD F10       00559 00562*
E5C0 F11       00561 00563*00616
E5D8 F11A      00570 00574*
E5DB F12       00549 00575*
E5E4 F13       00576 00579*
E5EF F14       00580 00584*
E618 F15       00589 00602*
E62D F15A      00609 00612*
E62F F15B      00611 00613*
E633 F16       00615*00625
E638 F17       00603 00617*
E643 F17A      00620 00622*
E64A F18       00618 00626*
E65D F19       00627 00634*
E66A F19A      00640*00651 00653
E673 F19B      00637 00644*
E67B F19C      00645 00648*
E550 F1A       00517*00659
E558 F2        00520*00573
E686 F20       00647 00654*
E69D F20A      00655 00657*
E691 F20B      00629 00633 00635 00643 00659*
E55F F3        00523*00526
```

0194387

```
E587 F3A     00537 00539*
E59A F4      00540*00546
E592 F5      00541 00544*
E598 F5A     00547*00582
E59B F6      00548*00554 00556
E5A3 F7      00551*00578 00583
E5A5 F8      00552*00585 00587 00601
E5A8 F9      00551 00553*00591 00656
E543 F0G     00243 00512*
F00C FORGET  00006*00168 00321 00596 01715
EB99 H45     00044 00046 00048 00055 00057 00067 00081 00059 00134 001
             00127 00257 00303 00306 00313 00386 00432 00439 00498 005
             00515 00599 00663 00702 00704 00706 00742 00767 00795 008
             00809 00823 00858 01274*01276 01301 01306 01313 01317 013
             01326 01389 01395 01411 01727 01729 01731 01733 01752 017
             01808
EBAA H451    01285*01287
EBB5 H452    01290*01292
EBBD H453    01294*01296
ECB6 H01     01406 01414*
ECB7 H02     01404 01415*
EC98 HOOKX   00131 00192 00319 00339 00423 00459 00505 00550 00669 007
             00862 00873 01368 01371 01400*
EE94 I0      00009 01673*
EE95 I1      01674*
EF4E I10     01758*01759
EF66 I11     01766 01769*
EF5C I11A    01762 01765*
EF70 I12     01770 01773*
EF7B I13     01778*01787 01791 01795
EF7C I14     01779*01797
EF80 I15     01781*01782
EF98 I16     01789 01792*
EF8E I16A    01785 01788*
EFA2 I17     01793 01796*
EFAA I18     01780 01799*
EFC2 I19     01809*01809
EEB0 I3      01685*01692 01695
EEBA I4      01684 01689*
EEC4 I4A     01690 01694*
EECA I5      01697*01700
EED5 I6      01702*01705
EEFB I7      01687 01720*
EF3B I7A     01741 01744 01747 01749*
EF3E I8      01693 01751*
EF4C I9      01757*01764 01769 01772 01774
F000 INITRN  00002*00288 00394 00491
F006 INREC   00004*01257
EB4E INRECX  00053 00181 00267 00335 00394 00455 00483 00513 00661 007
             00641 00846 01233*01682
E009 INTEL   00009*01832
EB56 IRX1    01234 01237*
EB5A IRX2    01236 01239*
EB62 IRX3    01240 01243*
EB6C IRX4    01238 01242 01248*
E9F4 K0      01047 01049*
EA0F K1      01059 01062*
```

**0194387**

```
EA82 K10      01118 01120*
EA84 K11      01094 01104 01106 01112 01114 01121*
EA86 K12      01122*01151
EA92 K13      01127*01129
EA98 K14      01131*01141
EAB0 K15      01143*01145
EAB9 K16      01137 01148*
EAC3 K17      01048 01153*
EACB K18      01158*01185
EAD0 K18A     01157 01161*
EADF K18B     01169 01171*
EAE5 K19      01172 01175*
EA11 K2       01061 01063*
EAED K20      01177 01180*
EAF4 K21      01181 01184*
EAF9 K22      01174 01179 01183 01187*01190
EB00 K22A     01188 01191*
EB12 K23      01197 01200*
EB1B K24      01160 01205*
EB22 K25      01199 01206 01209*
EA17 K3       01064 01066*
EB38 K30      01217 01220*
EB40 K31      01221 01224*
EB47 K32      01225 01228*
EB49 K33      01219 01223 01227 01229*
EB4D K34      01210 01213 01215 01231*
EA1D K4       01067 01069*
EA23 K5       01070 01072*
EA3F K6       01085 01087*
EA41 K7       01073 01076 01080 01088*
EA64 K8       01100 01105*
EA74 K9       01108 01113*
E015 KDATA    00012*01191
E9DF KEY      00129 00190 00317 00337 00421 00457 00503 00548 00667 00?
              00860 01040*01364 01683 -
E9EA KMDO     01041 01044 01045*01056 01090 01152
E2F3 L1       00259*00265
E3AF L10      00337*00340 00360 00369 00375 00378
E3B7 L11      00340*00347 00352 00354 00356
E3C1 L12      00338 00344*
E3CA L13      00345 00348*
E3D5 L14      00349 00353*
E3EB L15      00358 00363*
E3F3 L15A     00364 00367*
E403 L16      00366 00374*
E34D L2       00295 00297*00307 00320 00324
E366 L3       00262 00303*
E37E L4       00299 00317*
E386 L5       00320*00326
E38B L6       00316 00322*00362
E38E L7       00318 00323*
E397 L8       00301 00327*
E3AC L9       00336*00351 00373 00382
E368 LBAK     00321*00343
EDCF LD1      01565*01567
EDD5 LD2      00252 01569*01581
EDDC LD3      01572*01576
```

**0194387**

```
EDEE LD4      01563 01574 01582*
EDC6 LDM      00077 00263 00538 00938 01507 01561*
E2EB LEARN    00246 00256*
E12C M0       00062*00179
E15E M1       00071 00084*
E1E6 M10      00140 00143*
E1F3 M11      _00144 00149*
E1FE M12      00153 00155*
E209 M13      00150 00161*
E232 M13A     00132 00160 00162 00179*
E21D M13B     00170*00172
E168 M2       00069 00087 00088*
E170 M3       00073 00091*
E184 M3A      00093 00100*
E191 M4       00104 00106*
E19A M5       00109 00111*
E1BB M6       00083 00126*
E1BE M6A      00099 00127*
E1C4 M7       00085 00129*
E1CC M8       00132*00142 00146 00148
E1DD M9       00130 00139*
EE15 MAD      01561 01586 01605*
EE20 MAD1     01607 01611*
EE24 MAD2     01610 01613*
EE2B MAD3     01614 01617*
EE32 MAD4     01618 01621*
F00E MAIN     01829*01862
E115 MDO      00052*00197 00876
E241 MI0      00183 00185*
E24E MI1      00190*00199 00201 00215 00249
E294 MI10     00220*00226
E297 MI11     00219 00221*
E29E MI12     00222 00224*
E2B1 MI13     00224 00232*
E2B8 MI14     00233 00235*
E2BF MI15     00236 00238*
E2C6 MI16     00239 00241*
E2CD MI17     00242 00244*
E2D4 MI18     00245 00247*
E2D8 MI18A    00249*00254
E2DB MI19     00248 00250*
E256 MI2      00193*00206 00211
E258 MI2A     00194*00202
E25F MI3      00195 00197*
E262 MI4      00193 00198*
E26D MI5      00191 00203*
E271 MI6      00205*
E276 MI7      00204 00207*
E281 MI8      00208 00212*
E290 MI9      00213 00218*
E235 MINA     00136 00180*00210 00869
ED87 NC1      01524*01527
ED84 NCLR     01523*
F108 NMI      01844*01861
ED43 NS1      01491*01493
ED4E NS2      01489 01497*
ED69 NS3      01496 01508*
```

```
ED6C NS4      01509*01511
ED77 NS5      01487 01498 01514*
ED37 NSET     00666 00987 01486*
F10C OCF      01846*01857
EE4E OK        00261 00536 00590 00628 01637*
EE55 OK1      01638 01641*
EE6B OK2      01644 01647 01650 01652*
EE36 OLDA     00250 00728 01624*
EE4D OLDA1    01627 01630 01633 01635*
EC8B ON3      01387 01394*
EC79 ONX      00141 00205 00325 00346 00429 00464 00510 00577 00674 007
              00879 01377 01386*
E6A3 OT1      00666*00699
E6A6 OT2      00667*00670 00681 00697
E6AE OT3      00670*00675 00679
E6B0 OT4      00671*00683 00685 00694
E6B3 OT5      00668 00672*
E6BC OT6      00673 00676*
E6CA OT7      00677 00682*
E6DA OT7A     00687 00690*
E6ED OT8      00689 00698*
E694 OTEL     00220 00660*
EC3B PH1      01356*01369 01372 01374
EC40 PH2      01360*01379
EC49 PH3      01359 01364*
EC58 PH3A     01367 01371*
EC62 PH4      01365 01376*
EC1C PHONEX   00145 00209 00350 00468 00581 00678 00768 00883 01345*
E49B RE1      00437 00441*
E535 RE10     00506*00511
E53A RE11     00504 00508*
E49E RE1A     00442*00476 00496
E4C3 RE1B     00456*00469
E4C6 RE2      00457*00460 00478
E4CE RE3      00460*00465 00470
E4D0 RE4      00440 00444 00461*00472 00474
E4D3 RE5      00459 00462*
E4DC RE6      00463 00466*
E4E7 RE7      00467 00471*
E514 RE8      00492*00502 00506 00509
E52D RE9      00494 00503*
F009 REC      00005*01211
E485 RETRN    00234 00431*
ED24 RG1      00011 01476*
ED36 RG2      01478 01484*
E012 RINGDT   00011*01944
EE70 SD1      01657*01666
EE38 SD2      01659 01662 01667*
EE6B SDSP     00632 00939 01655*
EDFB ST1      01589*01591
EDFF ST2      00729 01592*01602
EE14 ST3      01595 01603*
E100 START    00009 00042*01834
E006 STARTX   00008*
EDEF STM      00170 00342 00361 00600 00967 01584*
EB98 TC1      01264 01270 01272*
EB62 TCNT     01075 01079 01089 01093 01260*
```

0194387

```
E833 TIME    00240 00840*
E43C TR0     00400*00414
E434 TR1     00395*
E43B TR2     00397 00399*
E458 TR3     00410*00424 00428
E464 TR4     00416*00426
E46F TR5 .   00412 00421*
E477 TR6   - 00424*00430
E47C TR7     00422 00427*
E418 TRAIN   00237 00383*
F003 TRN     00003*00297 00410 00492
ED0C TSUB    00966 00974 01464*
EC05 WC1     01330*01333
EC02 WCLR    01329*01348 01501 01799
EBCF WD1     01303*01309
EBD5 WD2     01304 01306*
EC2B WDATA   00018*01444
EBC7 WDSP    00760 01300*01355 01385 01505 01806
ECE4 WS1     01440*01442
ECF0 WS2     01446*01449
ECF6 WS3     01447 01450*
ECF8 WS4     01451*01461
ED0B WS5     01457 01462*
ECE1 WSET    00095 00097 00273 00309 00333 00407 00452 00528 00855 014
F107 XX      01843*01855 01856 01858 01859 01860
```

# APPENDIX II

0194387

| ST-NO | OBJECT | ADRS | SOURCE | STATEMENTS | |
|---|---|---|---|---|---|
| 00001 | | | | TITLE | PLS-03-20 |
| 00002 | | | * | START | 85-02-18 |
| 00003 | | | | ORG | 00-3F |
| *00004 | 0FF | 000-3F | TINT | XAMR | 15 |
| 00005 | 072 | 000-3E | | LAI | 4 |
| 00006 | 1F7 | 000-3D | | BR | T1 |
| 00007 | 070 | 000-3B | | LAI | 0 |
| 00008 | 341 1FF | 000-37 | T1 | BRL | T2 |
| 00009 | 278 | 000-1E | DST | ALEI | 1 |
| 00010 | 1D8 | 000-3C | | BR | DST3 |
| 00011 | 087 | 000-39 | | AI | 14 |
| 00012 | 15F | 000-33 | DST1 | LYI | 15 |
| 00013 | 144 | 000-27 | DST2 | LXI | 2 |
| 00014 | 208 | 000-0E | | XMA | |
| 00015 | 14C | 000-1D | | LXI | 3 |
| 00016 | 220 | 000-3A | | XMB | |
| 00017 | 254 | 000-35 | | DY | |
| 00018 | 28C | 000-2B | | YNEI | 3 |
| 00019 | 1E7 | 000-16 | | BR | DST2 |
| 00020 | 3A7 | 000-2C | | RTN | |
| 00021 | 070 | 000-18 | DST3 | LAI | 0 |
| 00022 | 1F3 | 000-30 | | BR | DST1 |
| 00023 | 152 | 000-21 | DBD | LYI | 4 |
| 00024 | 144 | 000-02 | DB1 | LXI | 2 |
| 00025 | 008 | 000-05 | | LAM | |
| 00026 | 14C | 000-0B | | LXI | 3 |
| 00027 | 020 | 000-17 | | LBM | |
| 00028 | 148 | 000-2E | | LXI | 1 |
| 00029 | 220 | 000-1C | | XMB | |
| 00030 | 140 | 000-38 | | LXI | 0 |
| 00031 | 110 | 000-31 | | LMAIY | |
| 00032 | 1C2 | 000-23 | | BR | DB1 |
| 00033 | 3A7 | 000-06 | | RTN | |
| 00034 | 07C | 000-0D | DLY1 | LAI | 3 |
| 00035 | 141 | 000-1B | DLY2 | LXI | 8 |
| 00036 | 150 | 000-36 | | LYI | 0 |
| 00037 | 208 | 000-2D | | XMA | |
| 00038 | 008 | 000-1A | DL2 | LAM | |
| 00039 | 270 | 000-34 | | ALEI | 0 |
| 00040 | 1E4 | 000-29 | | BR | DL3 |
| 00041 | 1DA | 000-12 | | BR | DL2 |
| 00042 | 3A7 | 000-24 | DL3 | RTN | |
| 00043 | 073 | 000-08 | RCL | LAI | 12 |
| 00044 | 150 | 000-11 | | LYI | 0 |
| 00045 | 040 | 000-22 | RC1 | LXA | |
| 00046 | 010 | 000-04 | RC2 | LMIIY | 0 |
| 00047 | 1C4 | 000-09 | | BR | RC2 |
| 00048 | 08F | 000-13 | | AI | 15 |
| 00049 | 1E2 | 000-26 | | BR | RC1 |
| 00050 | 3A7 | 000-0C | | RTN | |
| 00051 | 141 | 000-19 | PI | LXI | 8 |
| 00052 | 15A | 000-32 | | LYI | 5 |
| 00053 | 010 | 000-25 | | LMIIY | 0 |
| 00054 | 01C | 000-0A | | LMIIY | 3 |
| 00055 | 01F | 000-15 | | LMIIY | 15 |

| ST-NO | OBJL | ADRS | | SOURCE | STATEM. TS | |
|-------|------|------|------|--------|------------|---|
| 00056 | 349 3FF | 000-2A | | | CALL | OTO **0194387** |
| 00057 | 15A | 000-28 | | | LYI | 5 |
| 00058 | 01E | 000-10 | | | LMIIY | 7 |
| 00059 | 014 | 000-20 | | | LMIIY | 2 |
| 00060 | 010 | 000-00 | | | LMIIY | 0 |
| 00061 | 349 3FF | 000-01 | | | CALL | OTO |
| 00062 | 3A7 | 000-07 | | | RTN | |

PAGE NUMBER 000 CONTAINS 062 ROM WORDS

| ST-NO | OBJL | ADRS | LABEL | SOURCE STATEM. | |
|-------|------|------|-------|----------------|---|
| 00063 | | | | ORG | 01-3F |
| *00064 | 225 | 001-3F | T2 | ROTL | |
| 00065 | 0FB | 001-3E | | XAMR | 11 |
| 00066 | 260 | 001-3D | | LAB | |
| 00067 | 0FE | 001-3B | | XAMR | 14 |
| 00068 | 118 | 001-37 | | LAY | |
| 00069 | 0FC | 001-2F | | XAMR | 12 |
| 00070 | 001 | 001-1E | | XSPX | |
| 00071 | 240 | 001-3C | | LASPX | |
| 00072 | 0FD | 001-39 | | XAMR | 13 |
| 00073 | 001 | 001-33 | | XSPX | |
| 00074 | 141 | 001-27 | | LXI | 8 |
| 00075 | 151 | 001-0E | | LYI | 8 |
| 00076 | 200 | 001-1D | | TM | 0 |
| 00077 | 1E3 | 001-3A | | BR | T5 |
| 00078 | 346 3FF | 001-35 | | CALL | DSP |
| 00079 | 17F | 001-16 | T3 | LTI | 15 |
| 00080 | 286 | 001-2C | | YNEI | 6 |
| 00081 | 1CA | 001-18 | | BR | T11 |
| 00082 | 141 | 001-30 | | LXI | 8 |
| 00083 | 150 | 001-21 | | LYI | 0 |
| 00084 | 008 | 001-02 | | LAM | |
| 00085 | 270 | 001-05 | | ALEI | 0 |
| 00086 | 1EE | 001-0B | | BR | T4 |
| 00087 | 08F | 001-17 | | AI | 15 |
| 00088 | 110 | 001-2E | T4 | LMAIY | |
| 00089 | 200 | 001-1C | | TM | 0 |
| 00090 | 1D1 | 001-38 | | BR | T9 |
| 00091 | 1CA | 001-31 | | BR | T11 |
| 00092 | 0F1 | 001-23 | T5 | XAMR | 1 |
| 00093 | 050 | 001-06 | | LYA | |
| 00094 | 290 | 001-0D | | RED | |
| 00095 | 088 | 001-1B | | AI | 1 |
| 00096 | 1DA | 001-36 | | BR | T6 |
| 00097 | 1F4 | 001-2D | | BR | T7 |
| 00098 | 076 | 001-1A | T6 | LAI | 6 |
| 00099 | 0F1 | 001-34 | T7 | XAMR | 1 |
| 00100 | 071 | 001-29 | | LAI | 8 |
| 00101 | 08F | 001-12 | T8 | AI | 15 |
| 00102 | 1D2 | 001-24 | | BR | T8 |
| 00103 | 1D6 | 001-08 | | BR | T3 |
| 00104 | 154 | 001-11 | T9 | LYI | 2 |
| 00105 | 008 | 001-22 | T10 | LAM | |
| 00106 | 08F | 001-04 | | AI | 15 |
| 00107 | 208 | 001-09 | | XMA | |
| 00108 | 1CA | 001-13 | | BR | T11 |

**0194387**

| ST-NO | OBJE. | ADRS | SOURCE | STATEMENTS | |
|-------|-------|------|--------|------------|---|
| 00109 | 054 | 001-26 | | IY | |
| 00110 | 282 | 001-0C | | YNEI | 4 |
| 00111 | 1E2 | 001-19 | | BR | T10 |
| 00112 | 158 | 001-32 | | LYI | 1 |
| 00113 | 014 | 001-25 | | LMIIY | 2 |
| 00114 | 0FC | 001-0A | T11 | XAMR | 12 |
| 00115 | 050 | 001-15 | | LYA | |
| 00116 | 0FD | 001-2A | | XAMR | 13 |
| 00117 | 040 | 001-14 | | LXA | |
| 00118 | 0FB | 001-28 | | XAMR | 11 |
| 00119 | 081 | 001-10 | | AI | 8 |
| 00120 | 224 | 001-20 | | ROTR | |
| 00121 | 0FE | 001-00 | | XAMR | 14 |
| 00122 | 060 | 001-01 | | LBA | |
| 00123 | 0FF | 001-03 | | XAMR | 15 |
| 00124 | 2A5 | 001-07 | | RETF | |
| 00125 | 3A4 | 001-0F | | RTNI | |

PAGE NUMBER 001 CONTAINS 063 ROM WORDS

| ST-NO | OBJE. | | ADRS | SOURCE | STATEMENTS | |
|-------|-------|---|------|--------|------------|---|
| 00126 | | | | | ORG | 02-3F |
| +00127 | 0E0 | | 002-3F | M9 | LBR | 0 |
| 00128 | 0D3 | | 002-3E | | SEDD | 3 |
| 00129 | 342 | 3E2 | 002-3D | | CALL | TDLY |
| 00130 | 1E3 | | 002-37 | | BR | MD1 |
| 00131 | 0F0 | | 002-2F | | XAMR | 0 |
| 00132 | 278 | | 002-1E | | ALEI | 1 |
| 00133 | 1D2 | | 002-3C | | BR | D1 |
| 00134 | 272 | | 002-39 | | ALEI | 4 |
| 00135 | 1F6 | | 002-33 | | BR | M11 |
| 00136 | 27A | | 002-27 | | ALEI | 5 |
| 00137 | 343 | 1FF | 002-0E | | BRL | C5F |
| 00138 | 276 | | 002-3A | | ALEI | 6 |
| 00139 | 156 | | 002-35 | | LYI | 6 |
| 00140 | 1F4 | | 002-2B | | BR | M13 |
| 00141 | 27E | | 002-16 | | ALEI | 7 |
| 00142 | 1DA | | 002-2C | | BR | M12 |
| 00143 | 271 | | 002-18 | | ALEI | 8 |
| 00144 | 1CB | | 002-30 | | BR | M10A |
| 00145 | 279 | | 002-21 | | ALEI | 9 |
| 00146 | 1CD | | 002-02 | | BR | M10B |
| 00147 | 1E3 | | 002-05 | | BR | MD1 |
| 00148 | 15E | | 002-0B | M10A | LYI | 7 |
| 00149 | 220 | | 002-17 | | XMB | |
| 00150 | 2A4 | | 002-2E | | REIE | |
| 00151 | 349 | 3FF | 002-1C | | CALL | OTD |
| 00152 | 0A4 | | 002-31 | | SEIE | |
| 00153 | 35F | 1DC | 002-23 | MD1 | BRL | MD0 |
| 00154 | 2E1 | | 002-0D | M10B | LRB | 1 |
| 00155 | 1E3 | | 002-1B | | BR | MD1 |
| 00156 | 3DE | | 002-36 | M11 | CAL | DST |
| 00157 | 1E3 | | 002-2D | | BR | MD1 |
| 00158 | 15A | | 002-1A | M12 | LYI | 5 |
| 00159 | 220 | | 002-34 | M13 | XMB | |
| 00160 | 1E3 | | 002-29 | | BR | MD1 |
| 00161 | 1A3 | | 002-12 | D1 | TI0 | |

**0194387**

| ST-NO | OBJECT | ADRS | | SOURCE | STATEMENTS | |
|---|---|---|---|---|---|---|
| 00162 | 345 1FF | 002-24 | | BRL | D3 | |
| 00163 | 1D2 | 002-11 | | BR | D1 | |
| 00164 | 070 | 002-22 | TDLY | LAI | 0 | |
| 00165 | 150 | 002-04 | | LYI | 0 | |
| 00166 | 054 | 002-09 | TDL1 | IY | | |
| 00167 | 1F2 | 002-13 | | BR | TDL2 | |
| 00168 | 088 | 002-26 | | AI | 1 | |
| 00169 | 1D5 | 002-0C | | BR | TDL3 | |
| 00170 | 1C9 | 002-19 | | BR | TDL1 | |
| 00171 | 1A1 | 002-32 | TDL2 | TI1 | | |
| 00172 | 1C9 | 002-25 | | BR | TDL1 | |
| 00173 | 080 | 002-0A | | AI | 0 | |
| 00174 | 3A7 | 002-15 | TDL3 | RTN | | |

PAGE NUMBER 002 CONTAINS 053 ROM WORDS

| ST-NO | OBJECT | ADRS | | SOURCE | STATEMENTS | |
|---|---|---|---|---|---|---|
| 00175 | | | | ORG | 03-3F | |
| *00176 | 260 | 003-3F | C5F | LAB | | |
| 00177 | 277 | 003-3E | | ALEI | 14 | |
| 00178 | 1EF | 003-3D | | BR | C5E | |
| 00179 | 347 1FF | 003-3B | | BRL | CF0 | |
| 00180 | 27B | 003-2F | C5E | ALEI | 13 | |
| 00181 | 1DD | 003-1E | | BR | C5D | |
| 00182 | 2A4 | 003-3C | | REIE | | |
| 00183 | 3D9 | 003-39 | C5E1 | CAL | PI | |
| 00184 | 0A4 | 003-33 | | SEIE | | |
| 00185 | 35F 1DC | 003-27 | MD2 | BRL | MD0 | |
| 00186 | 273 | 003-1D | C5D | ALEI | 12 | |
| 00187 | 1EC | 003-3A | | BR | C5C | |
| 00188 | 2A4 | 003-35 | C5D0 | REIE | | |
| 00189 | 3D9 | 003-2B | C5D1 | CAL | PI | |
| 00190 | 1F9 | 003-16 | | BR | C5E1 | |
| 00191 | 27D | 003-2C | C5C | ALEI | 11 | |
| 00192 | 1F1 | 003-18 | | BR | C5B | |
| 00193 | 2A4 | 003-30 | | REIE | | |
| 00194 | 3D9 | 003-21 | | CAL | PI | |
| 00195 | 3D9 | 003-02 | | CAL | PI | |
| 00196 | 3D9 | 003-05 | | CAL | PI | |
| 00197 | 3D9 | 003-0B | | CAL | PI | |
| 00198 | 3D9 | 003-17 | | CAL | PI | |
| 00199 | 3D9 | 003-2E | | CAL | PI | |
| 00200 | 3D9 | 003-1C | | CAL | PI | |
| 00201 | 1EB | 003-38 | | BR | C5D1 | |
| 00202 | 275 | 003-31 | C5B | ALEI | 10 | |
| 00203 | 344 1FF | 003-23 | | BRL | C5A | |
| 00204 | 158 | 003-0D | | LYI | 1 | |
| 00205 | 210 | 003-1B | | MNEI | 0 | |
| 00206 | 1E7 | 003-36 | | BR | MD2 | |
| 00207 | 01B | 003-2D | | LMIIY | 1 | |
| 00208 | 01F | 003-1A | | LMIIY | 15 | |
| 00209 | 01F | 003-34 | | LMIIY | 15 | |
| 00210 | 1E7 | 003-29 | | BR | MD2 | |

PAGE NUMBER 003 CONTAINS 038 ROM WORDS

| ST-NO | OBJECT | ADRS | | SOURCE | STATEMENTS | |
|---|---|---|---|---|---|---|
| 00211 | | | | ORG | 04-3F | |
| *00212 | 279 | 004-3F | C5A | ALEI | 9 | |

| ST-NO | OBJECT | ADRS | SOURCE | STATEMENTS | |
|-------|--------|------|--------|------------|---|

**0194387**

```
00213   1EF        004-3E            BR      C59
00214   2D2        004-3D            REDD    2
00215   35F  1DC   004-3B   MD3      BRL     MD0
00216   271        004-2F   C59      ALEI    8
00217   1F3        004-1E            BR      C59
00218   0D2        004-3C            SEDD    2
00219   1FB        004-39            BR      MD3
00220   27E        004-33   C58      ALEI    7
00221   1F4        004-27            BR      C57
00222   2D0        004-0E            REDD    0
00223   1FB        004-1D            BR      MD3
00224   276        004-3A   C57      ALEI    6
00225   1EC        004-35            BR      C56
00226   0D0        004-23            SEDD    0
00227   1FB        004-16            BR      MD3
00228   27A        004-2C   C56      ALEI    5
00229   1C2        004-18            BR      C55
00230   0D1        004-30            SEDD    1
00231   1FB        004-21            BR      MD3
00232   272        004-02   C55      ALEI    4
00233   1EE        004-05            BR      C54
00234   2D1        004-0B            REDD    1
00235   1FB        004-17            BR      MD3
00236   27C        004-2E   C54      ALEI    3
00237   1C6        004-1C            BR      C53
00238   344  3CC   004-38            CALL    C30
00239   1FB        004-23            BR      MD3
00240   274        004-06   C53      ALEI    2
00241   1ED        004-0D            BR      C52
00242   3E1        004-1B            CAL     DBD
00243   1FB        004-36            BR      MD3
00244   278        004-2D   C52      ALEI    1
00245   1E4        004-1A            BR      C51
00246   151        004-34            LYI     8
00247   004        004-29            SEM     0
00248   1FB        004-12            BR      MD3
00249   270        004-24   C51      ALEI    0
00250   1C9        004-08            BR      C50
00251   151        004-11            LYI     8
00252   204        004-22            REM     0
00253   1FB        004-04            BR      MD3
00254   158        004-09   C50      LYI     1
00255   010        004-13            LMIIY   0
00256   1FB        004-26            BR      MD3
00257   144        004-0C   C30      LXI     2
00258   156        004-19            LYI     6
00259   01C        004-32   C301     LMIIY   3
00260   1F2        004-25            BR      C301
00261   14C        004-0A            LXI     3
00262   156        004-15            LYI     6
00263   010        004-24   C302     LMIIY   0
00264   1EA        004-14            BR      C302
00265   3A7        004-28            RTN
```

PAGE NUMBER 004 CONTAINS 056 ROM WORDS

| | | | | | | |
|---|---|---|---|---|---|---|
| 00266 | | | | | ORG | 05-3F |
| *00267 | 260 | 005-3F | D3 | | LAB | |
| 00268 | 27D | 005-3E | | | ALEI | 11 |
| 00269 | 1EF | 005-3D | | | BR | D4 |
| 00270 | 273 | 005-3B | | | ALEI | 12 |
| 00271 | 1FA | 005-37 | | | BR | D6 |
| 00272 | 160 | 005-2F | D4 | | LBI | 0 |
| 00273 | 36F | 005-1E | | | P | 7 |
| 00274 | 3CD | 005-3C | | | CAL | DLY1 |
| 00275 | 07F | 005-39 | | | LAI | 15 |
| 00276 | 2C2 | 005-33 | | | LRA | 2 |
| 00277 | 2C3 | 005-27 | | | LRA | 3 |
| 00278 | 35F 1CC | 005-0E | D5 | | BRL | MDO |
| 00279 | 16F | 005-3A | D6 | | LBI | 15 |
| 00280 | 071 | 005-35 | D7 | | LAI | 9 |
| 00281 | 3DB | 005-2B | | | CAL | DLY2 |
| 00282 | 267 | 005-16 | | | DB | |
| 00283 | 1F5 | 005-2C | | | BR | D7 |
| 00284 | 071 | 005-18 | D8 | | LAI | 8 |
| 00285 | 3DB | 005-30 | | | CAL | DLY2 |
| 00286 | 267 | 005-21 | | | DB | |
| 00287 | 1D8 | 005-02 | | | BR | D8 |
| 00288 | 1CE | 005-05 | | | BR | D5 |

PAGE NUMBER 005 CONTAINS 023 ROM WORDS

| | | | | | | |
|---|---|---|---|---|---|---|
| 00289 | | | | | ORG | 06-3F |
| *00290 | 0F1 | 006-3F | DSP | | XAMR | 1 |
| 00291 | 050 | 006-3E | | | LYA | |
| 00292 | 088 | 006-3D | | | AI | 1 |
| 00293 | 1EF | 006-3B | | | BR | DS1 |
| 00294 | 1DE | 006-37 | | | BR | DS2 |
| 00295 | 076 | 006-2F | DS1 | | LAI | 6 |
| 00296 | 148 | 006-1E | DS2 | | LXI | 1 |
| 00297 | 290 | 006-3C | | | RED | |
| 00298 | 050 | 006-39 | | | LYA | |
| 00299 | 0F1 | 006-33 | | | XAMR | 1 |
| 00300 | 008 | 006-27 | | | LAM | |
| 00301 | 140 | 006-0E | | | LXI | 0 |
| 00302 | 020 | 006-1D | | | LBM | |
| 00303 | 36A | 006-3A | | | P | 2 |
| 00304 | 2C4 | 006-35 | | | LRA | 4 |
| 00305 | 2E5 | 006-2B | | | LRB | 5 |
| 00306 | 008 | 006-16 | | | LAM | |
| 00307 | 082 | 006-2C | | | AI | 4 |
| 00308 | 060 | 006-18 | | | LBA | |
| 00309 | 148 | 006-30 | | | LXI | 1 |
| 00310 | 008 | 006-21 | | | LAM | |
| 00311 | 36A | 006-02 | | | P | 2 |
| 00312 | 2C6 | 006-05 | | | LRA | 6 |
| 00313 | 290 | 006-0B | | | SED | |
| 00314 | 3A7 | 006-17 | | | RTN | |

PAGE NUMBER 006 CONTAINS 025 ROM WORDS

| | | | | | | |
|---|---|---|---|---|---|---|
| 00315 | | | | | ORG | 07-3F |
| *00316 | 2A4 | 007-3F | CF0 | | REIE | |

| ST-NO | OBJECT | ADRS | SOURCE | STATEMENTS | |
|---|---|---|---|---|---|
| 00317 | 150 | | 007-3E | LYI | 0 |
| 00318 | 070 | | 007-3D | LAI | 0 |
| 00319 | 160 | | 007-3B | LBI | 0 |
| 00320 | 040 | | 007-37 | CF1 | LXA | |
| 00321 | 220 | | 007-2F | XMB | |
| 00322 | 020 | | 007-1E | LBM | |
| 00323 | 054 | | 007-3C | IY | |
| 00324 | 1E9 | | 007-39 | BR | CF3 |
| 00325 | 08B | | 007-33 | AI | 1 |
| 00326 | 271 | | 007-27 | ALEI | 8 |
| 00327 | 1E9 | | 007-0E | BR | CF3 |
| 00328 | 279 | | 007-1D | ALEI | 9 |
| 00329 | 073 | | 007-3A | LAI | 12 |
| C0330 | 1E9 | | 007-35 | BR | CF3 |
| 00331 | 070 | | 007-29 | LAI | 0 |
| 00332 | 160 | | 007-16 | LBI | 0 |
| 00333 | 040 | | 007-2C | CF2 | LXA | |
| 00334 | 324 | | 007-18 | BNEM | |
| 00335 | 348 | 1CB | 007-30 | BRL | CF9 |
| 00336 | 054 | | 007-02 | IY | |
| 00337 | 1C8 | | 007-05 | BR | CF4 |
| 00338 | 098 | | 007-0B | AI | 1 |
| 00339 | 271 | | 007-17 | ALEI | 8 |
| 00340 | 1C8 | | 007-2E | BR | CF4 |
| 00341 | 279 | | 007-1C | ALEI | 9 |
| 00342 | 073 | | 007-38 | LAI | 12 |
| 00343 | 1C8 | | 007-31 | BR | CF4 |
| 00344 | 3C8 | | 007-23 | CAL | RCL |
| 00345 | 076 | | 007-06 | LAI | 6 |
| 00346 | 0F1 | | 007-0D | XAMR | 1 |
| 00347 | 141 | | 007-1B | LXI | 8 |
| 00348 | 151 | | 007-36 | LYI | 8 |
| 00349 | 204 | | 007-2D | REM | 0 |
| 00350 | 348 | 1FF | 007-1A | BRL | CFN |
| 00351 | 064 | | 007-29 | CF3 | IB | |
| 00352 | 1F7 | | 007-12 | BR | CF1 |
| 00353 | 1E9 | | 007-24 | BR | CF3 |
| 00354 | 064 | | 007-08 | CF4 | IB | |
| 00355 | 1EC | | 007-11 | BR | CF2 |
| 00356 | 1C8 | | 007-22 | BR | CF4 |

PAGE NUMBER 007 CONTAINS 043 ROM WORDS

| 00357 | | | | ORG | 08-3F |
|---|---|---|---|---|---|
| *00358 | 344 | 3CC | 008-3F | CFN | CALL | C30 |
| 00359 | 3E1 | | 008-3D | CAL | DBD |
| 00360 | 0A4 | | 008-3B | SEIE | |
| 00361 | 148 | | 008-37 | CF6 | LXI | 1 |
| 00362 | 156 | | 008-2F | LYI | 6 |
| 00363 | 009 | | 008-1E | CF7 | LAM | |
| 00364 | 098 | | 008-3C | AI | 1 |
| 00365 | 273 | | 008-39 | ALEI | 12 |
| 00366 | 1E1 | | 008-33 | BR | CF8 |
| 00367 | 054 | | 008-27 | IY | |
| 00368 | 1DE | | 008-0E | BR | CF7 |
| 00369 | 2A4 | | 008-1D | REIE | |

```
00370   3D9        008-3A           CAL     PI
00371   344 3CC    008-35           CALL    C30
00372   3E1        008-16           CAL     DBD
00373   0A4        008-2C           SEIE
00374   35F 1DC    008-18           BRL     MDO
00375   208        008-21    CF8    XMA
00376   3CD        008-02           CAL     DLY1
00377   1F7        008-05           BR      CF6
00378   3C8        008-0B    CF9    CAL     RCL
00379   076        008-17           LAI     6
00380   0F1        008-2E           XAMR    1
00381   140        008-1C           LXI     0
00382   159        008-38           LYI     9
00383   018        008-31           LMIIY   1
00384   014        008-23           LMIIY   2
00385   014        008-06           LMIIY   2
00386   018        008-0D           LMIIY   1
00387   014        008-1B           LMIIY   2
00388   018        008-36           LMIIY   1
00389   010        008-2D           LMIIY   0
00390   148        008-1A           LXI     1
00391   159        008-34           LYI     9
00392   01A        008-29           LMIIY   5
00393   014        008-12           LMIIY   2
00394   014        008-24           LMIIY   2
00395   01F        008-08           LMIIY   15
00396   014        008-11           LMIIY   2
00397   010        008-22           LMIIY   0
00398   018        008-04           LMIIY   1
00399   141        008-09           LXI     8
00400   151        008-13           LYI     8
00401   004        008-26           SEM     0
00402   3D9        008-0C           CAL     PI
00403   3D9        008-19           CAL     PI
00404   0A4        008-32           SEIE
00405   1E5        008-25    CF10   BR      CF10
PAGE NUMBER 008 CONTAINS 051 ROM WORDS

00406                                ORG     09-3F
00407   141        009-3F    OTO    LXI     8
00408   15E        009-3E           LYI     7
00409   008        009-3D           LAM
00410   152        009-3B           LYI     4
00411   27D        009-37           ALEI    11
00412   1F3        009-2F           BR      OT3
00413   088        009-1E    OT1    AI      1
00414   1DA        009-3C    OT2    BR      OT12
00415   1DE        009-39           BR      OT1
00416   276        009-33    OT3    ALEI    6
00417   1D6        009-27           BR      OT6
00418   084        009-0E           AI      2
00419   088        009-1D    OT4    AI      1
00420   000        009-3A           NOP
00421   1FC        009-35    OT5    BR      OT2
00422   1DD        009-2B           BR      OT4
```

**0194387**

| ST-NO | OBJECT | | ADRS | SOURCE | STATEMENTS | |
|---|---|---|---|---|---|---|
| 00423 | 272 | | 009-16 | OT6 | ALEI | 4 |
| 00424 | 1D7 | | 009-2C | | BR | OT9 |
| 00425 | 082 | | 009-18 | | AI | 4 |
| 00426 | 088 | | 009-30 | OT7 | AI | 1 |
| 00427 | 000 | | 009-21 | | NOP | |
| 00428 | 000 | | 009-02 | | NOP | |
| 00429 | 1F5 | | 009-05 | | BR | OT5 |
| 00430 | 1F0 | | 009-0B | | BR | OT7 |
| 00431 | 270 | | 009-17 | OT8 | ALEI | 0 |
| 00432 | 1F6 | | 009-2E | | BR | OT11 |
| 00433 | 082 | | 009-1C | OT9 | AI | 4 |
| 00434 | 088 | | 009-38 | OT10 | AI | 1 |
| 00435 | 000 | | 009-31 | | NOP | |
| 00436 | 1DA | | 009-23 | | BR | OT12 |
| 00437 | 000 | | 009-06 | | NOP | |
| 00438 | 000 | | 009-0D | | NOP | |
| 00439 | 1F8 | | 009-1B | | BR | OT10 |
| 00440 | 004 | | 009-36 | OT11 | SEM | 0 |
| 00441 | 1DC | | 009-2D | | BR | OT9 |
| 00442 | 200 | | 009-1A | OT12 | TM | 0 |
| 00443 | 1C9 | | 009-34 | | BR | OT14 |
| 00444 | 004 | | 009-29 | | SEM | 0 |
| 00445 | 090 | | 009-12 | | SED | |
| 00446 | 07D | | 009-24 | | LAI | 11 |
| 00447 | 08F | | 009-08 | OT13 | AI | 15 |
| 00448 | 000 | | 009-11 | | NOP | |
| 00449 | 1C8 | | 009-22 | | BR | OT13 |
| 00450 | 1C0 | | 009-04 | | BR | OT15 |
| 00451 | 204 | | 009-09 | OT14 | REM | 0 |
| 00452 | 290 | | 009-13 | | RED | |
| 00453 | 346 | 3FF | 009-26 | | CALL | DSP |
| 00454 | 141 | | 009-19 | | LXI | 8 |
| 00455 | 15A | | 009-32 | | LYI | 5 |
| 00456 | 009 | | 009-25 | | LAM | |
| 00457 | 08F | | 009-0A | | AI | 15 |
| 00458 | 208 | | 009-15 | | XMA | |
| 00459 | 156 | | 009-2A | | LYI | 6 |
| 00460 | 008 | | 009-14 | | LAM | |
| 00461 | 1C3 | | 009-28 | | BR | OT16 |
| 00462 | 08F | | 009-10 | | AI | 15 |
| 00463 | 208 | | 009-20 | | XMA | |
| 00464 | 1FF | | 009-00 | OT15 | BR | OT0 |
| 00465 | 3A7 | | 009-01 | | RTN | |
| 00466 | 000 | | 009-03 | OT16 | NOP | |
| 00467 | 1C0 | | 009-07 | | BR | OT15 |

PAGE NUMBER 009 CONTAINS 062 ROM WORDS

| 00468 | | | | | ORG | 22-00 |
|---|---|---|---|---|---|---|
| 00469 | 13F | | 022-00 | | DC | 13F |
| 00470 | 180 | | 022-01 | | DC | 180 |
| 00471 | 15D | | 022-02 | | DC | 15D |
| 00472 | 14F | | 022-03 | | DC | 14F |
| 00473 | 166 | | 022-04 | | DC | 166 |
| 00474 | 16B | | 022-05 | | DC | 16B |
| 00475 | 17B | | 022-06 | | DC | 17B |

| ST-NO | OBJECT | ADRS | SOURCE | STATEMENTS |
|---|---|---|---|---|
| 00476 | 10E | 022-07 | DC | 10E |
| 00477 | 17F | 022-08 | DC | 17F |
| 00478 | 16F | 022-09 | DC | 16F |
| 00479 | 140 | 022-0A | DC | 140 |
| 00480 | 153 | 022-0B | DC | 153 |
| 00481 | 140 | 022-0C | DC | 140 |
| 00482 | 148 | 022-0D | DC | 148 |
| 00483 | 141 | 022-0E | DC | 141 |
| 00484 | 100 | 022-0F | DC | 100 |
| 00485 | 100 | 022-10 | DC | 100 |
| 00486 | 17E | 022-11 | DC | 17E |
| 00487 | 17B | 022-12 | DC | 17B |
| 00488 | 139 | 022-13 | DC | 139 |
| 00489 | 18F | 022-14 | DC | 18F |
| 00490 | 179 | 022-15 | DC | 179 |
| 00491 | 178 | 022-16 | DC | 178 |
| 00492 | 13B | 022-17 | DC | 13B |
| 00493 | 176 | 022-18 | DC | 176 |
| 00494 | 180 | 022-19 | DC | 180 |
| 00495 | 117 | 022-1A | DC | 117 |
| 00496 | 130 | 022-1B | DC | 130 |
| 00497 | 131 | 022-1C | DC | 131 |
| 00498 | 136 | 022-1D | DC | 136 |
| 00499 | 136 | 022-1E | DC | 136 |
| 00500 | 13F | 022-1F | DC | 13F |
| 00501 | 17C | 022-20 | DC | 17C |
| 00502 | 13F | 022-21 | DC | 13F |
| 00503 | 17C | 022-22 | DC | 17C |
| 00504 | 16B | 022-23 | DC | 16B |
| 00505 | 188 | 022-24 | DC | 188 |
| 00506 | 137 | 022-25 | DC | 137 |
| 00507 | 130 | 022-26 | DC | 130 |
| 00508 | 136 | 022-27 | DC | 136 |
| 00509 | 100 | 022-28 | DC | 100 |
| 00510 | 167 | 022-29 | DC | 167 |
| 00511 | 109 | 022-2A | DC | 109 |
| 00512 | 100 | 022-2B | DC | 100 |
| 00513 | 100 | 022-2C | DC | 100 |
| 00514 | 100 | 022-2D | DC | 100 |
| 00515 | 100 | 022-2E | DC | 100 |
| 00516 | 100 | 022-2F | DC | 100 |
| 00517 | 100 | 022-30 | DC | 100 |
| 00518 | 108 | 022-31 | DC | 108 |
| 00519 | 10C | 022-32 | DC | 10C |
| 00520 | 10E | 022-33 | DC | 10E |
| 00521 | 10F | 022-34 | DC | 10F |
| 00522 | 11F | 022-35 | DC | 11F |
| 00523 | 13F | 022-36 | DC | 13F |
| 00524 | 17F | 022-37 | DC | 17F |
| 00525 | 1FF | 022-38 | DC | 1FF |
| 00526 | 1FF | 022-39 | DC | 1FF |
| 00527 | 1FF | 022-3A | DC | 1FF |
| 00528 | 1FF | 022-3B | DC | 1FF |
| 00529 | 1FF | 022-3C | DC | 1FF |
| 00530 | 100 | 022-3D | DC | 100 |

| | | | | |
|---|---|---|---|---|
| 00531 | 100 | 022-3E | DC | 100 |
| 00532 | 100 | 022-3F | DC | 100 |

PAGE NUMBER 022 CONTAINS 064 ROM WORDS

| | | | | |
|---|---|---|---|---|
| 00533 | | | ORG | 23-00 |
| *00534 | 100 | 023-00 | DC | 100 |
| 00535 | 100 | 023-01 | DC | 100 |
| 00536 | 100 | 023-02 | DC | 100 |
| 00537 | 100 | 023-03 | DC | 100 |
| 00538 | 100 | 023-04 | DC | 100 |
| 00539 | 100 | 023-05 | DC | 100 |
| 00540 | 100 | 023-06 | DC | 100 |
| 00541 | 100 | 023-07 | DC | 100 |
| 00542 | 100 | 023-08 | DC | 100 |
| 00543 | 100 | 023-09 | DC | 100 |
| 00544 | 10F | 023-0A | DC | 10F |
| 00545 | 100 | 023-0B | DC | 100 |
| 00546 | 100 | 023-0C | DC | 100 |
| 00547 | 100 | 023-0D | DC | 100 |
| 00548 | 100 | 023-0E | DC | 100 |
| 00549 | 100 | 023-0F | DC | 100 |
| 00550 | 100 | 023-10 | DC | 100 |
| 00551 | 100 | 023-11 | DC | 100 |
| 00552 | 108 | 023-12 | DC | 108 |
| 00553 | 100 | 023-13 | DC | 100 |
| 00554 | 100 | 023-14 | DC | 100 |
| 00555 | 100 | 023-15 | DC | 100 |
| 00556 | 100 | 023-16 | DC | 100 |
| 00557 | 100 | 023-17 | DC | 100 |
| 00558 | 100 | 023-18 | DC. | 100 |
| 00559 | 100 | 023-19 | DC | 100 |
| 00560 | 100 | 023-1A | DC | 100 |
| 00561 | 10C | 023-1B | DC | 10C |
| 00562 | 100 | 023-1C | DC | 100 |
| 00563 | 109 | 023-1D | DC | 109 |
| 00564 | 105 | 023-1E | DC | 105 |
| 00565 | 100 | 023-1F | DC | 100 |
| 00566 | 100 | 023-20 | DC | 100 |
| 00567 | 104 | 023-21 | DC | 104 |
| 00568 | 104 | 023-22 | DC | 104 |
| 00569 | 100 | 023-23 | DC | 100 |
| 00570 | 100 | 023-24 | DC | 100 |
| 00571 | 100 | 023-25 | DC | 100 |
| 00572 | 10A | 023-26 | DC | 10A |
| 00573 | 106 | 023-27 | DC | 106 |
| 00574 | 10F | 023-28 | DC | 10F |
| 00575 | 100 | 023-29 | DC | 100 |
| 00576 | 10A | 023-2A | DC | 10A |
| 00577 | 100 | 023-2B | DC | 100 |
| 00578 | 100 | 023-2C | DC | 100 |
| 00579 | 100 | 023-2D | DC | 100 |
| 00580 | 100 | 023-2E | DC | 100 |
| 00581 | 100 | 023-2F | DC | 100 |
| 00582 | 100 | 023-30 | DC | 100 |
| 00583 | 100 | 023-31 | DC | 100 |

| ST-NO | OBJECT | ADRS | SOURCE | STATEMENTS | 019 387 |
|-------|--------|------|--------|------------|--------|
| 00584 | 100 | 023-32 | | DC | 100 |
| 00585 | 100 | 023-33 | | DC | 100 |
| 00586 | 100 | 023-34 | | DC | 100 |
| 00587 | 100 | 023-35 | | DC | 100 |
| 00588 | 100 | 023-36 | | DC | 100 |
| 00589 | 100 | 023-37 | | DC | 100 |
| 00590 | 100 | 023-38 | | DC | 100 |
| 00591 | 108 | 023-39 | | DC | 108 |
| 00592 | 10C | 023-3A | | DC | 10C |
| 00593 | 10E | 023-3B | | DC | 10E |
| 00594 | 10F | 023-3C | | DC | 10F |
| 00595 | 100 | 023-3D | | DC | 100 |
| 00596 | 100 | 023-3E | | DC | 100 |
| 00597 | 100 | 023-3F | | DC | 100 |

PAGE NUMBER 023 CONTAINS 064 ROM WORDS

| ST-NO | OBJECT | ADRS | SOURCE | STATEMENTS | |
|-------|--------|------|--------|------------|---|
| 00598 | | | | ORG | 31-3F |
| *00599 | 2A4 | 031-3F | RESET | REIE | |
| 00600 | 0D3 | 031-3E | | SEDD | 3 |
| 00601 | 3C8 | 031-3D | | CAL | RCL |
| 00602 | 344 3CC | 031-3B | | CALL | C30 |
| 00603 | 3E1 | 031-2F | | CAL | DBD |
| 00604 | 152 | 031-1E | | LYI | 4 |
| 00605 | 290 | 031-3C | R1 | RED | |
| 00606 | 054 | 031-39 | | IY | |
| 00607 | 1FC | 031-33 | | BR | R1 |
| 00608 | 0D0 | 031-27 | | SEDD | 0 |
| 00609 | 2D1 | 031-0E | | REDD | 1 |
| 00610 | 2D2 | 031-1D | | REDD | 2 |
| 00611 | 07F | 031-3A | | LAI | 15 |
| 00612 | 2C2 | 031-35 | | LRA | 2 |
| 00613 | 2C3 | 031-2B | | LRA | 3 |
| 00614 | 070 | 031-16 | | LAI | 0 |
| 00615 | 2C0 | 031-2C | | LRA | 0 |
| 00616 | 2C1 | 031-18 | | LRA | 1 |
| 00617 | 2C4 | 031-30 | | LRA | 4 |
| 00618 | 2C5 | 031-21 | | LRA | 5 |
| 00619 | 2C6 | 031-02 | | LRA | 6 |
| 00620 | 076 | 031-05 | | LAI | 6 |
| 00621 | 0F1 | 031-0B | | XAMR | 1 |
| 00622 | 0A4 | 031-17 | | SEIE | |
| 00623 | 2A5 | 031-2E | | RETF | |
| 00624 | 141 | 031-1C | MD0 | LXI | 8 |
| 00625 | 158 | 031-38 | | LYI | 1 |
| 00626 | 2D3 | 031-31 | | REDD | 3 |
| 00627 | 214 | 031-23 | | MNEI | 2 |
| 00628 | 1ED | 031-06 | | BR | M1 |
| 00629 | 01B | 031-0D | | LMIIY | 1 |
| 00630 | 343 1F5 | 031-1B | | BRL | C5D0 |
| 00631 | 1A1 | 031-2D | M1 | TI1 | |
| 00632 | 1E9 | 031-1A | | BR | M2 |
| 00633 | 1DC | 031-34 | | BR | MD0 |
| 00634 | 15A | 031-29 | M2 | LYI | 5 |
| 00635 | 094 | 031-12 | | TD | |
| 00636 | 1E5 | 031-24 | | BR | M6 |

```
00637   0C0       031-08  M3   LAR    0        0194387
00638   0F0       031-11       XAMR   0
00639   0D3       031-22       SEDD   3
00640   342 3E2   031-04       CALL   TDLY
00641   1DC       031-13       BR     MDO
00642   2D3       031-26       REDD   3
00643   1A1       031-0C  M5   TI1
00644   1E8       031-19       BR     M8
00645   1CG       031-32       BR     M5
00646   0D3       031-25  M6   SEDD   3
00647   342 3E2   031-0A       CALL   TDLY
00648   1DC       031-2A       BR     MDO
00649   1DC       031-14       BR     MDO
00650   15A       031-29  M8   LYI    5
00651   0B4       031-10       TD
00652   342 1FF   031-20       BRL    M9
00653   1C8       031-01       BR     M3
PAGE NUMBER 031 CONTAINS 060 ROM WORDS

00654                          ORG    61-00
00655   2ED       061-00       DC     2ED
00656   27B       061-01       DC     27B
00657   27D       061-02       DC     27D
00658   27E       061-03       DC     27E
00659   2BB       061-04       DC     2BB
00660   2BD       061-05       DC     2BD
00661   2BE       061-06       DC     2BE
00662   2DB       061-07       DC     2DB
00663   2DD       061-08       DC     2DD
00664   2DE       061-09       DC     2DE
00665   2EB       061-0A       DC     2EB
00666   2EE       061-0B       DC     2EE
00667   2F3       061-0C       DC     2F3
00668   2F6       061-0D       DC     2F6
00669   2FF       061-0E       DC     2FF
00670   200       061-0F       DC     200
PAGE NUMBER 061 CONTAINS 016 ROM WORDS

00671                          END

            TOTAL ERRORS 00000
```

0194387

| SYMBOL | ADRS | DEFINE | REFERENCE | | | |
|--------|------|--------|-----------|---|---|---|
| C30 | 004-0C | 00257 | 00238 | 00358 | 00371 | 00602 |
| C301 | 004-32 | 00259 | 00260 | | | |
| C302 | 004-2A | 00263 | 00264 | | | |
| C50 | 004-09 | 00254 | 00250 | | | |
| C51 | 004-24 | 00249 | 00245 | | | |
| C52 | 004-2D | 00244 | 00241 | | | |
| C53 | 004-06 | 00240 | 00237 | | | |
| C54 | 004-2E | 00236 | 00233 | | | |
| C55 | 004-02 | 00232 | 00229 | | | |
| C56 | 004-2C | 00228 | 00225 | | | |
| C57 | 004-3A | 00224 | 00221 | | | |
| C58 | 004-33 | 00220 | 00217 | | | |
| C59 | 004-2F | 00216 | 00213 | | | |
| C5A | 004-3F | 00212 | 00203 | | | |
| C5B | 003-31 | 00202 | 00192 | | | |
| C5C | 003-2C | 00191 | 00187 | | | |
| C5D | 003-1D | 00186 | 00181 | | | |
| C5D0 | 003-35 | 00188 | 00630 | | | |
| C5D1 | 003-2B | 00189 | 00201 | | | |
| C5E | 003-2F | 00180 | 00178 | | | |
| C5E1 | 003-39 | 00183 | 00190 | | | |
| C5F | 003-3F | 00176 | 00137 | | | |
| CF0 | 007-3F | 00316 | 00179 | | | |
| CF1 | 007-37 | 00320 | 00352 | | | |
| CF10 | 008-25 | 00405 | 00405 | | | |
| CF2 | 007-2C | 00333 | 00355 | | | |
| CF3 | 007-29 | 00351 | 00324 | 00327 | 00330 | 00353 |
| CF4 | 007-08 | 00354 | 00337 | 00340 | 00343 | 00356 |
| CF6 | 008-37 | 00361 | 00377 | | | |
| CF7 | 008-1E | 00363 | 00368 | | | |
| CF8 | 008-21 | 00375 | 00366 | | | |
| CF9 | 008-0B | 00379 | 00335 | | | |
| CFN | 008-3F | 00358 | 00350 | | | |
| D1 | 002-12 | 00161 | 00133 | 00163 | | |
| D3 | 005-3F | 00267 | 00162 | | | |
| D4 | 005-2F | 00272 | 00269 | | | |
| D5 | 005-0E | 00278 | 00288 | | | |
| D6 | 005-3A | 00279 | 00271 | | | |
| D7 | 005-35 | 00280 | 00283 | | | |
| D8 | 005-18 | 00284 | 00287 | | | |
| DB1 | 000-02 | 00024 | 00032 | | | |
| DBD | 000-21 | 00023 | 00242 | 00359 | 00372 | 00603 |
| DL2 | 000-1A | 00038 | 00041 | | | |
| DL3 | 000-24 | 00042 | 00040 | | | |
| DLY1 | 000-0D | 00034 | 00274 | 00376 | | |
| DLY2 | 000-1B | 00035 | 00281 | 00285 | | |
| DS1 | 006-2F | 00295 | 00293 | | | |
| DS2 | 006-1E | 00296 | 00294 | | | |
| DSP | 006-3F | 00290 | 00078 | 00453 | | |
| DST | 000-1E | 00009 | 00156 | | | |
| DST1 | 000-33 | 00012 | 00022 | | | |
| DST2 | 000-27 | 00013 | 00019 | | | |
| DST3 | 000-18 | 00021 | 00010 | | | |
| M1 | 031-2D | 00631 | 00628 | | | |
| M10A | 002-0B | 00148 | 00144 | | | |

| SYMBOL | ADRS | DEFINE | REFERENCE |
|---|---|---|---|
| M10B | 002-0D | 00154 | 00146 |
| M11 | 002-36 | 00156 | 00135 |
| M12 | 002-1A | 00158 | 00142 |
| M13 | 002-34 | 00157 | 00140 |
| M2 | 031-29 | 00634 | 00632 |
| M3 | 031-08 | 00637 | 00653 |
| M5 | 031-0C | 00643 | 00645 |
| M6 | 031-25 | 00646 | 00636 |
| M8 | 031-28 | 00650 | 00644 |
| M9 | 002-3F | 00127 | 00652 |
| MD1 | 002-23 | 00153 | 00130 00147 00155 00157 00160 |
| MD2 | 003-27 | 00185 | 00206 00210 |
| MD3 | 004-3B | 00215 | 00219 00223 00227 00231 00235 00239 00243 |
|  |  |  | 00248 00253 00256 |
| MDO | 031-1C | 00624 | 00153 00185 00215 00278 00374 00633 00641 |
|  |  |  | 00648 00649 |
| OT1 | 009-1E | 00413 | 00415 |
| OT10 | 009-38 | 00434 | 00439 |
| OT11 | 009-36 | 00440 | 00432 |
| OT12 | 009-1A | 00442 | 00414 00436 |
| OT13 | 009-08 | 00447 | 00449 |
| OT14 | 009-09 | 00451 | 00443 |
| OT15 | 009-00 | 00464 | 00450 00467 |
| OT16 | 009-03 | 00466 | 00461 |
| OT2 | 009-3C | 00414 | 00421 |
| OT3 | 009-33 | 00416 | 00412 |
| OT4 | 009-1D | 00419 | 00422 |
| OT5 | 009-35 | 00421 | 00429 |
| OT6 | 009-16 | 00423 | 00417 |
| OT7 | 009-30 | 00426 | 00430 |
| OT8 | 009-17 | 00431 | 00424 |
| OT9 | 009-1C | 00433 | 00441 |
| OTO | 009-3F | 00407 | 00056 00061 00151 00464 |
| PI | 000-19 | 00051 | 00183 00189 00194 00195 00196 00197 00198 |
|  |  |  | 00199 00200 00370 00402 00403 |
| R1 | 031-3C | 00605 | 00607 |
| RC1 | 000-22 | 00045 | 00049 |
| RC2 | 000-04 | 00046 | 00047 |
| RCL | 000-08 | 00043 | 00344 00378 00601 |
| RESET | 031-3F | 00599 |  |
| T1 | 000-37 | 00008 | 00006 |
| T10 | 001-22 | 00105 | 00111 |
| T11 | 001-0A | 00114 | 00081 00091 00108 |
| T2 | 001-3F | 00064 | 00008 |
| T3 | 001-16 | 00079 | 00103 |
| T4 | 001-2E | 00088 | 00086 |
| T5 | 001-23 | 00092 | 00077 |
| T6 | 001-1A | 00098 | 00096 |
| T7 | 001-34 | 00099 | 00097 |
| T8 | 001-12 | 00101 | 00102 |
| T9 | 001-11 | 00104 | 00090 |
| TDL1 | 002-09 | 00166 | 00170 00172 |
| TDL2 | 002-32 | 00171 | 00167 |
| TDL3 | 002-15 | 00174 | 00169 |
| TDLY | 002-22 | 00164 | 00129 00640 00647 |

SYMBOL    ADRS    DEFINE   REFERENCE

TINT      000-3F  00004

SYMBOL    ADRS    DEFINE   REFERENCE

TINT      000-3F  00004

0194387

A P P E N D I X    III

| ST-NO | OBJECT | ADRS | SOURCE | STATEMENTS | |
|---|---|---|---|---|---|
| 00001 | | | | ORG | 00-3F |
| *00002 | 0FF | 000-3F | TSTAT | XAMR | 15 |
| 00003 | 260 | 000-3E | | LAB | |
| 00004 | 0FE | 000-3D | | XAMR | 14 |
| 00005 | 072 | 000-3B | | LAI | 4 |
| 00006 | 1DE | 000-37 | | BR | S1 |
| 00007 | 070 | 000-2F | | LAI | 0 |
| 00008 | 225 | 000-1E | S1 | ROTL | |
| 00009 | 342 1FF | 000-30 | | BRL | S2 |
| 00010 | 150 | 000-33 | DCL | LYI | 0 |
| 00011 | 146 | 000-27 | | LXI | 6 |
| 00012 | 010 | 000-0E | CL1 | LMIIY | 0 |
| 00013 | 1CE | 000-1D | | DR | CL1 |
| 00014 | 14E | 000-3A | | LXI | 7 |
| 00015 | 010 | 000-33 | CL2 | LMIIY | 0 |
| 00016 | 1F5 | 000-2B | | BR | CL2 |
| 00017 | 3A7 | 000-16 | | RTN | |
| 00018 | 150 | 000-2C | WCL | LYI | 0 |
| 00019 | 141 | 000-19 | | LXI | 8 |
| 00020 | 1F5 | 000-30 | | BR | CL2 |
| 00021 | 142 | 000-21 | CCLX | LXI | 4 |
| 00022 | 150 | 000-02 | | LYI | 0 |
| 00023 | 010 | 000-05 | CL3 | LMIIY | 0 |
| 00024 | 28A | 000-0B | | YNEI | 5 |
| 00025 | 1C5 | 000-17 | | BR | CL3 |
| 00026 | 144 | 000-2E | CCL | LXI | 2 |
| 00027 | 150 | 000-1C | | LYI | 0 |
| 00028 | 010 | 000-38 | CL4 | LMIIY | 0 |
| 00029 | 285 | 000-31 | | YNEI | 10 |
| 00030 | 1F8 | 000-23 | | BR | CL4 |
| 00031 | 148 | 000-06 | | LXI | 1 |
| 00032 | 150 | 000-0D | | LYI | 0 |
| 00033 | 010 | 000-1B | CL5 | LMIIY | 0 |
| 00034 | 1DB | 000-36 | | BR | CL5 |
| 00035 | 140 | 000-2D | | LXI | 0 |
| 00036 | 1F5 | 000-1A | | BR | CL2 |
| 00037 | 030 | 000-34 | ADS | AMC | |
| 00038 | 208 | 000-29 | | XMA | |
| 00039 | 070 | 000-12 | | LAI | 0 |
| 00040 | 154 | 000-24 | | LYI | 2 |
| 00041 | 030 | 000-08 | | AMC | |
| 00042 | 110 | 000-11 | | LMAIY | |
| 00043 | 156 | 000-22 | | LYI | 6 |
| 00044 | 3A7 | 000-04 | | RTN | |
| 00045 | 2C3 | 000-09 | KEYS | LRA | 3 |
| 00046 | 0C0 | 000-13 | | LAR | 0 |
| 00047 | 277 | 000-26 | | ALEI | 14 |
| 00048 | 1E5 | 000-0C | | BR | KEYS2 |
| 00049 | 080 | 000-19 | | AI | 0 |
| 00050 | 3A7 | 000-32 | KEYS1 | RTN | |
| 00051 | 16F | 000-25 | KEYS2 | LBI | 15 |
| 00052 | 064 | 000-0A | KEYS3 | IB | |
| 00053 | 224 | 000-15 | | ROTR | |
| 00054 | 24F | 000-2A | | TC | |
| 00055 | 1CA | 000-14 | | BR | KEYS3 |

| ST-NO | OBJECT | ADRS | | SOURCE | STATEMENTS |
|---|---|---|---|---|---|
| | | | | RTW | |
| 00056 | 3A7 | 000-28 | | BRL | KEYX |
| 00057 | 35E 1EC | 000-10 | KEY | DRL | TOTX |
| 00058 | 348 106 | 000-00 | TOT | ERL | CDBPX |
| 00059 | 346 1CB | 000-03 | CDSP | BRL | DSPX |
| 00060 | 35E 1FF | 000-0F | DSP | | |

PAGE NUMBER 000 CONTAINS 064 ROM WORDS

| 00061 | | | | ORG | 01-3F |
|---|---|---|---|---|---|
| *00062 | 0FF | 001-3F | INT1 | XAMR | 15 |
| 00063 | 072 | 001-3E | | LAI | 4 |
| 00064 | 1F7 | 001-3D | | BR | I1 |
| 00065 | 070 | 001-3B | | LAI | 0 |
| 00066 | 225 | 001-37 | I1 | ROTL | |
| 00067 | 0F8 | 001-2F | | XAMR | 8 |
| 00068 | 118 | 001-1E | | LAY | |
| 00069 | 0FC | 001-3C | | XAMR | 12 |
| 00070 | 001 | 001-39 | | XSPX | |
| 00071 | 240 | 001-33 | | LASPX | |
| 00072 | 0FD | 001-27 | | XAMR | 13 |
| 00073 | 001 | 001-0E | | XSPX | |
| 00074 | 070 | 001-1D | | LAI | 0 |
| 00075 | 088 | 001-3A | I2 | AI | 1 |
| 00076 | 1FA | 001-35 | | BR | I2 |
| 00077 | 1A1 | 001-2B | | TI1 | |
| 00078 | 1DB | 001-16 | | BR | I3 |
| 00079 | 1C5 | 001-2C | | BR | I4 |
| 00080 | 14A | 001-18 | I3 | LXI | 5 |
| 00081 | 152 | 001-30 | | LYI | 4 |
| 00082 | 018 | 001-21 | | LMIIY | 1 |
| 00083 | 01A | 001-02 | | LMIIY | 5 |
| 00084 | 2A0 | 001-05 | I4 | REIF1 | |
| 00085 | 1E8 | 001-0B | | BR | S38 |
| 00086 | 208 | 001-17 | S21 | XMA | |
| 00087 | 020 | 001-2E | | LBM | |
| 00088 | 344 1F7 | 001-10 | | BRL | S22 |
| 00089 | 010 | 001-31 | S18A | LMIIY | 0 |
| 00090 | 144 | 001-23 | S20 | LXI | 2 |
| 00091 | 155 | 001-06 | | LYI | 10 |
| 00092 | 008 | 001-0D | | LAM | |
| 00093 | 068 | 001-1B | | AI | 1 |
| 00094 | 27A | 001-36 | | ALEI | 5 |
| 00095 | 1D7 | 001-2D | | BR | S21 |
| 00096 | 14A | 001-1A | S36 | LXI | 5 |
| 00097 | 152 | 001-34 | | LYI | 4 |
| 00098 | 218 | 001-29 | | MNEI | 1 |
| 00099 | 1CC | 001-12 | | BR | S37 |
| 00100 | 15A | 001-24 | | LYI | 5 |
| 00101 | 008 | 001-08 | | LAM | |
| 00102 | 08F | 001-11 | | AI | 15 |
| 00103 | 208 | 001-22 | | XMA | |
| 00104 | 210 | 001-04 | | MNEI | 0 |
| 00105 | 1CC | 001-09 | | BR | S37 |
| 00106 | 152 | 001-13 | | LYI | 4 |
| 00107 | 010 | 001-26 | | LMIIY | 0 |
| 00108 | 0FA | 001-0C | S37 | XAMR | 10 |

| | | | | | | 0194387 |
|---|---|---|---|---|---|---|
| 00100 | 050 | 001-19 | | LYA | | |
| 00110. | 0FB | 001-32 | | XAMR | 11 | |
| 00111 | 040 | 001-25 | | LXA | | |
| 00112 | 003 | 001-0A | | XSPXY | | |
| 00113 | 0FE | 001-15 | | XAMR | 14 | |
| 00114 | 060 | 001-2A | | LBA | | |
| 00115 | 2A5 | 001-14 | | RETF | | |
| 00116 | 0FC | 001-28 | S38 | XAMR | 12 | |
| 00117 | 050 | 001-10 | | LYA | | |
| 00118 | 0FD | 001-20 | | XAMR | 13 | |
| 00119 | 040 | 001-00 | | LXA | | |
| 00120 | 0F8 | 001-01 | | XAMR | 8 | |
| 00121 | 081 | 001-03 | | AI | 9 | |
| 00122 | 224 | 001-07 | | ROTR | | |
| 00123 | 0FF | 001-0F | | XAMR | 15 | |
| 00124 | 3A4 | 001-1F | | RTNI | | |

PAGE NUMBER 001 CONTAINS 064 ROM WORDS

| 00125 | | | | ORG | 02-3F | |
|---|---|---|---|---|---|---|
| *00126 | 0F8 | 002-3F | S2 | XAMR | 8 | |
| 00127 | 118 | 002-3E | | LAY | | |
| 00128 | 0FC | 002-3D | | XAMR | 12 | |
| 00129 | 240 | 002-3B | | LASPX | | |
| 00130 | 0FB | 002-37 | | XAMR | 11 | |
| 00131 | 003 | 002-2F | | XSPXY | | |
| 00132 | 118 | 002-1E | | LAY | | |
| 00133 | 0FA | 002-3C | | XAMR | 10 | |
| 00134 | 240 | 002-39 | | LASPX | | |
| 00135 | 0FD | 002-33 | | XAMR | 13 | |
| 00136 | 14A | 002-27 | | LXI | 5 | |
| 00137 | 150 | 002-0E | | LYI | 0 | |
| 00138 | 200 | 002-1D | | TM | 0 | |
| 00139 | 14C | 002-3A | | LXI | 3 | |
| 00140 | 152 | 002-35 | | LYI | 4 | |
| 00141 | 1DC | 002-2B | | BR | S5 | |
| 00142 | 118 | 002-16 | S3 | LAY | | |
| 00143 | 272 | 002-2C | | ALEI | 4 | |
| 00144 | 1D7 | 002-18 | | BR | S4 | |
| 00145 | 27B | 002-30 | | ALEI | 13 | |
| 00146 | 349 1D1 | 002-21 | | BRL | S13 | |
| 00147 | 341 1DA | 002-05 | | BRL | S36 | |
| 00148 | 142 | 002-17 | S4 | LXI | 4 | |
| 00149 | 15F | 002-2E | | LYI | 15 | |
| 00150 | 04C | 002-1C | S5 | REC | | |
| 00151 | 215 | 002-38 | | MNEI | 10 | |
| 00152 | 1CD | 002-31 | | BR | S6 | |
| 00153 | 070 | 002-23 | | LAI | 0 | |
| 00154 | 208 | 002-06 | | XMA | | |
| 00155 | 078 | 002-0D | S6 | LAI | 1 | |
| 00156 | 030 | 002-1B | | AMC | | |
| 00157 | 046 | 002-36 | | DAA | | |
| 00158 | 208 | 002-2D | | XMA | | |
| 00159 | 24F | 002-1A | | TC | | |
| 00160 | 1D2 | 002-34 | | BR | S7 | |
| 00161 | 1D6 | 002-29 | | BR | S3 | |

0194387

| ST-NO | OBJECT | ADRS | SOURCE | STATEMENTS | |
|-------|--------|------|--------|------------|---|
| 00162 | 075 | 002-12 | S7 | LAI | 10 |
| 00163 | 114 | 002-24 | | LMADY | |
| 00164 | 1E2 | 002-08 | . | BR | S3 |
| 00165 | 1D7 | 002-11 | | BR | S4 |
| 00166 | 215 | 002-22 | S8 | MNEI | 10 |
| 00167 | 1E6 | 002-04 | | BR | S7 |
| 00168 | 070 | 002-09 | | LAI | 0 |
| 00169 | 209 | 002-13 | | XMA | |
| 00170 | 070 | 002-26 | S9 | LAI | 0 |
| 00171 | 030 | 002-0C | | AMC | |
| 00172 | 27A | 002-19 | | ALEI | 5 |
| 00173 | 208 | 002-32 | | XMA | |
| 00174 | 1D6 | 002-25 | | BR | S3 |
| 00175 | 075 | 002-0A | | LAI | 10 |
| 00176 | 114 | 002-15 | | LMADY | |
| 00177 | 28D | 002-2A | | YNEI | 11 |
| 00178 | 1DC | 002-14 | | BR | S5 |
| 00179 | 155 | 002-28 | | LYI | 10 |
| 00180 | 349 1F8 | 002-10 | | BRL | S10 |
| 00181 | 2A4 | 002-00 | ONH | REIE | |
| 00182 | 15A | 002-01 | | LYI | 5 |
| 00183 | 090 | 002-03 | | SED | |
| 00184 | 290 | 002-07 | | RED | |
| 00185 | 3A4 | 002-0F | | RTNI | |

PAGE NUMBER 002 CONTAINS 063 ROM WORDS

| 00186 | | | | ORG | 03-3F |
|-------|--------|------|--------|------------|---|
| *00187 | 142 | 003-3F | DIAL | LXI | 4 |
| 00188 | 150 | 003-3E | | LYI | 0 |
| 00189 | 020 | 003-3D | | LBM | |
| 00190 | 158 | 003-3B | | LYI | 1 |
| 00191 | 008 | 003-37 | | LAM | |
| 00192 | 050 | 003-2F | | LYA | |
| 00193 | 260 | 003-1E | | LAB | |
| 00194 | 040 | 003-3C | | LXA | |
| 00195 | 008 | 003-39 | | LAM | |
| 00196 | 143 | 003-33 | | LXI | 12 |
| 00197 | 15E | 003-27 | | LYI | 7 |
| 00198 | 210 | 003-0E | | MNEI | 0 |
| 00199 | 1EA | 003-1D | | BR | DIA2 |
| 00200 | 270 | 003-3A | | ALEI | 0 |
| 00201 | 1CF | 003-35 | | BR | DIA1 |
| 00202 | 152 | 003-2B | | LYI | 4 |
| 00203 | 094 | 003-16 | | TD | |
| 00204 | 1F0 | 003-2C | | BR | DIA3 |
| 00205 | 1CF | 003-18 | | BR | DIA1 |
| 00206 | 273 | 003-30 | DIA3 | ALEI | 12 |
| 00207 | 1E3 | 003-21 | | BR | DIA4 |
| 00208 | 15E | 003-02 | | LYI | 7 |
| 00209 | 012 | 003-05 | | LMIIY | 4 |
| 00210 | 23C | 003-0B | | LAT | |
| 00211 | 08F | 003-17 | | AI | 15 |
| 00212 | 156 | 003-2E | | LYI | 6 |
| 00213 | 110 | 003-1C | | LMAIY | |
| 00214 | 34E 1D6 | 003-38 | | BRL | DIA8 |

| ST-NO | OBJECT | | ADRS | SOURCE | STATEMENTS | |
|---|---|---|---|---|---|---|
| 00215 | 1ED | | 003-23 | DIA4 | LYI | 11 |
| 00216 | 094 | | 003-08 | | TD | |
| 00217 | 156 | | 003-0D | | LYI | 6 |
| 00218 | 1DA | | 003-1B | | BR | DIA5 |
| 00219 | 290 | | 003-36 | | RED | |
| 00220 | 1F4 | | 003-2D | | BP | DIA6 |
| 00221 | 090 | | 003-1A | DIA5 | SED | |
| 00222 | 063 | | 003-34 | DIA6 | LEA | |
| 00223 | 07F | | 003-29 | | LAI | 15 |
| 00224 | 2A4 | | 003-12 | | REIE | |
| 00225 | 2C1 | | 003-24 | | LRA | 1 |
| 00226 | 07E | | 003-08 | | LAI | 7 |
| 00227 | 2C2 | | 003-11 | | LRA | 2 |
| 00228 | 15A | | 003-22 | | LYI | 5 |
| 00229 | 090 | | 003-04 | | SED | |
| 00230 | 290 | | 003-09 | | RED | |
| 00231 | 23C | | 003-13 | | LAT | |
| 00232 | 084 | | 003-26 | | AI | 2 |
| 00233 | 1D9 | | 003-0C | | BR | *+1 |
| 00234 | 350 | 3E0 | 003-19 | | CALL | DLY3 |
| 00235 | 260 | | 003-25 | | LAB | |
| 00236 | 34E | 1FF | 003-0A | | BRL | DIA7 |
| 00237 | 156 | | 003-2A | DIA0 | LYI | 6 |
| 00238 | 23C | | 003-14 | | LAT | |
| 00239 | 124 | | 003-28 | | ANEM | |
| 00240 | 1CF | | 003-10 | | BR | DIA1 |
| 00241 | 08F | | 003-20 | | AI | 15 |
| 00242 | 110 | | 003-00 | | LMAIY | |
| 00243 | 008 | | 003-01 | | LAM | |
| 00244 | 08F | | 003-03 | | AI | 15 |
| 00245 | 114 | | 003-07 | | LMADY | |
| 00246 | 34E | 1C2 | 003-0F | DIA1 | BRL | DIA10 |

PAGE NUMBER 003 CONTAINS 064 ROM WORDS

| 00247 | | | | | ORG | 04-3F |
| +00248 | 324 | | 004-3F | S23 | BNEM | |
| 00249 | 1F7 | | 004-3E | | BR | S22 |
| 00250 | 341 | 1E3 | 004-3D | | BRL | S20 |
| 00251 | 054 | | 004-37 | S22 | IY | |
| 00252 | 1FF | | 004-2F | | BR | S23 |
| 00253 | 14A | | 004-1E | | LXI | 5 |
| 00254 | 156 | | 004-3C | | LYI | 6 |
| 00255 | 01F | | 004-39 | | LMIIY | 15 |
| 00256 | 012 | | 004-33 | | LMIIY | 4 |
| 00257 | 011 | | 004-27 | | LMIIY | 8 |
| 00258 | 267 | | 004-0E | | DB | |
| 00259 | 267 | | 004-1D | S25 | DB | |
| 00260 | 1E8 | | 004-3A | | BR | S30 |
| 00261 | 162 | | 004-35 | | LBI | 4 |
| 00262 | 159 | | 004-2B | | LYI | 9 |
| 00263 | 002 | | 004-16 | S26 | XSPY | |
| 00264 | 14A | | 004-2C | | LXI | 5 |
| 00265 | 156 | | 004-18 | | LYI | 6 |
| 00266 | 200 | | 004-30 | | TM | 0 |
| 00267 | 0D0 | | 004-21 | | SEDD | 0 |

P.008
0194387

| ST-NO | OBJECT | ADRS | SOURCE | STATEMENTS | |
|---|---|---|---|---|---|
| 00268 | 1CB | 004-02 | | DR | S27 |
| 00269 | 2D0 | 004-05 | | REDD | 0 |
| 00270 | 201 | 004-0B | S27 | TM | 1 |
| 00271 | 0D1 | 004-17 | | SEDD | 1 |
| 00272 | 1F8 | 004-25 | | BR | S28 |
| 00273 | 2D1 | 004-1C | | REDD | 1 |
| 00274 | 15E | 004-39 | S28 | LYI | 7 |
| 00275 | 008 | 004-31 | | LAM | |
| 00276 | 2C2 | 004-23 | | LRA | 2 |
| 00277 | 151 | 004-06 | | LYI | 8 |
| 00278 | 005 | 004-0D | | LAM | |
| 00279 | 2C1 | 004-1B | | LRA | 1 |
| 00280 | 15B | 004-36 | | LYI | 13 |
| 00281 | 090 | 004-2D | | SED | |
| 00282 | 290 | 004-1A | | RED | |
| 00283 | 07F | 004-34 | | LAI | 15 |
| 00284 | 2C1 | 004-29 | | LRA | 1 |
| 00285 | 2C2 | 004-12 | | LRA | 2 |
| 00286 | 159 | 004-24 | | LYI | 9 |
| 00287 | 254 | 004-08 | S29 | DY | |
| 00288 | 079 | 004-11 | | LAI | 1 |
| 00289 | 034 | 004-22 | | AM | |
| 00290 | 208 | 004-04 | | XMA | |
| 00291 | 1C8 | 004-09 | | BR | S29 |
| 00292 | 002 | 004-13 | | XSPY | |
| 00293 | 2D2 | 004-26 | | REDD | 2 |
| 00294 | 0C1 | 004-0C | | LAR | 1 |
| 00295 | 0D2 | 004-19 | | SEDD | 2 |
| 00296 | 208 | 004-32 | | XMA | |
| 00297 | 054 | 004-25 | | IY | |
| 00298 | 267 | 004-0A | | DB | |
| 00299 | 1D6 | 004-15 | | BR | S26 |
| 00300 | 345 1C2 | 004-2A | | BRL | S31 |
| 00301 | 151 | 004-28 | S30 | LYI | 8 |
| 00302 | 04C | 004-10 | | REC | |
| 00303 | 07D | 004-20 | | LAI | 11 |
| 00304 | 030 | 004-00 | | AMC | |
| 00305 | 114 | 004-01 | | LMADY | |
| 00306 | 078 | 004-03 | | LAI | 1 |
| 00307 | 030 | 004-07 | | AMC | |
| 00308 | 110 | 004-0F | | LMAIY | |
| 00309 | 1DD | 004-1F | | BR | S25 |

PAGE NUMBER 004 CONTAINS 064 ROM WORDS

| 00310 | | | | ORG | 05-3F |
|---|---|---|---|---|---|
| *00311 | 140 | 005-3F | CAL | LXI | 0 |
| 00312 | 150 | 005-3E | | LYI | 0 |
| 00313 | 00B | 005-3D | | LAMXY | |
| 00314 | 14C | 005-3B | | LXI | 3 |
| 00315 | 159 | 005-37 | | LYI | 9 |
| 00316 | 20B | 005-2F | | XMAXY | |
| 00317 | 154 | 005-1E | | LYI | 2 |
| 00318 | 008 | 005-3C | CAL1 | LAM | |
| 00319 | 054 | 005-39 | | IY | |
| 00320 | 023 | 005-33 | | LBMXY | |

| ST-NO | OBJECT | ADRS | SOURCE | STATEMENTS | |
|-------|--------|------|--------|------------|---|
| 00321 | 054 | 005-27 | | IY | |
| 00322 | 110 | 005-0E | | LMAIY | |
| 00323 | 223 | 005-1D | | XMBXY | |
| 00324 | 286 | 005-3A | | YNEI | 6 |
| 00325 | 15A | 005-35 | | LYI | 5 |
| 00326 | 1FC | 005-28 | | BR | CAL1 |
| 00327 | 3EE | 005-16 | CAL | CCL | |
| 00328 | 142 | 005-2C | | LXI | 4 |
| 00329 | 158 | 005-18 | | LYI | 1 |
| 00330 | 010 | 005-30 | | LMIIY | 0 |
| 00331 | 3A7 | 005-21 | | RTN | |
| 00332 | 159 | 005-02 | S31 | LYI | 9 |
| 00333 | 008 | 005-05 | | LAM | |
| 00334 | 270 | 005-08 | | ALEI | 0 |
| 00335 | 1E2 | 005-17 | | BR | S35 |
| 00336 | 142 | 005-2E | S32 | LXI | 4 |
| 00337 | 124 | 005-1C | | ANEM | |
| 00338 | 1E2 | 005-38 | | BR | S35 |
| 00339 | 14A | 005-31 | | LXI | 5 |
| 00340 | 054 | 005-23 | | IY | |
| 00341 | 008 | 005-06 | | LAM | |
| 00342 | 287 | 005-0D | | YNEI | 14 |
| 00343 | 1EE | 005-1B | | BR | S32 |
| 00344 | 144 | 005-36 | | LXI | 2 |
| 00345 | 155 | 005-2D | | LYI | 10 |
| 00346 | 008 | 005-1A | | LAM | |
| 00347 | 054 | 005-34 | S33 | IY | |
| 00348 | 1E4 | 005-29 | | BR | S34 |
| 00349 | 1E2 | 005-12 | | BR | S35 |
| 00350 | 210 | 005-24 | S34 | MNEI | 0 |
| 00351 | 1F4 | 005-08 | | BR | S33 |
| 00352 | 208 | 005-11 | | XMA | |
| 00353 | 341 1E3 | 005-22 | S35 | BRL | S20 |
| 00354 | 142 | 005-09 | A2 | LXI | 4 |
| 00355 | 15E | 005-13 | | LVI | 7 |
| 00356 | 210 | 005-26 | | MNEI | 0 |
| 00357 | 156 | 005-0C | | LYI | 6 |
| 00358 | 008 | 005-19 | | LAM | |
| 00359 | 1CA | 005-32 | | BR | A21 |
| 00360 | 1C3 | 005-25 | | BR | A23 |
| 00361 | 27A | 005-0A | A21 | ALEI | 5 |
| 00362 | 1D4 | 005-15 | | BR | A22 |
| 00363 | 08D | 005-2A | | AI | 11 |
| 00364 | 143 | 005-14 | A22 | LXI | 12 |
| 00365 | 150 | 005-28 | | LYI | 0 |
| 00366 | 208 | 005-10 | | XMA | |
| 00367 | 008 | 005-20 | | LAM | |
| 00368 | 034 | 005-00 | | AM | |
| 00369 | 08F | 005-01 | | AI | 15 |
| 00370 | 14C | 005-03 | A23 | LXI | 3 |
| 00371 | 156 | 005-07 | | LYI | 6 |
| 00372 | 110 | 005-0F | | LMAIY | |
| 00373 | 3A7 | 005-1F | | RTN | |

PAGE NUMBER 005 CONTAINS 064 ROM WORDS

| ST-NO | OBJECT | ADRS | SOURCE STATEMENTS | |
|-------|--------|------|------|------|
| 00374 | | | CRC | 06-3F |
| −00375 | 14A | 006-3F | AAD | LXI | 5 |
| 00376 | 15F | 006-3E | | LYI | 15 |
| 00377 | 020 | 006-3D | | LDM | |
| 00378 | 142 | 006-3E | | LXI | 4 |
| 00379 | 150 | 006-37 | | LYI | 0 |
| 00380 | 010 | 006-2F | | LMIIY | 0 |
| 00381 | 010 | 006-1E | | LMIIY | 0 |
| 00382 | 01F | 006-3C | | LMIIY | 15 |
| 00383 | 012 | 006-39 | | LMIIY | 4 |
| 00384 | 011 | 006-33 | | LMIIY | 8 |
| 00385 | 267 | 006-27 | | DB | |
| 00386 | 267 | 006-0E | AAD1 | DB | |
| 00387 | 1F5 | 006-1D | | BR | AAD2 |
| 00388 | 3A7 | 006-3A | | RTN | |
| 00389 | 152 | 006-35 | AAD2 | LYI | 4 |
| 00390 | 04C | 006-2B | | REC | |
| 00391 | 07D | 006-16 | | LAI | 11 |
| 00392 | 030 | 006-2C | | AMC | |
| 00393 | 114 | 006-18 | | LMADY | |
| 00394 | 078 | 006-30 | | LAI | 1 |
| 00395 | 030 | 006-21 | | AMC | |
| 00396 | 110 | 006-02 | | LMAIY | |
| 00397 | 1CE | 006-05 | | BR | AAD1 |
| 00398 | 3EC | 006-0B | CDSPX | CAL | WCL |
| 00399 | 141 | 006-17 | | LXI | 8 |
| 00400 | 15F | 006-2E | | LYI | 15 |
| 00401 | 003 | 006-1C | | XSPXY | |
| 00402 | 142 | 006-38 | | LXI | 4 |
| 00403 | 150 | 006-31 | | LYI | 0 |
| 00404 | 020 | 006-23 | | LBM | |
| 00405 | 158 | 006-06 | | LYI | 1 |
| 00406 | 008 | 006-0D | | LAM | |
| 00407 | 050 | 006-1B | | LYA | |
| 00408 | 260 | 006-36 | CDSP1 | LAB | |
| 00409 | 254 | 006-2D | | DY- | |
| 00410 | 1E4 | 006-1A | | BR | CDSP2 |
| 00411 | 08F | 006-34 | | AI | 15 |
| 00412 | 1E4 | 006-29 | | BR | CDSP2 |
| 00413 | 1D3 | 006-12 | | BR | CDSP3 |
| 00414 | 040 | 006-24 | CDSP2 | LXA | |
| 00415 | 060 | 006-08 | | LBA | |
| 00416 | 00B | 006-11 | | LAMXY | |
| 00417 | 114 | 006-22 | | LMADY | |
| 00418 | 003 | 006-04 | | XSPXY | |
| 00419 | 1F6 | 006-09 | | BR | CDSP1 |
| 00420 | 3CF | 006-13 | CDSP3 | CAL | DSP |
| 00421 | 3A7 | 006-26 | | RTN | |
| 00422 | 159 | 006-0C | TDSP | LYI | 9 |
| 00423 | 00B | 006-19 | | LAMXY | |
| 00424 | 141 | 006-32 | | LXI | 8 |
| 00425 | 156 | 006-25 | | LYI | 6 |
| 00426 | 20B | 006-0A | | XMAXY | |
| 00427 | 054 | 006-15 | TDS1 | IY | |
| 00428 | 008 | 006-2A | | LAM | |

| ST-NO | OBJECT | ADRS | SOURCE STATEMENTS | | |
|-------|--------|------|--------|--------|--------|

0194387

| ST-NO | OBJECT | ADRS | | | |
|-------|--------|------|------|------|------|
| 00429 | 354 | 006-14 | | IY | |
| 00430 | 023 | 006-28 | | LBMXY | |
| 00431 | 054 | 006-10 | | IY | |
| 00432 | 054 | 006-20 | | IY | |
| 00433 | 110 | 006-00 | | LMAIY | |
| 00434 | 223 | 006-01 | | XMBXY | |
| 00435 | 28F | 006-03 | | YNEI | 15 |
| 00436 | 1D5 | 006-07 | | BR | TDS1 |
| 00437 | 3CF | 006-0F | | CAL | DSP |
| 00438 | 3A7 | 006-1F | | RTN | |

PAGE NUMBER 006 CONTAINS 064 ROM WORDS

| ST-NO | OBJECT | ADRS | | | |
|-------|--------|------|------|------|------|
| 00439 | | | | ORG | 07-3F |
| *00440 | 142 | 007-3F | ADSET | LXI | 4 |
| 00441 | 150 | 007-3E | | LYI | 0 |
| 00442 | 010 | 007-3D | ADS1 | LMIIY | 0 |
| 00443 | 28A | 007-3B | | YNEI | 5 |
| 00444 | 1FD | 007-37 | | BR | ADS1 |
| 00445 | 156 | 007-2F | | LYI | 6 |
| 00446 | 020 | 007-1E | | LBM | |
| 00447 | 267 | 007-3C | | DB | |
| 00448 | 267 | 007-39 | ADS2 | DB | |
| 00449 | 1F0 | 007-33 | | BR | ADS4 |
| 00450 | 008 | 007-27 | | LAM | |
| 00451 | 15A | 007-0E | | LYI | 5 |
| 00452 | 020 | 007-1D | | LBM | |
| 00453 | 279 | 007-3A | | ALEI | 9 |
| 00454 | 1D6 | 007-35 | | BR | ADS3 |
| 00455 | 267 | 007-2B | | DB | |
| 00456 | 267 | 007-16 | ADS3 | DB | |
| 00457 | 1F8 | 007-2C | | BR | ADS5 |
| 00458 | 3A7 | 007-18 | | RTN | |
| 00459 | 152 | 007-30 | ADS4 | LYI | 4 |
| 00460 | 04C | 007-21 | | REC | |
| 00461 | 07A | 007-02 | | LAI | 5 |
| 00462 | 030 | 007-05 | | AMC | |
| 00463 | 114 | 007-0B | | LMADY | |
| 00464 | 078 | 007-17 | | LAI | 1 |
| 00465 | 3F4 | 007-2E | | CAL | ADS |
| 00466 | 1F9 | 007-1C | | BR | ADS2 |
| 00467 | 152 | 007-38 | ADS5 | LYI | 4 |
| 00468 | 04C | 007-31 | | REC | |
| 00469 | 074 | 007-23 | | LAI | 2 |
| 00470 | 030 | 007-06 | | AMC | |
| 00471 | 114 | 007-0D | | LMADY | |
| 00472 | 07B | 007-1B | | LAI | 13 |
| 00473 | 3F4 | 007-36 | | CAL | ADS |
| 00474 | 1D6 | 007-2D | | BR | ADS3 |
| 00475 | 14C | 007-1A | ALC | LXI | 3 |
| 00476 | 159 | 007-34 | | LYI | 9 |
| 00477 | 00B | 007-29 | | LAMXY | |
| 00478 | 140 | 007-12 | | LXI | 0 |
| 00479 | 150 | 007-24 | | LYI | 0 |
| 00480 | 20B | 007-08 | | XMAXY | |
| 00481 | 054 | 007-11 | ALC1 | IY | |

| ST-NO | OBJECT | ADR6 | SOURCE | STATEMENTS | |
|-------|--------|------|--------|-----------|---|
| 00482 | 008 | 007-22 | | LAM | |
| 00483 | 054 | 007-04 | | IY | |
| 00484 | 223 | 007-09 | | LDMXY | |
| 00485 | 054 | 007-13 | | IY | |
| *00486 | 04B | 007-26 | | LMIIY | 13 |
| 00487 | 110 | 007-00 | | LMAIY | |
| 00488 | 223 | 007-19 | | XMBXY | |
| 00489 | 26B | 007-32 | | YNEI | 13 |
| 00490 | 1D1 | 007-25 | | BR | ALC1 |
| 00491 | 142 | 007-0A | | LXI | 4 |
| 00492 | 159 | 007-15 | | LYI | 1 |
| 00493 | 01E | 007-2A | | LMIIY | 7 |
| 00494 | 3A7 | 007-14 | | RTN | |
| 00495 | 150 | 007-28 | XXX | LYI | 0 |
| 00496 | 010 | 007-10 | | LMIIY | 0 |
| 00497 | 010 | 007-20 | | LMIIY | 0 |
| 00498 | 14C | 007-00 | | LXI | 3 |
| 00499 | 150 | 007-01 | | LYI | 0 |
| 00500 | 015 | 007-03 | XX1 | LMIIY | 10 |
| 00501 | 28A | 007-07 | | YNEI | 5 |
| 00502 | 1C3 | 007-0F | | BR | XX1 |
| 00503 | 3A7 | 007-1F | | RTN | |

PAGE NUMBER 007 CONTAINS 064 ROM WORDS

| ST-NO | OBJECT | ADR6 | SOURCE | STATEMENTS | |
|-------|--------|------|--------|-----------|---|
| 00504 | | | | ORG | 08-3F |
| *00505 | 142 | 008-3F | OK | LXI | 4 |
| 00506 | 15E | 008-3E | | LYI | 7 |
| 00507 | 210 | 008-3D | | MNEI | 0 |
| 00508 | 15A | 008-3B | | LYI | 5 |
| 00509 | 008 | 008-37 | | LAM | |
| 00510 | 1E1 | 008-2F | | BR | OK4 |
| 00511 | 27C | 008-1E | | ALEI | 3 |
| 00512 | 1FA | 008-3C | | BR | OK2 |
| 00513 | 212 | 008-39 | | MNEI | 4 |
| 00514 | 1F0 | 008-33 | | BR | OK3 |
| 00515 | 156 | 008-27 | OK1 | LYI | 6 |
| 00516 | 215 | 008-0E | | MNEI | 10 |
| 00517 | 1F0 | 008-1D | | BR | OK3 |
| 00518 | 15A | 008-3A | OK2 | LYI | 5 |
| 00519 | 210 | 008-35 | | MNEI | 0 |
| 00520 | 1EE | 008-2B | | BR | OK5 |
| 00521 | 156 | 008-16 | | LYI | 6 |
| 00522 | 215 | 008-2C | | MNEI | 10 |
| 00523 | 1F8 | 008-18 | | BR | OK6 |
| 00524 | 3A7 | 008-30 | OK3 | RTN | |
| 00525 | 278 | 008-21 | OK4 | ALEI | 1 |
| 00526 | 1FA | 008-02 | | BR | OK2 |
| 00527 | 214 | 008-05 | | MNEI | 2 |
| 00528 | 1F0 | 008-0B | | BR | OK3 |
| 00529 | 1E7 | 008-17 | | BR | OK1 |
| 00530 | 080 | 008-2E | OK5 | AI | 0 |
| 00531 | 3A7 | 008-1C | | RTN | |
| 00532 | 210 | 008-38 | OK6 | MNEI | 0 |
| 00533 | 1EE | 008-31 | | BR | OK5 |
| 00534 | 3A7 | 008-23 | | RTN | |

0194387

0194387

| ST-NO | OBJECT | ADRS | SOURCE | STATEMENTS | |
|-------|--------|------|--------|------------|---|
| 00535 | 2A4 | 008-06 | TOTY | SEIE | |
| 00536 | 16B | 008-0D | | LBI | J |
| 00537 | 2E2 | 008-1B | | LRD | 2 |
| 00538 | 160 | 008-36 | | LBI | 0 |
| 00539 | 2E1 | 008-2D | | LBB | 1 |
| 00540 | 15E | 008-1A | | LYI | 7 |
| 00541 | 090 | 008-34 | | SED | |
| 00542 | 290 | 008-29 | | RED | |
| 00543 | 2C1 | 008-12 | | LRA | |
| 00544 | 155 | 008-24 | | LYI | 10 |
| 00545 | 094 | 008-08 | TOT1 | TD | |
| 00546 | 1C8 | 008-11 | | BR | TOT1 |
| 00547 | 15E | 008-22 | | LYI | : |
| 00548 | 090 | 008-04 | | SED | |
| 00549 | 290 | 008-09 | | RED | |
| 00550 | 155 | 008-13 | | LYI | 1. |
| 00551 | 094 | 008-26 | TOT2 | TD | |
| 00552 | 1F2 | 008-0C | | BR | TOT3 |
| 00553 | 1E6 | 008-19 | | BR | TOT2 |
| 00554 | 160 | 008-32 | TOT3 | LBI | 0 |
| 00555 | 2E1 | 008-25 | | LRB | 1 |
| 00556 | 15E | 008-0A | | LYI | 7 |
| 00557 | 090 | 008-15 | | SED | |
| 00558 | 290 | 008-2A | | RED | |
| 00559 | 16F | 008-14 | | LBI | 15 |
| 00560 | 2E1 | 008-28 | | LRB | 1 |
| 00561 | 2E2 | 008-10 | | LRB | 2 |
| 00562 | 0A4 | 008-20 | | SEIE | |
| 00563 | 155 | 008-00 | | LYI | 10 |
| 00564 | 094 | 008-01 | TOT5 | TD | |
| 00565 | 1C1 | 008-03 | | BR | TOT |
| 00566 | 3A7 | 008-07 | | RTN | |

PAGE NUMBER 008 CONTAINS 062 ROM WORDS

| ST-NO | OBJECT | | ADRS | SOURCE | STATEMENTS | |
|-------|--------|---|------|--------|------------|---|
| 00567 | | | | | ORG | 09-7? |
| *00568 | 008 | | 009-3F | AND | LAM | |
| 00569 | 14A | | 009-3E | . | LXI | 5 |
| 00570 | 15F | | 009-3D | | LYI | 15. |
| 00571 | 208 | | 009-3B | | XMA | |
| 00572 | 346 | 3FF | 009-37 | | CALL | AAD |
| 00573 | 16A | | 009-1E | | LBI | 5 |
| 00574 | 35D | 3D0 | 009-3C | AND1 | CALL | ADP |
| 00575 | 267 | | 009-33 | | DB | |
| 00576 | 1FC | | 009-27 | | BR | AND1 |
| 00577 | 34C | 3FD | 009-0E | | CALL | RCDD |
| 00578 | 142 | | 009-3A | | LXI | 4 |
| 00579 | 150 | | 009-35 | | LYI | 0 |
| 00580 | 018 | | 009-2B | | LMIY | 1 |
| 00581 | 010 | | 009-16 | | LMIY | 0 |
| 00582 | 340 | 3C3 | 009-2C | | CALL | CDSP |
| 00583 | 3A7 | | 009-30 | | RTN | |
| 00584 | 150 | | 009-21 | NCL | LYI | 0 |
| 00585 | 040 | | 009-02 | NCL1 | LXA | |
| 00586 | 010 | | 009-05 | NCL2 | LMI Y | 0 |
| 00587 | 1C5 | | 009-0B | | BR | NCL2 |

| ST-NO | OBJECT | | ADRS | SOURCE | STATEMENTS | |
|---|---|---|---|---|---|---|
| 00588 | 08F | | 009-17 | | AI | 15 |
| 00589 | 100 | | 009-2E | | BR | NCL1 |
| 00590 | 3A7 | | 009-1C | | RTN | |
| 00591 | 215 | | 009-38 | S10 | MWEI | 10 |
| 00592 | 15D | | 009-31 | | LYI | 11 |
| 00593 | 1D7 | | 009-23 | | BR | S15 |
| 00594 | 040 | | 009-06 | S11 | REC | |
| 00595 | 215 | | 009-0D | | MNEI | 10 |
| 00596 | 1DA | | 009-1B | | BR | S12 |
| 00597 | 070 | | 009-36 | | LAI | 0 |
| 00598 | 203 | | 009-2D | | XMA | |
| 00599 | 078 | | 009-1A | S12 | LAI | 1 |
| 00600 | 030 | | 009-34 | | AMC | |
| 00601 | 048 | | 009-29 | | DAA | |
| 00602 | 203 | | 009-12 | | XMA | |
| 00603 | 24F | | 009-24 | | TC | |
| 00604 | 1D3 | | 009-08 | | BR | S14 |
| 00605 | 144 | | 009-11 | S13 | LXI | 2 |
| 00606 | 155 | | 009-22 | | LYI | 10 |
| 00607 | 341 | 1F1 | 009-04 | | BRL | S18A |
| 00608 | 075 | | 009-13 | S14 | LAI | 10 |
| 00609 | 114 | | 009-26 | | LMADY | |
| 00610 | 106 | | 009-0C | | BR | S11 |
| 00611 | 214 | | 009-19 | S15 | MNEI | 2 |
| 00612 | 1D4 | | 009-32 | | BR | S16 |
| 00613 | 155 | | 009-25 | | LYI | 10 |
| 00614 | 015 | | 009-0A | | LMIIY | 10 |
| 00615 | 018 | | 009-15 | | LMIIY | 1 |
| 00616 | 1D1 | | 009-2A | | BR | S13 |
| 00617 | 218 | | 009-14 | S16 | MNEI | 1 |
| 00618 | 1C6. | | 009-28 | | BR | S11 |
| 00619 | 159 | | 009-10 | | LYI | 9 |
| 00620 | 21F | | 009-20 | | MNEI | 15 |
| 00621 | 07F | | 009-00 | | LAI | 15 |
| 00622 | 1C7 | | 009-01 | | BR | S17 |
| 00623 | 077 | | 009-03 | | LAI | 14 |
| 00624 | 208 | | 009-07 | S17 | XMA | |
| 00625 | 15D | | 009-0F | | LYI | 11 |
| 00626 | 1C6 | | 009-1F | | BR | S11 |

PAGE NUMBER 009 CONTAINS 064 ROM WORDS

| ST-NO | OBJECT | | ADRS | SOURCE | STATEMENTS | |
|---|---|---|---|---|---|---|
| 00627 | | | | | ORG | 10-3F |
| *00628 | 14A | | 010-3F | CRD | LXI | 5 |
| 00629 | 157 | | 010-3E | | LYI | 14 |
| 00630 | 210 | | 010-3D | | MNEI | 0 |
| 00631 | 1CB | | 010-3B | | BR | CRD3 |
| 00632 | 347 | 3FF | 010-37 | | CALL | ADSET |
| 00633 | 142 | | 010-1E | CRDD | LXI | 4 |
| 00634 | 150 | | 010-3C | | LYI | 0 |
| 00635 | 008 | | 010-39 | | LAM | |
| 00636 | 0F0 | | 010-33 | | XAMR | 0 |
| 00637 | 158 | | 010-27 | | LYI | 1 |
| 00638 | 008 | | 010-0E | | LAM | |
| 00639 | 050 | | 010-1D | | LYA | |
| 00640 | 0F0 | | 010-3A | | XAMR | 0 |

| ST-NO | OBJECT | ADRS | SOURCE STATEMENTS | 0194387 |

| ST-NO | OBJECT | | ADRS | SOURCE | STATEMENTS | |
|---|---|---|---|---|---|---|
| 00641 | 340 | | 010-35 | | LXA | |
| 00642 | 008 | | 010-2B | | LAM | |
| 00643 | 35E | 3CA | 010-16 | | CALL | WR |
| 00644 | 15A | | 010-18 | | LYI | 5 |
| 00645 | 254 | | 010-30 | CRD1 | DY | |
| 00646 | 288 | | 010-21 | | YNEI | 1 |
| 00647 | 1D2 | | 010-02 | | BR | CRD5 |
| 00648 | 3A7 | | 010-05 | CRD2 | RTN | |
| 00649 | 346 | 3FF | 010-0B | CRD3 | CALL | AAD |
| 00650 | 16A | | 010-2E | | LBI | 5 |
| 00651 | 14C | | 010-1C | | LXI | 3 |
| 00652 | 159 | | 010-3B | | LYI | 9 |
| 00653 | 00B | | 010-31 | CRD4 | LAMXY | |
| 00654 | 35E | 3CA | 010-23 | | CALL | WR |
| 00655 | 35D | 3D0 | 010-0D | | CALL | ADP |
| 00656 | 003 | | 010-36 | | XSPXY | |
| 00657 | 054 | | 010-2D | | IY | |
| 00658 | 267 | | 010-1A | | DB | |
| 00659 | 1F1 | | 010-34 | | BR | CRD4 |
| 00660 | 1DE | | 010-29 | | BR | CRDD |
| 00661 | 078 | | 010-13 | CRD5 | LAI | 1 |
| 00662 | 034 | | 010-24 | | AM | |
| 00663 | 208 | | 010-08 | | XMA | |
| 00664 | 1F0 | | 010-11 | | BR | CRD1 |
| 00665 | 154 | | 010-22 | | LYI | 2 |
| 00666 | 254 | | 010-04 | CRD6 | DY | |
| 00667 | 078 | | 010-09 | | LAI | 1 |
| 00668 | 034 | | 010-13 | | AM | |
| 00669 | 208 | | 010-26 | | XMA | |
| 00670 | 1C4 | | 010-0C | | BR | CRD6 |
| 00671 | 158 | | 010-19 | | LYI | 1 |
| 00672 | 21A | | 010-32 | | MNEI | 5 |
| 00673 | 1DE | | 010-25 | | BR | CRDD |
| 00674 | 150 | | 010-0A | | LYI | 0 |
| 00675 | 218 | | 010-15 | | MNEI | 1 |
| 00676 | 1DE | | 010-2A | | BR | CRDD |
| 00677 | 154 | | 010-14 | | LYI | 2 |
| 00678 | 21F | | 010-28 | | MNEI | 15 |
| 00679 | 1C5 | | 010-10 | | BR | CRD2 |
| 00680 | 15C | | 010-20 | | LYI | 3 |
| 00681 | 008 | | 010-00 | | LAM | |
| 00682 | 27B | | 010-01 | | ALEI | 13 |
| 00683 | 1C5 | | 010-03 | | BR | CRD2 |
| 00684 | 1DE | | 010-07 | | BR | CRDD |

PAGE NUMBER 010 CONTAINS 062 ROM WORDS

| 00685 | | | | | ORG | 11-3F |
| *00686 | 3EC | | 011-3F | AISHU | CAL | WCL |
| 00687 | 346 | 3FF | 011-3E | | CALL | AAD |
| 00688 | 14C | | 011-3B | | LXI | 3 |
| 00689 | 159 | | 011-37 | | LYI | 9 |
| 00690 | 003 | | 011-2F | ISH1 | XSPXY | |
| 00691 | 358 | 3FF | 011-1E | | CALL | RD |
| 00692 | 35D | 3D0 | 011-39 | | CALL | ADP |
| 00693 | 003 | | 011-27 | | XSPXY | |

0194387

| ST-NO | OBJECT | ADRS | SOURCE | STATEMENTS | |
|-------|--------|------|--------|-----------|---|
| 00694 | 220 | 011-0E | | XHB | |
| 00695 | 054 | 011-1D | | IY | |
| 00696 | 2BF | 011-3A | | YNEI | 15 |
| 00697 | 1BF | 011-35 | | BR | ISH1 |
| 00698 | 159 | 011-2B | | LYI | 7 |
| 00699 | 210 | 011-16 | | MNEI | 0 |
| 00700 | 1F0 | 011-2C | | BR | ISH2 |
| 00701 | 1ED | 011-18 | | BR | ISH3 |
| 00702 | 346 3CC | 011-30 | ISH2 | CALL | TDSP |
| 00703 | 350 3E8 | 011-02 | | CALL | DLY2 |
| 00704 | 3F3 | 011-0B | | CAL | DCL |
| 00705 | 34C 3FD | 011-17 | ISHU | CALL | RCDD |
| 00706 | 14E | 011-1C | EMP | LXI | 7 |
| 00707 | 154 | 011-38 | | LYI | 2 |
| 00708 | 010 | 011-31 | | LMIIY | 0 |
| 00709 | 010 | 011-23 | | LMIIY | 0 |
| 00710 | 140 | 011-06 | | LXI | 0 |
| 00711 | 150 | 011-0D | | LYI | 0 |
| 00712 | 210 | 011-1B | | MNEI | 0 |
| 00713 | 1D2 | 011-36 | | BR | ISH4 |
| 00714 | 160 | 011-2D | ISH3 | LBI | 0 |
| 00715 | 35D 3C6 | 011-1A | | CALL | D2 |
| 00716 | 1C0 | 011-29 | | BR | ISH6 |
| 00717 | 142 | 011-12 | ISH4 | LXI | 4 |
| 00718 | 010 | 011-24 | | LMIIY | 0 |
| 00719 | 010 | 011-08 | | LMIIY | 0 |
| 00720 | 154 | 011-11 | ISH5 | LYI | 2 |
| 00721 | 35D 3E0 | 011-22 | | CALL | ADPX |
| 00722 | 340 3C3 | 011-09 | | CALL | CDSP |
| 00723 | 350 3CA | 011-26 | | CALL | DLY1 |
| 00724 | 142 | 011-19 | | LXI | 4 |
| 00725 | 150 | 011-32 | | LYI | 0 |
| 00726 | 020 | 011-25 | | LBM | |
| 00727 | 158 | 011-0A | | LYI | 1 |
| 00728 | 008 | 011-15 | | LAM | |
| 00729 | 050 | 011-2A | | LYA | |
| 00730 | 260 | 011-14 | | LAB | |
| 00731 | 040 | 011-28 | | LXA | |
| 00732 | 210 | 011-10 | | MNEI | 0 |
| 00733 | 1D1 | 011-20 | | BR | ISH5 |
| 00734 | 350 3E8 | 011-00 | ISH6 | CALL | DLY2 |
| 00735 | 3E1 | 011-03 | | CAL | CCLX |
| 00736 | 3A7 | 011-07 | | RTN | |

PAGE NUMBER 011 CONTAINS 062 ROM WORDS

| | | | | | |
|-------|--------|------|--------|-----------|---|
| 00737 | | | | ORG | 12-3F |
| *00738 | 347 3FF | 012-3F | RCD | CALL | ADSET |
| 00739 | 3EE | 012-3D | RCDD | CAL | CCL |
| 00740 | 14C | 012-3B | RCD0 | LXI | 3 |
| 00741 | 15E | 012-37 | | LYI | 7 |
| 00742 | 018 | 012-2F | | LMIIY | 1 |
| 00743 | 012 | 012-1E | | LMIIY | 4 |
| 00744 | 358 3FF | 012-3C | RCD1 | CALL | RD |
| 00745 | 15F | 012-33 | | LYI | 15 |
| 00746 | 07F | 012-27 | | LAI | 15 |

0194387

| ST-NO | OBJECT | ADRS | SOURCE | STATEMENTS | |
|-------|--------|------|--------|-----------|---|
| 00747 | 054 | 012-0E | RCD7 | IY | |
| 00748 | 1F5 | 012-1D | | BR | RCD4 |
| 00749 | 088 | 012-3A | | AI | 1 |
| 00750 | 040 | 012-35 | RCD4 | LXA | |
| 00751 | 210 | 012-2B | | MNEI | 0 |
| 00752 | 1F1 | 012-16 | | BR | RCD7 |
| 00753 | 220 | 012-2C | | XMB | |
| 00754 | 142 | 012-18 | | LXI | 4 |
| 00755 | 152 | 012-30 | | LYI | 4 |
| 00756 | 020 | 012-21 | RCD5 | LBM | |
| 00757 | 064 | 012-02 | | IB | |
| 00758 | 220 | 012-05 | | XMB | |
| 00759 | 1F6 | 012-0B | | BR | RCD8 |
| 00760 | 254 | 012-17 | | DY | |
| 00761 | 288 | 012-2E | | YNEI | 1 |
| 00762 | 1E1 | 012-1C | | BR | RCD5 |
| 00763 | 3A7 | 012-38 | RCD6 | RTN | |
| 00764 | 289 | 012-31 | RCD7 | YNEI | 9 |
| 00765 | 1CE | 012-23 | | BR | RCD3 |
| 00766 | 278 | 012-06 | | ALEI | 1 |
| 00767 | 1CE | 012-0D | | BR | RCD3 |
| 00768 | 3A7 | 012-1B | | RTN | |
| 00769 | 14C | 012-36 | RCD8 | LXI | 3 |
| 00770 | 151 | 012-2D | | LYI | 8 |
| 00771 | 008 | 012-1A | RCD9 | LAM | |
| 00772 | 08F | 012-34 | | AI | 15 |
| 00773 | 208 | 012-29 | | XMA | |
| 00774 | 1FC | 012-12 | | BR | RCD1 |
| 00775 | 254 | 012-24 | | DY | |
| 00776 | 286 | 012-08 | | YNEI | 6 |
| 00777 | 1DA | 012-11 | | BR | RCD9 |
| 00778 | 142 | 012-22 | | LXI | 4 |
| 00779 | 154 | 012-04 | | LYI | 2 |
| 00780 | 21F | 012-09 | | MNEI | 15 |
| 00781 | 1F8 | 012-13 | | BR | RCD6 |
| 00782 | 15C | 012-26 | | LYI | 3 |
| 00783 | 008 | 012-0C | | LAM | |
| 00784 | 278 | 012-19 | | ALEI | 13 |
| 00785 | 1F8 | 012-32 | | BR | RCD6 |
| 00786 | 1FC | 012-25 | | BR | RCD1 |
| 00787 | 358 3FF | 012-0A | YYY | CALL | RD |
| 00788 | 267 | 012-2A | | DB | |
| 00789 | 078 | 012-14 | | LAI | 1 |
| 00790 | 353 1C7 | 012-28 | | BRL | YY4 |
| 00791 | 35D 3D0 | 012-20 | | CALL | ADP |
| 00792 | 154 | 012-01 | | LYI | 2 |
| 00793 | 212 | 012-03 | | MNEI | 4 |
| 00794 | 1CA | 012-07 | | BR | YYY |
| 00795 | 34F 1D3 | 012-0F | | BRL | YY1 |

PAGE NUMBER 012 CONTAINS 064 ROM WORDS

| 00796 | | | | ORG | 13-3F |
|-------|---|---|---|-----|-------|
| *00797 | 280 | 013-3F | T13 | YNEI | 0 |
| 00798 | 1F1 | 013-3E | | BR | AMD0 |
| 00799 | 14A | 013-3D | T14 | LXI | 5 |

| ST-NO | OBJECT | | ADRS | SOURCE | STATEMENTS | |
|---|---|---|---|---|---|---|
| 00800 | 157 | | 013-3B | | LYI | 14 |
| 00801 | 210 | | 013-37 | | MNEI | 0 |
| 00802 | 351 | 1EF | 013-2F | | DRL | ANSET |
| 00803 | 357 | 1FB | 013-3C | | BRL | TIDSP |
| 00804 | 140 | | 013-33 | TSET | LXI | 0 |
| 00805 | 150 | | 013-27 | | LYI | 0 |
| 00806 | 210 | | 013-0E | T18 | MNEI | 0 |
| 00807 | 1CD | | 013-1D | | BR | T22 |
| 00808 | 280 | | 013-3A | | YNEI | 0 |
| 00809 | 1F4 | | 013-35 | | BR | T23 |
| 00810 | 278 | | 013-2B | | ALEI | 1 |
| 00811 | 07F | | 013-16 | | LAI | 15 |
| 00812 | 1F0 | | 013-2C | | BR | T19 |
| 00813 | 077 | | 013-18 | | LAI | 14 |
| 00814 | 208 | | 013-3D | T19 | XMA | |
| 00815 | 07B | | 013-21 | | LAI | 13 |
| 00816 | 054 | | 013-02 | | IY | |
| 00817 | 208 | | 013-05 | T20 | XMA | |
| 00818 | 118 | | 013-0B | | LAY | |
| 00819 | 088 | | 013-17 | | AI | 1 |
| 00820 | 142 | | 013-2E | | LXI | 4 |
| 00821 | 158 | | 013-1C | | LYI | 1 |
| 00822 | 110 | | 013-38 | | LMAIY | |
| 00823 | 3C3 | | 013-31 | AMDO | CAL | CDSP |
| 00824 | 350 | 1FF | 013-23 | T21A | BRL | T1 |
| 00825 | 054 | | 013-0D | T22 | IY | |
| 00826 | 28E | | 013-1B | | YNEI | 7 |
| 00827 | 1CE | | 013-36 | | BR | T18 |
| 00828 | 34F | 1F9 | 013-2D | | BRL | T9 |
| 00829 | 284 | | 013-34 | T23 | YNEI | 2 |
| 00830 | 1C4 | | 013-29 | | BR | T24 |
| 00831 | 278 | | 013-12 | | ALEI | 1 |
| 00832 | 1C5 | | 013-24 | | BR | T20 |
| 00833 | 279 | | 013-08 | | ALEI | 9 |
| 00834 | 1E3 | | 013-11 | | BR | T21A |
| 00835 | 1C5 | | 013-22 | | BR | T20 |
| 00836 | 28C | | 013-04 | T24 | YNEI | 3 |
| 00837 | 1E0 | | 013-09 | | BR | T26 |
| 00838 | 274 | | 013-13 | | ALEI | 2 |
| 00839 | 1F0 | | 013-26 | | BR | T19 |
| 00840 | 279 | | 013-0C | | ALEI | 9 |
| 00841 | 154 | | 013-19 | | LYI | 2 |
| 00842 | 1EA | | 013-32 | | BR | T25 |
| 00843 | 215 | | 013-25 | | MNEI | 10 |
| 00844 | 1E8 | | 013-0A | | BR | T25A |
| 00845 | 1E3 | | 013-15 | | BR | T21A |
| 00846 | 215 | | 013-2A | T25 | MNEI | 10 |
| 00847 | 1E3 | | 013-14 | | BR | T21A |
| 00848 | 15C | | 013-28 | T25A | LYI | 3 |
| 00849 | 1F0 | | 013-10 | | BR | T19 |
| 00850 | 28A | | 013-20 | T26 | YNEI | 5 |
| 00851 | 1C5 | | 013-00 | | BR | T20 |
| 00852 | 27A | | 013-01 | | ALEI | 5 |
| 00853 | 1C5 | | 013-03 | | BR | T20 |
| 00854 | 279 | | 013-07 | | ALEI | 9 |

0194387

| ST-NO | OBJECT |  | ADRS | SOURCE | STATEMENTS |  |
|-------|--------|--|------|--------|-----------|--|
| 00855 | 157 |  | 017-0F |  | BR | TZ1A |
| 00856 | 10F |  | 017-1F |  | BR | T20 |

PAGE NUMBER 015 CONTAINS 064 ROM WORDS

| ST-NO | OBJECT |  | ADRS | SOURCE | STATEMENTS |  |
|-------|--------|--|------|--------|-----------|--|
| 00857 |  |  |  |  | ORG | 14-3F |
| 00858 | 168 |  | 014-3F | DIA7 | LBI | 1 |
| 00859 | 36F |  | 014-3E |  | P | 7 |
| 00860 | 2C1 |  | 014-3D |  | LRA | 1 |
| 00861 | 2E2 |  | 014-3B |  | LRB | 2 |
| 00862 | 15A |  | 014-37 |  | LYI | 5 |
| 00863 | 090 |  | 014-2F |  | SED |  |
| 00864 | 290 |  | 014-1E |  | RED |  |
| 00865 | 07F |  | 014-3C |  | LAI | 15 |
| 00866 | 2C1 |  | 014-39 |  | LRA | 1 |
| 00867 | 202 |  | 014-33 |  | LRA | 2 |
| 00868 | 0A4 |  | 014-27 |  | SEIE |  |
| 00869 | 23C |  | 014-0E |  | LAT |  |
| 00870 | 088 |  | 014-1D |  | AI | 1 |
| 00871 | 1F5 |  | 014-3A |  | BR | ++1 |
| 00872 | 350 | 3E0 | 014-35 |  | CALL | DLY3 |
| 00873 | 154 |  | 014-16 | DIA8 | LYI | 2 |
| 00874 | 35D | 3E0 | 014-2C |  | CALL | ADPX |
| 00875 | 340 | 3C3 | 014-30 |  | CALL | CDSP |
| 00876 | 14A |  | 014-02 | DIA10 | LXI | 5 |
| 00877 | 150 |  | 014-05 |  | LYI | 0 |
| 00878 | 004 |  | 014-0B |  | SEM | 0 |
| 00879 | 141 |  | 014-17 |  | LXI | 8 |
| 00880 | 150 |  | 014-2E |  | LYI | 0 |
| 00881 | 010 |  | 014-1C | DIA12 | LMIIY | 0 |
| 00882 | 283 |  | 014-38 |  | YNEI | 12 |
| 00883 | 1DC |  | 014-31 |  | BR | DIA12 |
| 00884 | 152 |  | 014-23 |  | LYI | 4 |
| 00885 | 003 |  | 014-06 |  | XSPXY |  |
| 00886 | 14C |  | 014-0D |  | LXI | 3 |
| 00887 | 150 |  | 014-1B |  | LYI | 0 |
| 00888 | 023 |  | 014-36 |  | LBMXY |  |
| 00889 | 223 |  | 014-2D |  | XMBXY |  |
| 00890 | 054 |  | 014-1A | DIA13 | IY |  |
| 00891 | 008 |  | 014-34 |  | LAM |  |
| 00892 | 054 |  | 014-29 |  | IY |  |
| 00893 | 023 |  | 014-12 |  | LBMXY |  |
| 00894 | 054 |  | 014-24 |  | IY |  |
| 00895 | 054 |  | 014-08 |  | IY |  |
| 00896 | 110 |  | 014-11 |  | LMAIY |  |
| 00897 | 223 |  | 014-22 |  | XMBXY |  |
| 00898 | 282 |  | 014-04 |  | YNEI | 4 |
| 00899 | 1DA |  | 014-09 |  | BR | DIA13 |
| 00900 | 3CF |  | 014-13 |  | CAL | DSP |
| 00901 | 3A7 |  | 014-26 |  | RTN |  |
| 00902 | 2A4 |  | 014-0C | ASFT | REIE |  |
| 00903 | 144 |  | 014-19 |  | LXI | 2 |
| 00904 | 15D |  | 014-32 |  | LYI | 11 |
| 00905 | 124 |  | 014-25 | ASF1 | ANEM |  |
| 00906 | 1C7 |  | 014-0A |  | BR | ASF3 |
| 00907 | 054 |  | 014-15 | ASF2 | IY |  |

| ST-NO | OBJECT | ADRS | SOURCE | STATEMENTS |
|---|---|---|---|---|

00706  208  014-2A        YMA            0194387
00909  254  014-14        DY
00910  110  014-2C        LMAIY
00911  28F  014-10        YNEI    15
00912  1D5  014-20        BR      ASFZ
00913  070  014-00        LAI     0
00914  208  014-01        XMA
00915  3A4  014-03        RTNI
00916  054  014-07  ASF3  IY
00917  1E5  014-0F        BR      ASF1
00918  3A4  014-1F        RTNI

PAGE NUMBER 014 CONTAINS 064 ROM WORDS

00919                     ORG     15-3F
+00920  142      015-3F  T4    LXI     4
00921  158      015-3E        LYI     1
00922  21E      015-3D        MNEI    7
00923  1DE      015-3B        BR      T4A
00924  27B      015-37        ALEI    13
00925  1F9      015-2F        BR      T8
00926  350  1FF 015-1E  T4A   BRL     T1
00927  14A      015-39  T8    LXI     5
00928  157      015-33        LYI     14
00929  218      015-27        MNEI    1
00930  1DE      015-0E        BR      T4A
00931  345  3FF 015-1D        CALL    CAL
00932  14A      015-35        LXI     5
00933  154      015-2B        LYI     2
00934  008      015-16        LAM
00935  352  1EE 015-2C        BRL     E37
00936  210      015-30  T10   MNEI    0
00937  34D  1F3 015-21        BRL     TSET
00938  142      015-05  T11   LXI     4
00939  158      015-0B        LYI     1
00940  008      015-17        LAM
00941  08F      015-2E        AI      15
00942  208      015-1C        XMA
00943  020      015-38        LBM
00944  150      015-31        LYI     0
00945  008      015-23        LAM
00946  1F6      015-06        BR      T12
00947  08F      015-0D        AI      15
00948  110      015-1B        LMAIY
00949  040      015-36  T12   LXA
00950  260      015-2D        LAB
00951  050      015-1A        LYA
00952  21B      015-34        MNEI    13
00953  070      015-29        LAI     0
00954  208      015-12        XMA
00955  34D  1FF 015-24        BRL     T13
00956  280      015-11        YNEI    0
00957  1C5      015-22        BR      T11
00958  34D  1FD 015-04        BRL     T14
00959  07D      015-13  YY1   LAI     11
00960  3C0      015-26        CAL     TOT

0194387

| ST-NO | OBJECT | ADRS | SOURCE | STATEMENTS | |
|---|---|---|---|---|---|
| 00961 | 151 | 015-00 | | LYI | 9 |
| 00962 | 290 | 015-17 | | RED | |
| 00963 | 0E1 | 015-72 | | LDR | 1 |
| 00964 | 090 | 015·25 | | SED | |
| 00965 | 064 | 015-0A | | I8 | |
| 00966 | 1C7 | 015-15 | | BR | YY3 |
| 00967 | 146 | 015-2A | | LXI | 6 |
| 00968 | 150 | 015-14 | | LYI | 0 |
| 00969 | 01F | 015-28 | | LMIIY | 15 |
| 00970 | 1E8 | 015-10 | | BR | *-1 |
| 00971 | 14E | 015-20 | | LXI | 7 |
| 00972 | 01F | 015-00 | | LMIIY | 15 |
| 00973 | 1C0 | 015-01 | | BR | *-1 |
| 00974 | 3A7 | 015-03 | | RTN | |
| 00975 | 074 | 015-07 | YY3 | LAI | 2 |
| 00976 | 353 1C7 | 015-0F | | BRL | YY4 |

PAGE NUMBER 015 CONTAINS 064 ROM WORDS

| ST-NO | OBJECT | ADRS | SOURCE | STATEMENTS | |
|---|---|---|---|---|---|
| 00977 | | | | ORG | 16-3F |
| *00978 | 153 | 016-3F | T1 | LYI | 12 |
| 00979 | 094 | 016-3E | | TD | |
| 00980 | 1EF | 016-3D | | BR | T2 |
| 00981 | 35C 1F7 | 016-3B | | BRL | MD0 |
| 00982 | 3D0 | 016-2F | T2 | CAL | KEY |
| 00983 | 1FF | 016-1E | | BR | T1 |
| 00984 | 275 | 016-3C | | ALEI | 10 |
| 00985 | 34F 1F0 | 016-39 | | BRL | T10 |
| 00986 | 21F | 016-27 | | MNEI | 15 |
| 00987 | 34F 1FF | 016-0E | | BRL | T4 |
| 00988 | 142 | 016-3A | | LXI | 4 |
| 00989 | 158 | 016-35 | | LYI | 1 |
| 00990 | 21E | 016-2B | | MNEI | 7 |
| 00991 | 1FF | 016-16 | | BR | T1 |
| 00992 | 14A | 016-2C | | LXI | 5 |
| 00993 | 157 | 016-18 | | LYI | !4 |
| 00994 | 210 | 016-30 | | MNEI | 0 |
| 00995 | 1CC | 016-21 | | BR | T5 |
| 00996 | 140 | 016-02 | | LXI | 0 |
| 00997 | 150 | 016-05 | | LYI | 0 |
| 00998 | 009 | 016-0B | | LAMX | |
| 00999 | 142 | 016-17 | | LXI | 4 |
| 01000 | 159 | 016-2E | | LYI | 9 |
| 01001 | 2A4 | 016-1C | | REIE | |
| 01002 | 20B | 016-38 | | XMAXY | |
| 01003 | 154 | 016-31 | | LYI | 2 |
| 01004 | 008 | 016-23 | T3 | LAM | |
| 01005 | 054 | 016-06 | | IY | |
| 01006 | 023 | 016-0D | | LBMXY | |
| 01007 | 054 | 016-1B | | IY | |
| 01008 | 110 | 016-36 | | LMAIY | |
| 01009 | 223 | 016-2D | | XMBXY | |
| 01010 | 286 | 016-1A | | YNEI | 6 |
| 01011 | 15A | 016-34 | | LYI | 5 |
| 01012 | 1E3 | 016-29 | | BR | T3 |
| 01013 | 142 | 016-12 | | LXI | 4 |

0194387

| ST-NO | OBJECT | ADRS | SOURCE STATEMENTS | |
|---|---|---|---|---|
| 01014 | 157 | 016-24 | LYI | 14 |
| 01015 | 015 | 016-08 | LMIIY | 10 |
| 01016 | 015 | 015-11 | LMIIY | 10 |
| 01017 | 1C4 | 016-22 | BR | *+1 |
| 01018 | 170 | 016-04 | LTI | 0 |
| 01019 | 0A4 | 016-09 | SEIE | |
| 01020 | 35C 1EB | 016-13 | BRL | MINA |
| 01021 | 345 3FF | 016-0C | T5 CALL | CAL |
| 01022 | 352 1C2 | 016-32 | BRL | ATSET |
| 01023 | 23C | 016-0A | DLY1 LAT | |
| 01024 | 08A | 016-15 | AI | 5 |
| 01025 | 1E0 | 016-2A | BR | DLY3 |
| 01026 | 1E0 | 016-14 | BR | DLY3 |
| 01027 | 23C | 016-28 | DLY2 LAT | |
| 01028 | 08F | 016-10 | AI | 15 |
| 01029 | 143 | 016-20 | DLY3 LXI | 12 |
| 01030 | 15C | 016-00 | LYI | 3 |
| 01031 | 208 | 016-01 | XMA | |
| 01032 | 23C | 016-03 | DLY4 LAT | |
| 01033 | 124 | 016-07 | ANEM | |
| 01034 | 1C3 | 016-0F | BR | DLY4 |
| 01035 | 3A7 | 016-1F | RTN | |

PAGE NUMBER 016 CONTAINS 064 ROM WORDS

| ST-NO | OBJECT | ADRS | SOURCE STATEMENTS | |
|---|---|---|---|---|
| 01036 | | | ORG | 17-3F |
| *01037 | 14A | 017-3F | ALARM LXI | 5 |
| 01038 | 157 | 017-3E | LYI | 14 |
| 01039 | 018 | 017-3D | LMIIY | 1 |
| 01040 | 010 | 017-3B | LMIIY | 0 |
| 01041 | 1EF | 017-37 | BR | *+1 |
| 01042 | 3EC | 017-2F | ANSET CAL | WCL |
| 01043 | 14A | 017-1E | LXI | 5 |
| 01044 | 15F | 017-3C | LYI | 15 |
| 01045 | 008 | 017-39 | LAM | |
| 01046 | 141 | 017-33 | LXI | B |
| 01047 | 208 | 017-27 | XMA | |
| 01048 | 3CF | 017-0E | CAL | DSP |
| 01049 | 16C | 017-1D | LBI | 3 |
| 01050 | 35D 3C6 | 017-3A | CALL | D2 |
| 01051 | 153 | 017-2B | AL1 LYI | 12 |
| 01052 | 094 | 017-16 | TD | |
| 01053 | 1E1 | 017-2C | BR | AL2 |
| 01054 | 35C 1F7 | 017-18 | BRL | MDO |
| 01055 | 3D0 | 017-21 | AL2 CAL | KEY |
| 01056 | 1EB | 017-02 | BR | AL1 |
| 01057 | 275 | 017-05 | ALEI | 10 |
| 01058 | 1E4 | 017-0B | BR | AL4 |
| 01059 | 217 | 017-17 | MNEI | 14 |
| 01060 | 1CD | 017-2E | BR | AL2A |
| 01061 | 15F | 017-1C | LYI | 15 |
| 01062 | 210 | 017-38 | MNEI | 0 |
| 01063 | 34B 3FF | 017-31 | CALL | AISHU |
| 01064 | 1EF | 017-06 | BR | ANSET |
| 01065 | 21B | 017-0D | AL2A MNEI | 13 |
| 01066 | 1EB | 017-1B | BR | AL1 |

| ST-NO | OBJECT | ADRS | SOURCE | STATEMENTS |
|---|---|---|---|---|

0194387

| ST-NO | OBJECT | | ADRS | SOURCE | STATEMENTS | |
|---|---|---|---|---|---|---|
| 01057 | 15F | | 017-36 | | LYI | 15 |
| 01068 | 210 | | 017-2D | | MNEI | 0 |
| 01069 | 008 | | 017-1A | | LAM | |
| 01070 | 35A | 1C5 | 017-34 | | BRL | M13A |
| 01071 | 1EB | | 017-12 | | BR | AL1 |
| 01072 | 210 | | 017-24 | AL4 | MNEI | 0 |
| 01073 | 15F | | 017-08 | | LYI | 15 |
| 01074 | 1D9 | | 017-11 | | BR | AL5 |
| 01075 | 210 | | 017-22 | | MNEI | 0 |
| 01076 | 070 | | 017-04 | | LAI | 0 |
| 01077 | 208 | | 017-09 | | XMA | |
| 01078 | 1EF | | 017-13 | | BR | ANSET |
| 01079 | 357 | 1FB | 017-26 | | BRL | TIDSP |
| 01080 | 210 | | 017-19 | AL5 | MNEI | 0 |
| 01081 | 1E9 | | 017-32 | | BR | AL6 |
| 01082 | 27A | | 017-25 | | ALEI | 5 |
| 01083 | 1EA | | 017-0A | | BR | AL5A |
| 01084 | 1EB | | 017-15 | | BR | AL1 |
| 01085 | 208 | | 017-2A | AL5A | XMA | |
| 01086 | 1EF | | 017-14 | | BR | ANSET |
| 01087 | 154 | | 017-28 | AL6 | LYI | 2 |
| 01088 | 218 | | 017-10 | | MNEI | 1 |
| 01089 | 1C1 | | 017-20 | | BR | AL7 |
| 01090 | 1C7 | | 017-00 | | BR | AL8 |
| 01091 | 215 | | 017-01 | AL7 | MNEI | 10 |
| 01092 | 1EB | | 017-03 | | BR | AL1 |
| 01093 | 34D | 1F3 | 017-07 | AL8 | BRL | TSET |

PAGE NUMBER 017 CONTAINS 063 ROM WORDS

| ST-NO | OBJECT | | ADRS | SOURCE | STATEMENTS | |
|---|---|---|---|---|---|---|
| 01094 | | | | | ORG | 18-3F |
| *01095 | 3C0 | | 018-3F | E35B | CAL | TOT |
| 01096 | 345 | 3C9 | 018-3E | | CALL | A2 |
| 01097 | 3C0 | | 018-3B | | CAL | TOT |
| 01098 | 077 | | 018-37 | | LAI | 14 |
| 01099 | 3C0 | | 018-2F | | CAL | TOT |
| 01100 | 147 | | 018-1E | | LXI | 14 |
| 01101 | 15E | | 018-3C | | LYI | 7 |
| 01102 | 218 | | 018-39 | | MNEI | 1 |
| 01103 | 1E1 | | 018-33 | | BR | E35A |
| 01104 | 35C | 3E0 | 018-27 | | CALL | ZZZ |
| 01105 | 3C0 | | 018-1D | | CAL | TOT |
| 01106 | 345 | 3C9 | 018-3A | | CALL | A2 |
| 01107 | 088 | | 018-2B | | AI | 1 |
| 01108 | 1EC | | 018-16 | | BR | *+1 |
| 01109 | 3C0 | | 018-2C | | CAL | TOT |
| 01110 | 077 | | 018-18 | | LAI | 14 |
| 01111 | 3C0 | | 018-30 | | CAL | TOT |
| 01112 | 3EE | | 018-21 | E35A | CAL | CCL |
| 01113 | 34A | 3FF | 018-02 | ATSET | CALL | CRD |
| 01114 | 35C | 1F7 | 018-0B | E36 | BRL | MDO |
| 01115 | 142 | | 018-2E | E37 | LXI | 4 |
| 01116 | 150 | | 018-1C | | LYI | 0 |
| 01117 | 218 | | 018-38 | | MNEI | 1 |
| 01118 | 1F6 | | 018-31 | | BR | E38 |
| 01119 | 158 | | 018-23 | | LYI | 1 |

0194387

| ST-NO | OBJECT | ADRS | SOURCE | STATEMENTS | |
|-------|--------|------|--------|-----------|---|
| 01120 | 21A | 018-06 | | MNEI | 5 |
| 01121 | 1F6 | 018-03 | | BR | E39 |
| 01122 | 1C0 | 018-1B | | BR | E41 |
| 01123 | 0F0 | 018-36 | E38 | XAMR | 0 |
| 01124 | 142 | 018-2D | | LXI | 4 |
| 01125 | 150 | 018-1A | | LYI | 0 |
| 01126 | 008 | 018-34 | | LAM | |
| 01127 | 0F1 | 018-29 | | XAMR | 1 |
| 01128 | 158 | 018-12 | | LYI | 1 |
| 01129 | 008 | 018-24 | | LAM | |
| 01130 | 050 | 018-08 | | LYA | |
| 01131 | 0F1 | 018-11 | | XAMR | 1 |
| 01132 | 040 | 018-22 | | LXA | |
| 01133 | 0F0 | 018-04 | | XAMR | 0 |
| 01134 | 209 | 018-09 | | XMA | |
| 01135 | 142 | 018-13 | | LXI | 4 |
| 01136 | 158 | 018-26 | | LYI | 1 |
| 01137 | 008 | 018-0C | | LAM | |
| 01138 | 088 | 018-19 | | AI | 1 |
| 01139 | 208 | 018-32 | | XMA | |
| 01140 | 1D5 | 018-25 | | BR | E39 |
| 01141 | 1E0 | 018-0A | | BR | E40 |
| 01142 | 150 | 018-15 | E39 | LYI | 0 |
| 01143 | 008 | 018-2A | | LAM | |
| 01144 | 088 | 018-14 | | AI | 1 |
| 01145 | 208 | 018-28 | E39A | XMA | |
| 01146 | 1E0 | 018-10 | | BR | *+1 |
| 01147 | 3C3 | 018-20 | E40 | CAL | CDSP |
| 01148 | 353 1FE | 018-00 | E41 | BRL | E28 |

PAGE NUMBER 018 CONTAINS 060 ROM WORDS

| ST-NO | OBJECT | ADRS | SOURCE | STATEMENTS | |
|-------|--------|------|--------|-----------|---|
| 01149 | | | | ORG | 19-3F |
| *01150 | 01F | 019-3F | E27 | LMIIY | 15 |
| 01151 | 153 | 019-3E | E28 | LYI | 12 |
| 01152 | 094 | 019-3D | | TD | |
| 01153 | 1EF | 019-3B | | BR | E29 |
| 01154 | 1D5 | 019-37 | | BR | E33 |
| 01155 | 3D0 | 019-2F | E29 | CAL | KEY |
| 01156 | 1FE | 019-1E | | BR | E28 |
| 01157 | 210 | 019-3C | | MNEI | 0 |
| 01158 | 1E2 | 019-39 | | BR | E32 |
| 01159 | 140 | 019-33 | | LXI | 0 |
| 01160 | 150 | 019-27 | | LYI | 0 |
| 01161 | 210 | 019-0E | | MNEI | 0 |
| 01162 | 1C5 | 019-1D | | BR | E30 |
| 01163 | 14A | 019-3A | | LXI | 5 |
| 01164 | 157 | 019-35 | | LYI | 14 |
| 01165 | 218 | 019-29 | | MNEI | 1 |
| 01166 | 353 1FE | 019-16 | | BRL | E28 |
| 01167 | 347 3DA | 019-18 | | CALL | ALC |
| 01168 | 34D 1F1 | 019-21 | | BRL | AMD0 |
| 01169 | 142 | 019-05 | E30 | LXI | 4 |
| 01170 | 158 | 019-0B | | LYI | 1 |
| 01171 | 008 | 019-17 | | LAM | |
| 01172 | 08F | 019-2E | | AI | 15 |

0194387

| ST-NO | OBJECT | ADRS | SOURCE STATEMENTS | | |
|---|---|---|---|---|---|
| 01173 | 008 | 019-10 | | XMA | |
| 01174 | 150 | 019-08 | | LYI | 0 |
| 01175 | 1DB | 019-31 | | BR | E31 |
| 01176 | 008 | 019-23 | | LAM | |
| 01177 | 08F | 019-06 | | AI | 15 |
| 01178 | 208 | 019-0D | | XMA | |
| 01179 | 008 | 019-1B | E31 | LAM | |
| 01180 | 0F0 | 019-36 | | XAMR | 0 |
| 01181 | 158 | 019-2D | | LYI | 1 |
| 01182 | 008 | 019-1A | | LAM | |
| 01183 | 050 | 019-34 | | LYA | |
| 01184 | 0F0 | 019-29 | | XAMR | 0 |
| 01185 | 040 | 019-12 | | LXA | |
| 01186 | 070 | 019-24 | | LAI | 0 |
| 01187 | 352 1E8 | 019-08 | | BRL | E39A |
| 01188 | 27B | 019-22 | E32 | ALEI | 13 |
| 01189 | 352 1EE | 019-04 | | BRL | E37 |
| 01190 | 21F | 019-13 | | MNEI | 15 |
| 01191 | 1FE | 019-26 | | BR | E28 |
| 01192 | 140 | 019-0C | | LXI | 0 |
| 01193 | 150 | 019-19 | | LYI | 0 |
| 01194 | 210 | 019-32 | | MNEI | 0 |
| 01195 | 352 1C2 | 019-25 | | BRL | ATSET |
| 01196 | 14A | 019-15 | E35 | LXI | 5 |
| 01197 | 157 | 019-2A | | LYI | 14 |
| 01198 | 210 | 019-14 | | MNEI | 0 |
| 01199 | 352 1CB | 019-28 | | BRL | E36 |
| 01200 | 35C 3E0 | 019-20 | | CALL | ZZZ |
| 01201 | 352 1FF | 019-01 | | BRL | E35B |
| 01202 | 141 | 019-07 | YY4 | LXI | 8 |
| 01203 | 35B 1C7 | 019-0F | | BRL | YY4A |

PAGE NUMBER 019 CONTAINS 064 ROM WORDS

| 01204 | | | | ORG | 20-3F |
|---|---|---|---|---|---|
| *01205 | 1A3 | 020-3F | E13 | TIB | |
| 01206 | 1DD | 020-3E | | BR | E21 |
| 01207 | 153 | 020-3D | | LYI | 12 |
| 01208 | 094 | 020-3B | | TD | |
| 01209 | 1FF | 020-37 | | BR | E13 |
| 01210 | 1E7 | 020-2F | | BR | E19 |
| 01211 | 153 | 020-1E | E18 | LYI | 12 |
| 01212 | 094 | 020-3C | | TD | |
| 01213 | 355 1CA | 020-39 | | BRL | E12 |
| 01214 | 353 1D5 | 020-27 | E19 | BRL | E35 |
| 01215 | 151 | 020-1D | E21 | LYI | 8 |
| 01216 | 2A4 | 020-3A | | REIE | |
| 01217 | 290 | 020-35 | | RED | |
| 01218 | 0C1 | 020-2B | | LAR | 1 |
| 01219 | 090 | 020-16 | | SED | |
| 01220 | 0A4 | 020-2C | | SEIE | |
| 01221 | 14C | 020-18 | | LXI | 3 |
| 01222 | 156 | 020-30 | | LYI | 6 |
| 01223 | 124 | 020-21 | | ANEM | |
| 01224 | 1E9 | 020-02 | | BR | E23 |
| 01225 | 0F1 | 020-05 | | XAMR | 1 |

0194387

| ST-NO | OBJECT | | ADRS | SOURCE | STATEMENTS | |
|---|---|---|---|---|---|---|
| 01226 | 08F | | 020-0B | | AI | 1C |
| 01227 | 1C4 | | 020-17 | | BP | E26 |
| 01228 | 3F3 | | 020-2E | E22 | CAL | DCL |
| 01229 | 168 | | 020-1C | | LBI | 1 |
| 01230 | 35D | 3C6 | 020-38 | | CALL | D2 |
| 01231 | 14E | | 020-23 | | LXI | 7 |
| 01232 | 156 | | 020-06 | | LYI | 6 |
| 01233 | 01D | | 020-0D | | LMIIY | 11 |
| 01234 | 01A | | 020-1B | | LMIIY | 5 |
| 01235 | 01F | | 020-36 | | LMIIY | 15 |
| 01236 | 01C | | 020-2D | | LMIIY | 3 |
| 01237 | 353 | 1FF | 020-1A | | BRL | E27 |
| 01238 | 0F1 | | 020-29 | E23 | XAMR | 1 |
| 01239 | 270 | | 020-12 | | ALEI | 0 |
| 01240 | 0F1 | | 020-24 | | XAMR | 1 |
| 01241 | 1D5 | | 020-08 | | BR | E25 |
| 01242 | 355 | 1C4 | 020-11 | | BRL | E10 |
| 01243 | 0F1 | | 020-04 | E24 | XAMR | 1 |
| 01244 | 142 | | 020-09 | | LXI | 4 |
| 01245 | 15E | | 020-13 | | LYI | 7 |
| 01246 | 218 | | 020-26 | | MNEI | 1 |
| 01247 | 1EE | | 020-0C | | BR | E22 |
| 01248 | 3F3 | | 020-19 | | CAL | DCL |
| 01249 | 164 | | 020-32 | | LBI | 2 |
| 01250 | 35D | 3C6 | 020-25 | | CALL | D2 |
| 01251 | 35D | 3FF | 020-15 | E25 | CALL | A1 |
| 01252 | 3C0 | | 020-14 | | CAL | TOT |
| 01253 | 073 | | 020-28 | | LAI | 12 |
| 01254 | 3C0 | | 020-10 | | CAL | TOT |
| 01255 | 345 | 3C9 | 020-20 | | CALL | A2 |
| 01256 | 088 | | 020-01 | | AI | 1 |
| 01257 | 156 | | 020-03 | | LYI | 6 |
| 01258 | 110 | | 020-07 | | LMAIY | |
| 01259 | 355 | 1D9 | 020-0F - | | BRL | E11 |

PAGE NUMBER 020 CONTAINS 064 ROM WORDS

| 01260 | | | | | ORG | 21-3F |
|---|---|---|---|---|---|---|
| +01261 | 217 | | 021-3F | E5 | MNEI | 14 |
| 01262 | 1D7 | | 021-3E | | BR | E7 |
| 01263 | 348 | 3FF | 021-3D | | CALL | OK |
| 01264 | 1DD | | 021-37 | | BR | E14A |
| 01265 | 347 | 3FF | 021-2F | E5A | CALL | ADSET |
| 01266 | 34B | 3D7 | 021-3C | | CALL | ISHU |
| 01267 | 1C5 | | 021-33 | | BR | E16A |
| 01268 | 275 | | 021-27 | E14 | ALEI | 10 |
| 01269 | 1F5 | | 021-0E | | BR | E15 |
| 01270 | 356 | 1F6 | 021-1D | E14A | BRL | E3 |
| 01271 | 142 | | 021-35 | E15 | LXI | 4 |
| 01272 | 156 | | 021-2B | | LYI | 6 |
| 01273 | 208 | | 021-16 | | XMA | |
| 01274 | 15A | | 021-2C | | LYI | 5 |
| 01275 | 279 | | 021-18 | | ALEI | 9 |
| 01276 | 1C2 | | 021-30 | | BR | E16 |
| 01277 | 070 | | 021-21 | | LAI | 0 |
| 01278 | 208 | | 021-02 | E16 | XMA | |

0194387

| ST-NO | OBJECT | ADRS | label | mnemonic | operand |
|-------|--------|------|-------|----------|---------|
| 01279 | 006 1FF | 021-05 | EY6A | ERL | E1 |
| 01280 | 21F | 021-17 | E9 | MNEI | 15 |
| 01281 | 1E7 | 021-2E | | BR | E14 |
| 01282 | 348 3FF | 021-1C | | CALL | OK |
| 01283 | 1DD | 021-31 | | BR | E14A |
| 01284 | 142 | 021-23 | | LXI | 4 |
| 01285 | 151 | 021-06 | | LYI | 8 |
| 01286 | 210 | 021-0D | | MNEI | 0 |
| 01287 | 1DD | 021-19 | | BR | E17 |
| 01288 | 078 | 021-36 | | LAI | 1 |
| 01289 | 0F1 | 021-2D | | XAMR | 1 |
| 01290 | 14E | 021-1A | | LXI | 7 |
| 01291 | 152 | 021-34 | | LYI | 4 |
| 01292 | 01D | 021-29 | | LMIIY | 11 |
| 01293 | 01A | 021-12 | | LMIIY | 5 |
| 01294 | 017 | 021-24 | | LMIIY | 14 |
| 01295 | 01E | 021-08 | | LMIIY | 7 |
| 01296 | 01D | 021-11 | | LMIIY | 11 |
| 01297 | 016 | 021-22 | | LMIIY | 6 |
| 01298 | 35C 3E0 | 021-04 | E10 | CALL | ZZZ |
| 01299 | 3C0 | 021-13 | | CAL | TOT |
| 01300 | 345 3C9 | 021-26 | | CALL | A2 |
| 01301 | 3C0 | 021-19 | E11 | CAL | TOT |
| 01302 | 07B | 021-32 | | LAI | 13 |
| 01303 | 3C0 | 021-25 | | CAL | TOT |
| 01304 | 1A3 | 021-0A | E12 | TI0 | |
| 01305 | 354 1DE | 021-15 | | BRL | E18 |
| 01306 | 354 1FF | 021-14 | | BRL | E13 |
| 01307 | 34C 3FF | 021-10 | E17 | CALL | RCD |
| 01308 | 357 1D1 | 021-00 | | BRL | M44A |
| 01309 | 35D 3F1 | 021-03 | R2A | CALL | D1 |
| 01310 | 35C 1FF | 021-0F | | BRL | R3 |

PAGE NUMBER 021 CONTAINS 064 ROM WORDS

| ST-NO | OBJECT | ADRS | label | mnemonic | operand |
|-------|--------|------|-------|----------|---------|
| 01311 | | | | ORG | 22-3F |
| *01312 | 14A | 022-3F | M29A | LXI | 5 |
| 01313 | 158 | 022-3E | | LYI | 1 |
| 01314 | 010 | 022-3D | | LMIIY | 0 |
| 01315 | 210 | 022-3B | | MNEI | 0 |
| 01316 | 1C9 | 022-37 | | BR | M31 |
| 01317 | 342 3C0 | 022-2F | | CALL | ONH |
| 01318 | 070 | 022-3C | ENTRY | LAI | 0 |
| 01319 | 142 | 022-39 | DIRECT | LXI | 4 |
| 01320 | 151 | 022-33 | | LYI | 8 |
| 01321 | 208 | 022-27 | | XMA | |
| 01322 | 15A | 022-0E | | LYI | 5 |
| 01323 | 010 | 022-1D | | LMIIY | 0 |
| 01324 | 010 | 022-3A | | LMIIY | 0 |
| 01325 | 3EC | 022-35 | E1 | CAL | WCL |
| 01326 | 142 | 022-28 | | LXI | 4 |
| 01327 | 15A | 022-16 | | LYI | 5 |
| 01328 | 020 | 022-2C | | LBM | |
| 01329 | 156 | 022-18 | | LYI | 6 |
| 01330 | 008 | 022-30 | | LAM | |
| 01331 | 141 | 022-21 | | LXI | 8 |

| ST-NO | OBJECT | ADRS | SOURCE STATEMENTS | | |
|---|---|---|---|---|---|
| 01332 | 15F | 022-02 | | .Y7 | .5 |
| 01333 | 114 | 022-05 | | LMADY | |
| 01334 | 220 | 022-0B | | YMB | |
| 01335 | 3CF | 022-17 | | CAL | DSP |
| 01336 | 142 | 022-2E | | LXI | 4 |
| 01337 | 151 | 022-1C | | LYI | 8 |
| 01338 | 210 | 022-38 | | MNEI | 0 |
| 01339 | 16C | 022-31 | | LBI | I |
| 01340 | 1CD | 022-23 | | BR | E2 |
| 01341 | 164 | 022-06 | | LBI | 2 |
| 01342 | 35D 3F1 | 022-0D | E2 | CALL | D1 |
| 01343 | 153 | 022-36 | E3 | LYI | 12 |
| 01344 | 094 | 022-2D | | TD | |
| 01345 | 1D2 | 022-1A | | BR | E4 |
| 01346 | 35C 1F7 | 022-34 | | BRL | MDO |
| 01347 | 3D0 | 022-12 | E4 | CAL | KEY |
| 01348 | 1F6 | 022-24 | | BR | E3 |
| 01349 | 210 | 022-08 | | MNEI | 0 |
| 01350 | 355 1FF | 022-11 | | BRL | E5 |
| 01351 | 1F6 | 022-04 | | BR | E3 |
| 01352 | 217 | 022-09 | M31 | MNEI | 14 |
| 01353 | 1D9 | 022-13 | | BR | M33 |
| 01354 | 357 1FF | 022-26 | | BRL | M31A |
| 01355 | 21F | 022-19 | M33 | MNEI | 15 |
| 01356 | 1C1 | 022-32 | | BR | M34 |
| 01357 | 142 | 022-25 | | LXI | 4 |
| 01358 | 154 | 022-0A | | LYI | 2 |
| 01359 | 01F | 022-15 | | LMIIY | 15 |
| 01360 | 01B | 022-2A | | LMIIY | 13 |
| 01361 | 016 | 022-14 | | LMIIY | 6 |
| 01362 | 34C 3FD | 022-28 | | CALL | RCDD |
| 01363 | 357 1D1 | 022-20 | | BRL | M44A |
| 01364 | 21B | 022-01 | M34 | MNEI | 13 |
| 01365 | 35B 1F6 | 022-03 | | BRL | M4 |
| 01366 | 078 | 022-0F | | LAI | 1 |
| 01367 | 1F9 | 022-1F | | BR | DIRECT |

PAGE NUMBER 022 CONTAINS 064 ROM WORDS

| 01368 | | | | ORG | 23-3F |
| *01369 | 3E1 | 023-3F | M31A | CAL | CCLX |
| 01370 | 342 3C0 | 023-3E | | CALL | ONH |
| 01371 | 3F3 | 023-3B | TIDSP | CAL | DCL |
| 01372 | 168 | 023-37 | | LBI | 1 |
| 01373 | 35D 3F1 | 023-2F | | CALL | D1 |
| 01374 | 153 | 023-3C | M32 | LYI | 12 |
| 01375 | 094 | 023-39 | | TD | |
| 01376 | 1DD | 023-33 | | BR | M36 |
| 01377 | 35C 1F7 | 023-27 | | BRL | MDO |
| 01378 | 340 3D0 | 023-1D | M36 | CALL | KEY |
| 01379 | 1FC | 023-35 | | BR | M32 |
| 01380 | 21B | 023-2B | | MNEI | 13 |
| 01381 | 1F0 | 023-16 | | BR | M37 |
| 01382 | 351 1FF | 023-2C | | BRL | ALARM |
| 01383 | 218 | 023-30 | M37 | MNEI | 1 |
| 01384 | 1C5 | 023-21 | | BR | M38 |

0194387

| ST-NO | OBJECT | ADRS | SOURCE STATEMENTS | |
|---|---|---|---|---|
| 01385 | 1D7 | 023-03 | | .BR | M37 |
| 01386 | 215 | 023-05 | M3E | MNEI | 10 |
| 01387 | 1FC | 023-08 | | BR | M32 |
| 01388 | 14A | 023-17 | M39 | LXI | 5 |
| 01389 | 157 | 023-2E | | LYI | 14 |
| 01390 | 010 | 023-1C | | LMIIY | 0 |
| 01391 | 34D 1F3 | 023-39 | | BRL | TSET |
| 01392 | 3EC | 023-23 | M43B | CAL | WOL |
| 01393 | 142 | 023-06 | | LXI | 4 |
| 01394 | 15A | 023-0D | | LYI | 5 |
| 01395 | 020 | 023-1B | | LBM | |
| 01396 | 156 | 023-36 | | LYI | 6 |
| 01397 | 008 | 023-2D | | LAM | |
| 01398 | 141 | 023-1A | | LXI | 8 |
| 01399 | 114 | 023-34 | | LMADY | |
| 01400 | 220 | 023-29 | | XMB | |
| 01401 | 3CF | 023-12 | | CAL | DSP |
| 01402 | 350 3EB | 023-24 | | CALL | DLY2 |
| 01403 | 140 | 023-11 | M44A | LXI | 0 |
| 01404 | 150 | 023-22 | | LYI | 0 |
| 01405 | 210 | 023-04 | | MNEI | 0 |
| 01406 | 1CA | 023-09 | M45 | BR | M45A |
| 01407 | 34B 3DC | 023-13 | | CALL | EMP |
| 01408 | 350 3EB | 023-0C | | CALL | DLY2 |
| 01409 | 35C 1EB | 023-32 | | BRL | MINA |
| 01410 | 142 | 023-0A | M45A | LXI | 4 |
| 01411 | 15A | 023-15 | | LYI | 5 |
| 01412 | 210 | 023-2A | | MNEI | 0 |
| 01413 | 1E0 | 023-14 | | BR | M45B |
| 01414 | 156 | 023-28 | | LYI | 6 |
| 01415 | 218 | 023-10 | | MNEI | 1 |
| 01416 | 35B 1C2 | 023-20 | M45B | BRL | DIALM |
| 01417 | 359 1E7 | 023-01 | | BRL | M21 |
| 01418 | 208 | 023-07 | YY5 | XMA | |
| 01419 | 3CF | 023-0F | | CAL | DSB |
| 01420 | 1DF | 023-1F | | BR | *+0 |

PAGE NUMBER 023 CONTAINS 064 ROM WORDS

| 01421 | | | | ORG | 24-3F |
| *01422 | 358 3F3 | 024-3F | RD | CALL | RDX |
| 01423 | 07F | 024-3D | | LAI | 15 |
| 01424 | 2C1 | 024-3B | | LRA | 1 |
| 01425 | 2C2 | 024-37 | | LRA | 2 |
| 01426 | 2D2 | 024-2F | | REDD | 2 |
| 01427 | 0E1 | 024-1E | | LBR | 1 |
| 01428 | 0D2 | 024-3C | | SEDD | 2 |
| 01429 | 3A4 | 024-39 | | RTNI | |
| 01430 | 2A4 | 024-33 | RDX | REIE | |
| 01431 | 142 | 024-27 | | LXI | 4 |
| 01432 | 154 | 024-0E | | LYI | 2 |
| 01433 | 200 | 024-1D | | TM | 0 |
| 01434 | 0D0 | 024-3A | | SEDD | 0 |
| 01435 | 1D6 | 024-35 | | BR | RD1 |
| 01436 | 2D0 | 024-2B | | REDD | 0 |
| 01437 | 201 | 024-16 | RD1 | TM | 1 |

| ST-NO | OBJECT | ADRS | SOURCE | STATEMENTS | |
|-------|--------|------|--------|-----------|---|

0194387

| ST-NO | OBJECT | | ADRS | SOURCE | STATEMENTS | |
|-------|--------|---|------|--------|-----------|---|
| 01438 | 0D1 | | 024-2C | | SEDD | 1 |
| 01439 | 1E1 | | 024-18 | | BR | RDD |
| 01440 | 2D1 | | 024-30 | REDD | 1 | |
| 01441 | 15C | | 024-21 | RD2 | LYI | 3 |
| 01442 | 008 | | 024-02 | | LAM | |
| 01443 | 202 | | 024-05 | | LRA | 2 |
| 01444 | 152 | | 024-0B | | LYI | 4 |
| 01445 | 008 | | 024-17 | | LAM | |
| 01446 | 2C1 | | 024-2E | | LRA | 1 |
| 01447 | 15B | | 024-1C | | LYI | 13 |
| 01448 | 090 | | 024-38 | | SED | |
| 01449 | 290 | | 024-31 | | RED | |
| 01450 | 3A7 | | 024-23 | | RTN | |
| 01451 | 24F | | 024-06 | M4A | TC | |
| 01452 | 1F6 | | 024-0D | | BR | M41 |
| 01453 | 1ED | | 024-1B | | BR | M42 |
| 01454 | 08A | | 024-36 | M41 | AI | 5 |
| 01455 | 279 | | 024-2D | M42 | ALEI | 9 |
| 01456 | 1E9 | | 024-1A | | BR | M43 |
| 01457 | 064 | | 024-34 | | IB | |
| 01458 | 156 | | 024-29 | M43 | LYI | 6 |
| 01459 | 114 | | 024-12 | | LMADY | |
| 01460 | 220 | | 024-24 | | XMB | |
| 01461 | 210 | | 024-08 | | MNEI | 0 |
| 01462 | 1E8 | | 024-11 | | BR | M43C |
| 01463 | 156 | | 024-22 | | LYI | 6 |
| 01464 | 218 | | 024-04 | | MNEI | 1 |
| 01465 | 1E8 | | 024-09 | | BR | M43C |
| 01466 | 14A | | 024-13 | | LXI | 5 |
| 01467 | 158 | | 024-26 | | LYI | 1 |
| 01468 | 210 | | 024-0C | | MNEI | 0 |
| 01469 | 359 | 1E7 | 024-19 | | BRL | M21 |
| 01470 | 018 | | 024-25 | | LMIIY | 1 |
| 01471 | 34C | 3FF | 024-0A | M43A | CALL | RCD |
| 01472 | 357 | 1E3 | 024-2A | M43BA | BRL | M43B |
| 01473 | 14A | | 024-28 | M43C | LXI. | 5 |
| 01474 | 158 | | 024-10 | | LYI | 1 |
| 01475 | 218 | | 024-20 | | MNEI | 1 |
| 01476 | 10A | | 024-00 | | BR | M43A |
| 01477 | 347 | 3FF | 024-01 | | CALL | ADSET |
| 01478 | 34C | 3FB | 024-07 | | CALL | RCD0 |
| 01479 | 1EA | | 024-1F | | BR | M43BA |

PAGE NUMBER 024 CONTAINS 064 ROM WORDS

| ST-NO | OBJECT | ADRS | SOURCE | STATEMENTS | |
|-------|--------|------|--------|-----------|---|
| 01480 | | | | ORG | 25-3F |
| *01481 | 2A4 | 025-3F | M20 | REIE | |
| 01482 | 2C1 | 025-3E | | LRA | 1 |
| 01483 | 2C2 | 025-3D | | LRA | 2 |
| 01484 | 15E | 025-3B | | LYI | 7 |
| 01485 | 090 | 025-37 | | SED | |
| 01486 | 290 | 025-2F | | RED | |
| 01487 | 07F | 025-1E | | LAI | 15 |
| 01488 | 2C1 | 025-3C | | LRA | 1 |
| 01489 | 2C2 | 025-39 | | LRA | 2 |
| 01490 | 0A4 | 025-33 | | SEIE | |

0194387

| ST-NO | OBJECT | | ADRS | SOURCE | STATEMENTS | |
|-------|--------|---|------|--------|-----------|---|
| 01491 | 1A3 | | 025-27 | M21 | TIO | |
| 01492 | 1D2 | | 025-0E | | BF | M26 |
| 01493 | 1A3 | | 025-1D | M22 | TIO | |
| 01494 | 1D2 | | 025-3A | | BR | M24 |
| 01495 | 153 | | 025-35 | | LYI | 12 |
| 01496 | 094 | | 025-2B | | TD | |
| 01497 | 1D8 | | 025-16 | | BR | M23 |
| 01498 | 1D1 | | 025-2C | | BR | M27 |
| 01499 | 3D0 | | 025-18 | M23 | CAL | KEY |
| 01500 | 1DD | | 025-30 | | BR | M22 |
| 01501 | 1D3 | | 025-21 | | BR | M29 |
| 01502 | 2A4 | | 025-02 | M24 | REIE | |
| 01503 | 151 | | 025-05 | | LYI | 8 |
| 01504 | 290 | | 025-03 | | RED | |
| 01505 | 0E2 | | 025-17 | | LBR | 2 |
| 01506 | 320 | | 025-2E | | COMB | |
| 01507 | 073 | | 025-1C | | LAI | 12 |
| 01508 | 120 | | 025-38 | | OR | |
| 01509 | 060 | | 025-31 | | LBA | |
| 01510 | 320 | | 025-23 | | COMB | |
| 01511 | 001 | | 025-06 | | LAR | 1 |
| 01512 | 090 | | 025-0D | | SED | |
| 01513 | 0A4 | | 025-1B | | SEIE | |
| 01514 | 270 | | 025-36 | | ALEI | 0 |
| 01515 | 1E7 | | 025-2D | | BR | M21 |
| 01516 | 275 | | 025-1A | | ALEI | 10 |
| 01517 | 1CC | | 025-34 | | BR | M40 |
| 01518 | 1E7 | | 025-29 | | BR | M21 |
| 01519 | 153 | | 025-12 | M26 | LYI | 12 |
| 01520 | 094 | | 025-24 | | TD | |
| 01521 | 1C4 | | 025-08 | | BR | M28 |
| 01522 | 35C | 1F7 | 025-11 | M27 | BRL | MD0 |
| 01523 | 3D0 | | 025-04 | M28 | CAL | KEY |
| 01524 | 1E7 | | 025-09 | | BR | M21 |
| 01525 | 356 | 1FF | 025-13 | M29 | BRL | M29A |
| 01526 | 142 | | 025-0C | M40 | LXI | 4 |
| 01527 | 15E | | 025-19 | | LYI | 7 |
| 01528 | 218 | | 025-32 | | MNEI | 1 |
| 01529 | 358 | 1ED | 025-25 | | BRL | M42 |
| 01530 | 088 | | 025-15 | | AI | 1 |
| 01531 | 1D4 | | 025-2A | | BR | *+1 |
| 01532 | 04C | | 025-14 | | REC | |
| 01533 | 224 | | 025-28 | | ROTR | |
| 01534 | 0F0 | | 025-10 | | XAMR | 0 |
| 01535 | 260 | | 025-20 | | LAB | |
| 01536 | 04C | | 025-00 | | REC | |
| 01537 | 224 | | 025-01 | | ROTR | |
| 01538 | 060 | | 025-03 | | LBA | |
| 01539 | 0F0 | | 025-07 | | XAMR | 0 |
| 01540 | 358 | 1C6 | 025-0F | | BRL | M4A |

PAGE NUMBER 025 CONTAINS 064 ROM WORDS

| ST-NO | OBJECT | ADRS | SOURCE | STATEMENTS | |
|-------|--------|------|--------|-----------|---|
| 01541 | | | | ORG | 26-3F |
| *01542 | 070 | 026-3F | M12 | LAI | 0 |
| 01543 | 14A | 026-3E | | LXI | 5 |

| ST-NO | OBJECT | ADRS | SOURCE STATEMENT | |
|---|---|---|---|---|
| 01544 | 152 | 026-7D | LYI | 4 |
| 01545 | 210 | 026-7E | MNEI | 0 |
| 01546 | 208 | 026-37 | XMA | |
| 01547 | 1ED | 026-2F | BR | M15 |
| 01548 | 142 | 026-1E | LXI | 4 |
| 01549 | 150 | 026-30 | LYI | 0 |
| 01550 | 210 | 026-39 | LMIIY | 0 |
| 01551 | 010 | 026-33 | LMIIY | 0 |
| 01552 | 01F | 026-27 | LMIIY | 15 |
| 01553 | 01B | 026-0E | LMIIY | 13 |
| 01554 | 016 | 026-1D | LMIIY | 6 |
| 01555 | 34A 3DE | 026-3A | CALL | CRDD |
| 01556 | 070 | 026-2B | LAI | 0 |
| 01557 | 0F4 | 026-16 | XAMR | 4 |
| 01558 | 270 | 026-2C | ALEI | 0 |
| 01559 | 1ED | 026-18 | BR | M15 |
| 01560 | 144 | 026-30 | M13 LXI | 2 |
| 01561 | 15D | 026-21 | LYI | 11 |
| 01562 | 008 | 026-02 | LAM | |
| 01563 | 34E 3CC | 026-05 | M13A CALL | ASFT |
| 01564 | 14A | 026-17 | LXI | 5 |
| 01565 | 157 | 026-2E | LYI | 14 |
| 01566 | 018 | 026-1C | LMIIY | 1 |
| 01567 | 3EE | 026-38 | CAL | CCL |
| 01568 | 14C | 026-31 | LXI | 3 |
| 01569 | 159 | 026-23 | LYI | 9 |
| 01570 | 010 | 026-06 | M14 LMIIY | 0 |
| 01571 | 1C6 | 026-0D | BR | M14 |
| 01572 | 34A 3FF | 026-1B | CALL | CRD |
| 01573 | 35C 1F7 | 026-2D | M15 BRL | MD0 |
| 01574 | 0A4 | 026-34 | M16 SEIE | |
| 01575 | 144 | 026-29 | LXI | 2 |
| 01576 | 15D | 026-12 | LYI | 11 |
| 01577 | 210 | 026-24 | MNEI | 0 |
| 01578 | 1E6 | 026-08 | BR | M17 |
| 01579 | 3F3 | 026-11 | CAL | DCL |
| 01580 | 3E1 | 026-22 | CAL | CCLX |
| 01581 | 070 | 026-04 | LAI | 0 |
| 01582 | 359 1FF | 026-09 | BRL | M20 |
| 01583 | 349 3FF | 026-26 | M17 CALL | AND |
| 01584 | 153 | 026-19 | M18 LYI | 12 |
| 01585 | 094 | 026-32 | TD | |
| 01586 | 1D5 | 026-25 | BR | M19 |
| 01587 | 1F0 | 026-0A | BR | M13 |
| 01588 | 3D0 | 026-15 | M19 CAL | KEY |
| 01589 | 1D9 | 026-2A | BR | M18 |
| 01590 | 21F | 026-14 | MNEI | 15 |
| 01591 | 1D9 | 026-28 | BR | M18 |
| 01592 | 078 | 026-10 | LAI | 1 |
| 01593 | 0F4 | 026-20 | XAMR | 4 |
| 01594 | 142 | 026-00 | LXI | 4 |
| 01595 | 150 | 026-01 | LYI | 0 |
| 01596 | 010 | 026-03 | LMIIY | 0 |
| 01597 | 010 | 026-07 | LMIIY | 0 |
| 01598 | 35B 1C2 | 026-0F | BRL | DIALM |

```
        FT-NO    OBJECT  ADRS      SOURCE   STATEMENTS

                                                          0194387
        PAGE NUMBER 026 CONTAINS 36A ROM WORDS

        01577                                  ORG    27-3F
       +01600   070      027-3F   M0          LAI    0
        01601   0F7      027-3E               XAMR   7
        01602   204      027-3D               REIE
        01603   07E      027-3B               LAI    7
        01604   2C2      027-37               LRA    2
        01605   15A      027-2F               LYI    5
        01606   090      027-1E               SED
        01607   290      027-3C               RED
        01608   07F      027-39               LAI    15
        01609   2C2      027-33               LRA    2
        01610   14A      027-27               LXI    5
        01611   152      027-0E               LYI    4
        01612   218      027-1D               MNEI   1
        01613   35A 1F4  027-3A               BRL    M16
        01614   014      027-2B               LMIIY  2
        01615   0A4      027-16               SEIE
        01616   3F3      027-2C               CAL    DCL
        01617   3E1      027-18               CAL    CCLX
        01618   350 3CA  027-30               CALL   DLY1
        01619   153      027-02   DIALM       LYI    12
        01620   094      027-05               TD
        01621   1DC      027-0B               BR     M3A
        01622   35A 1FF  027-17               BRL    M12
        01623   3D0      027-1C   M3A         CAL    KEY
        01624   1C9      027-38               BR     M7
        01625   008      027-31               LAM
        01626   270      027-23               ALEI   0
        01627   1C9      027-06               BR     M7
        01628   084      027-0D               AI     2
        01629   1C9      027-1B               BR     M7
        01630   07F      027-36   M4          LAI    15
        01631   088      027-2D   M5          AI     1
        01632   040      027-1A               LXA
        01633   150      027-34               LYI    0
        01634   210      027-29   M6          MNEI   0
        01635   1EA      027-12               BR     M8
        01636   003      027-24               XSPXY
        01637   14A      027-08               LXI    5
        01638   154      027-11               LYI    2
        01639   00B      027-22               LAMXY
        01640   208      027-04               XMA
        01641   142      027-09   M7          LXI    4
        01642   150      027-13               LYI    0
        01643   214      027-26               MNEI   2
        01644   1E5      027-0C               BR     M7A
        01645   158      027-19               LYI    1
        01646   215      027-32               MNEI   10
        01647   343 3FF  027-25   M7A         CALL   DIAL
        01648   1C2      027-15               BR     DIALM
        01649   054      027-2A   M8          IY
        01650   1D0      027-14               BR     M9
        01651   1ED      027-28               BR     M5
```

0194387

| ST-NO | OBJECT | ADRS | SOURCE | STATEMENTS | |
|---|---|---|---|---|---|
| 01652 | 225 | 027-10 | M9 | YNEI | 10 |
| 01653 | 1E9 | 027-20 | | BR | M6 |
| 01654 | 278 | 027-00 | | ALEI | 1 |
| 01655 | 1E9 | 027-01 | | BR | M6 |
| 01656 | 1C2 | 027-03 | | BR | DIALM |
| 01657 | 15A | 027-07 | YY4A | LYI | 5 |
| 01658 | 357 1C7 | 027-0F | | BRL | YY5 |

PAGE NUMBER 027 CONTAINS 064 ROM WORDS

| | | | | | |
|---|---|---|---|---|---|
| 01659 | | | | ORG | 28-3F |
| *01660 | 350 3E8 | 028-3F | R3 | CALL | DLY2 |
| 01661 | 2A5 | 028-3D | | RETF | |
| 01662 | 2A0 | 028-3B | | REIF1 | |
| 01663 | 14A | 028-37 | MD0 | LXI | 5 |
| 01664 | 157 | 028-2F | | LYI | 14 |
| 01665 | 010 | 028-1E | | LMIIY | 0 |
| 01666 | 2A4 | 028-3C | | REIE | |
| 01667 | 07F | 028-39 | | LAI | 15 |
| 01668 | 2C1 | 028-33 | | LRA | 1 |
| 01669 | 2C2 | 028-27 | | LRA | 2 |
| 01670 | 15A | 028-0E | | LYI | 5 |
| 01671 | 090 | 028-1D | | SED | |
| 01672 | 290 | 028-3A | | RED | |
| 01673 | 0A4 | 028-35 | | SEIE | |
| 01674 | 14A | 028-2B | MINA | LXI | 5 |
| 01675 | 347 3E8 | 028-16 | | CALL | XXX |
| 01676 | 153 | 028-18 | MINAX | LYI | 12 |
| 01677 | 094 | 028-30 | | TD | |
| 01678 | 35B 1FF | 028-21 | | BRL | M3 |
| 01679 | 3EC | 028-05 | | CAL | WCL |
| 01680 | 14A | 028-0B | | LXI | 5 |
| 01681 | 152 | 028-17 | | LYI | 4 |
| 01682 | 210 | 028-2E | | MNEI | 0 |
| 01683 | 1CD | 028-1C | | BR | M1 |
| 01684 | 144 | 028-38 | | LXI | 2 |
| 01685 | 15D | 028-31 | | LYI | 11 |
| 01686 | 210 | 028-23 | | MNEI | 0 |
| 01687 | 1DA | 028-06 | | BR | M2 |
| 01688 | 142 | 028-0D | M1 | LXI | 4 |
| 01689 | 346 3CC | 028-1B | | CALL | TDSP |
| 01690 | 1D8 | 028-2D | | BR | MINAX |
| 01691 | 349 3FF | 028-1A | M2 | CALL | AND |
| 01692 | 153 | 028-29 | M2A | LYI | 12 |
| 01693 | 094 | 028-12 | | TD | |
| 01694 | 1D8 | 028-24 | | BR | MINAX |
| 01695 | 142 | 028-08 | | LXI | 4 |
| 01696 | 15F | 028-11 | | LYI | 15 |
| 01697 | 200 | 028-22 | | TM | 0 |
| 01698 | 1D8 | 028-04 | | BR | MINAX |
| 01699 | 07A | 028-09 | M2B | LAI | 5 |
| 01700 | 08F | 028-13 | M2C | AI | 15 |
| 01701 | 1D3 | 028-26 | | BR | M2C |
| 01702 | 143 | 028-0C | | LXI | 12 |
| 01703 | 159 | 028-19 | | LYI | 9 |
| 01704 | 200 | 028-32 | | TM | 0 |

| ST-NO | OBJECT | ADRS | SOURCE | STATEMENTS | |
|-------|--------|------|--------|-----------|---|
| 01775 | 1D4 | 028-25 | | BR | MCC |
| 01701 | C04 | 028-0A | | SEM | 0 |
| 01707 | 090 | 028-15 | | SED | |
| 01705 | 1E9 | 028-2A | | BR | MCA |
| 01709 | 204 | 028-14 | MCD | REM | 0 |
| 01710 | 290 | 028-28 | | RED | |
| 01711 | 1E9 | 028-10 | | BR | MCB |
| 01712 | 078 | 028-20 | ZZZ | LAI | 1 |
| 01713 | 3C0 | 028-00 | | CAL | TOT |
| 01714 | 35D 3FF | 028-01 | | CALL | A1 |
| 01715 | 3C0 | 028-07 | | CAL | TOT |
| 01716 | 07E | 028-0F | | LAI | 12 |
| 01717 | 3A7 | 028-1F | | RTN | |

PAGE NUMBER 028 CONTAINS 064 ROM WORDS

| 01718 | | | | ORG | 29-3F |
|-------|--------|--------|------|------|-------|
| *01719 | 142 | 029-3F | A1 | LXI | 4 |
| 01720 | 15E | 029-3E | | LYI | 7 |
| 01721 | 210 | 029-3D | | MNEI | 0 |
| 01722 | 156 | 029-3B | | LYI | 6 |
| 01723 | 008 | 029-37 | | LAM | |
| 01724 | 15A | 029-2F | | LYI | 5 |
| 01725 | 1EB | 029-1E | | BR | A12 |
| 01726 | 279 | 029-3C | | ALEI | 9 |
| 01727 | 008 | 029-39 | | LAM | |
| 01728 | 1CE | 029-33 | | BR | A11 |
| 01729 | 08F | 029-27 | | AI | 15 |
| 01730 | 14C | 029-0E | A11 | LXI | 3 |
| 01731 | 088 | 029-1D | | AI | 1 |
| 01732 | 110 | 029-3A | | LMAIY | |
| 01733 | 3A7 | 029-35 | | RTN | |
| 01734 | 27A | 029-2B | A12 | ALEI | 5 |
| 01735 | 1DC | 029-16 | | BR | A15 |
| 01736 | 279 | 029-2C | | ALEI | 9 |
| 01737 | 07C | 029-18 | | LAI | 3 |
| 01738 | 1C5 | 029-30 | | BR | A13 |
| 01739 | 214 | 029-21 | | MNEI | 2 |
| 01740 | 1D7 | 029-02 | | BR | A14 |
| 01741 | 210 | 029-05 | A13 | MNEI | 0 |
| 01742 | 1CE | 029-0B | | BR | A11 |
| 01743 | 087 | 029-17 | A14 | AI | 14 |
| 01744 | 1CE | 029-2E | | BR | A11 |
| 01745 | 074 | 029-1C | A15 | LAI | 2 |
| 01746 | 1C5 | 029-38 | | BR | A13 |
| 01747 | 07F | 029-31 | D1 | LAI | 15 |
| 01748 | 1CD | 029-23 | | BR | D3 |
| 01749 | 07E | 029-06 | D2 | LAI | 7 |
| 01750 | 146 | 029-0D | D3 | LXI | 6 |
| 01751 | 15E | 029-1B | | LYI | 7 |
| 01752 | 003 | 029-36 | | XSPXY | |
| 01753 | 143 | 029-2D | | LXI | 12 |
| 01754 | 156 | 029-1A | | LYI | 6 |
| 01755 | 220 | 029-34 | | XMB | |
| 01756 | 15A | 029-29 | | LYI | 5 |
| 01757 | 088 | 029-12 | D4 | AI | 1 |

0194387

| ST-NO | OBJECT | ADRS | SOURCE | STATEMENTS | |
|---|---|---|---|---|---|
| 01758 | 110 | 029-24 | | LMAIY | |
| 01759 | 223 | 029-09 | | LBMXY | |
| 01760 | 054 | 029-11 | | IY | |
| 01761 | 1C9 | 029-22 | | BR | D5 |
| 01762 | 14E | 029-04 | | LXI | 7 |
| 01763 | 36F | 029-09 | D5 | P | 7 |
| 01764 | 267 | 029-17 | | DB | |
| 01765 | 1F2 | 029-26 | | BR | D6 |
| 01766 | 270 | 029-0C | | ALEI | 0 |
| 01767 | 1E8 | 029-19 | | BR | D7 |
| 01768 | 064 | 029-32 | D6 | IB | |
| 01769 | 110 | 029-25 | | LMAIY | |
| 01770 | 223 | 029-0A | | XMBXY | |
| 01771 | 15A | 029-15 | | LYI | 5 |
| 01772 | 008 | 029-2A | | LAM | |
| 01773 | 1D2 | 029-14 | | BR | D4 |
| 01774 | 3A7 | 029-28 | D7 | RTN | |
| 01775 | 15A | 029-10 | ADP | LYI | 5 |
| 01776 | 142 | 029-20 | ADPX | LXI | 4 |
| 01777 | 254 | 029-00 | ADP1 | DY | |
| 01778 | 078 | 029-01 | | LAI | 1 |
| 01779 | 074 | 029-03 | | AM | |
| 01780 | 208 | 029-07 | | XMA | |
| 01781 | 1C0 | 029-0F | | BR | ADP1 |
| 01782 | 3A7 | 029-1F | | RTN | |

PAGE NUMBER 029 CONTAINS 064 ROM WORDS

| ST-NO | OBJECT | ADRS | SOURCE | STATEMENTS | |
|---|---|---|---|---|---|
| 01783 | | | | ORG | 30-3F |
| *01784 | 150 | 030-3F | DSPX | LYI | 0 |
| 01785 | 141 | 030-3E | | LXI | 8 |
| 01786 | 023 | 030-3D | DSP1 | LBMXY | |
| 01787 | 250 | 030-3B | | LASPY | |
| 01788 | 050 | 030-37 | | LYA | |
| 01789 | 058 | 030-2F | | AYY | |
| 01790 | 14E | 030-1E | | LXI | 7 |
| 01791 | 1F3 | 030-3C | | BR | DSP2 |
| 01792 | 146 | 030-39 | | LXI | 6 |
| 01793 | 260 | 030-33 | DSP2 | LAB | |
| 01794 | 160 | 030-27 | | LBI | 0 |
| 01795 | 36F | 030-0E | | P | 7 |
| 01796 | 110 | 030-1D | | LMAIY | |
| 01797 | 223 | 030-3A | | XMBXY | |
| 01798 | 054 | 030-35 | | IY | |
| 01799 | 1FD | 030-2B | | BR | DSP1 |
| 01800 | 3A7 | 030-16 | | RTN | |
| 01801 | 14A | 030-2C | KEYX | LXI | 5 |
| 01802 | 15C | 030-18 | | LYI | 3 |
| 01803 | 077 | 030-30 | | LAI | 14 |
| 01804 | 3C9 | 030-21 | | CAL | KEYS |
| 01805 | 070 | 030-02 | | LAI | 0 |
| 01806 | 1E4 | 030-05 | | BR | KEY3 |
| 01807 | 07B | 030-0B | | LAI | 13 |
| 01808 | 3C9 | 030-17 | | CAL | KEYS |
| 01809 | 072 | 030-2E | | LAI | 4 |
| 01810 | 1E4 | 030-1C | | BR | KEY3 |

```
ST-NO    OBJECT  ADRS       SOURCE   STATEMENTS

01811    077     030-18               LAI     11
01812    358     030-31               CAL     KEYS
01813    071     030-23               LAI     3
01814    154     030-06               PR      KEY3
01815    07E     030-0D               LAI     7
01816    358     030-1E               CAL     KEYS
01817    1E2     030-36               BR      KEY2
01818    020     030-2D               LPM
01819    267     030-1A               DB
01820    1E2     030-34               BR      KEY4
01821    367     030-29     KEY1      RTN
01822    073     030-12     KEY2      LAI     12
01823    120     030-24     KEY3      OR
01824    210     030-08               MNEI    0
01825    16A     030-11               LBI     5
01826    220     030-22     KEY4      XMB
01827    1E9     030-04               BR      KEY1
01828    164     030-09               LBI     2
01829    36F     030-13               P       7
01830    154     030-26               LYI     2
01831    220     030-0C               XMB
01832    008     030-19               LAM
01833    080     030-32               AI      0
01834    3A7     030-25               RTN
01835    0F2     030-0A     WR        XAMR    2
01836    358 3F3 030-15               CALL    RDX
01837    2D3     030-14               REDD    3
01838    0F2     030-28               XAMR    2
01839    2C1     030-10               LRA     1
01840    2D2     030-20               REDD    2
01841    0D2     030-00               SEDD    2
01842    0D3     030-01               SEDD    3
01843    07F     030-03               LAI     15
01844    2C1     030-07               LRA     1
01845    2C2     030-0F               LRA     2
01846    3A4     030-1F               RTNI
PAGE NUMBER 030 CONTAINS 064 ROM WORDS

01847                                 ORG     31-3F
*01848   2A4     031-3F     RESET     REIE
01849    1FD     031-3E               BR      *+1
01850    15A     031-3D               LYI     5
01851    290     031-3B               RED
01852    15E     031-37               LYI     7
01853    290     031-2F               RED
01854    15B     031-1E               LYI     13
01855    290     031-3C               RED
01856    070     031-39               LAI     0
01857    2C6     031-33               LRA     6
01858    2C5     031-27               LRA     5
01859    073     031-0E               LAI     12
01860    349 3E1 031-1D               CALL    NCL
01861    070     031-35     R1        LAI     0
01862    35E 3CA 031-2B               CALL    WR
01863    35D 3D0 031-2C               CALL    ADP
```

0194387

| ST-NO | OBJECT | ADRE | SOURCE | STATEMENTS | |
|---|---|---|---|---|---|
| 01864 | 154 | 031-30 | | LYI | 2 |
| 01865 | 212 | 031-0. | | MNEI | 4 |
| 01866 | 1F5 | 031-02 | | BR | R1 |
| 01867 | 010 | 031-05 | | LMIIY | 0 |
| 01868 | 340 3CA | 031-0B | | CALL | YYY |
| 01869 | 142 | 031-2E | | LXI | 4 |
| 01870 | 15E | 031-1C | | LYI | 7 |
| 01871 | 070 | 031-38 | | LAI | 0 |
| 01872 | 20B | 031-31 | | XMAXY | |
| 01873 | 3D0 | 031-23 | | CAL | KEY |
| 01874 | 1DA | 031-06 | | BR | R1A |
| 01875 | 214 | 031-0D | | MNEI | 2 |
| 01876 | 1DA | 031-1B | | BR | R1A |
| 01877 | 003 | 031-36 | | XSPXY | |
| 01878 | 018 | 031-2D | | LMIIY | 1 |
| 01879 | 142 | 031-1A | R1A | LXI | 4 |
| 01880 | 159 | 031-34 | | LYI | 9 |
| 01881 | 017 | 031-29 | | LMIIY | 14 |
| 01882 | 018 | 031-12 | | LMIIY | 1 |
| 01883 | 014 | 031-24 | | LMIIY | 2 |
| 01884 | 015 | 031-08 | | LMIIY | 10 |
| 01885 | 1C8 | 031-11 | | BR | *-1 |
| 01886 | 165 | 031-22 | | LBI | 10 |
| 01887 | 350 3CA | 031-04 | R1B | CALL | DLY1 |
| 01888 | 267 | 031-13 | | DB | |
| 01889 | 1C4 | 031-26 | | BR | R1B |
| 01890 | 07F | 031-0C | | LAI | 15 |
| 01891 | 3C0 | 031-19 | | CAL | TOT |
| 01892 | 3EC | 031-32 | | CAL | WCL |
| 01893 | 142 | 031-25 | | LXI | 4 |
| 01894 | 15E | 031-0A | | LYI | 7 |
| 01895 | 210 | 031-15 | | MNEI | 0 |
| 01896 | 074 | 031-2A | | LAI | 2 |
| 01897 | 1D0 | 031-14 | | BR | R2 |
| 01898 | 078 | 031-28 | | LAI | 1 |
| 01899 | 141 | 031-10 | R2 | LXI | 8 |
| 01900 | 155 | 031-20 | | LYI | 10 |
| 01901 | 208 | 031-00 | | XMA | |
| 01902 | 3CF | 031-01 | | CAL | DSP |
| 01903 | 160 | 031-03 | | LBI | 0 |
| 01904 | 355 1C3 | 031-07 | | BRL | R2A |

PAGE NUMBER 031 CONTAINS 063 ROM WORDS

| 01905 | | | | ORG | 61-00 |
|---|---|---|---|---|---|
| *01906 | 10F | 061-00 | | DC | 10F |
| 01907 | 16D | 061-01 | | DC | 16D |
| 01908 | 13E | 061-02 | | DC | 13E |
| 01909 | 13F | 061-03 | | DC | 13F |
| 01910 | 100 | 061-04 | | DC | 100 |
| 01911 | 100 | 061-05 | | DC | 100 |
| 01912 | 100 | 061-06 | | DC | 100 |
| 01913 | 100 | 061-07 | | DC | 100 |
| 01914 | 13F | 061-08 | | DC | 13F |
| 01915 | 1C2 | 061-09 | | DC | 1C2 |
| 01916 | 13E | 061-0A | | DC | 13E |

| ST-NO | OBJECT | ADRS | SOURCE STATEMENTS | |
|---|---|---|---|---|
| 01917 | 10F | 061-0B | DC | 10F |
| 01918 | 16D | 061-0C | DC | 16D |
| 01919 | 100 | 061-0D | DC | 100 |
| 01920 | 100 | 061-0E | DC | 100 |
| 01921 | 100 | 061-0F | DC | 100 |
| 01922 | 10F | 061-10 | DC | 10F |
| 01923 | 102 | 061-11 | DC | 102 |
| 01924 | 1C2 | 061-12 | DC | 1C2 |
| 01925 | 13F | 061-13 | DC | 13F |
| 01926 | 100 | 061-14 | DC | 100 |
| 01927 | 100 | 061-15 | DC | 100 |
| 01928 | 100 | 061-16 | DC | 100 |
| 01929 | 100 | 061-17 | DC | 100 |
| 01930 | 146 | 061-18 | DC | 146 |
| 01931 | 143 | 061-19 | DC | 143 |
| 01932 | 1C2 | 061-1A | DC | 1C2 |
| 01933 | 14F | 061-1B | DC | 14F |
| 01934 | 13F | 061-1C | DC | 13F |
| 01935 | 106 | 061-1D | DC | 106 |
| 01936 | 100 | 061-1E | DC | 100 |
| 01937 | 100 | 061-1F | DC | 100 |
| 01938 | 13F | 061-20 | DC | 13F |
| 01939 | 146 | 061-21 | DC | 146 |
| 01940 | 10F | 061-22 | DC | 10F |
| 01941 | 106 | 061-23 | DC | 106 |
| 01942 | 16D | 061-24 | DC | 16D |
| 01943 | 100 | 061-25 | DC | 100 |
| 01944 | 100 | 061-26 | DC | 100 |
| 01945 | 100 | 061-27 | DC | 100 |
| 01946 | 177 | 061-28 | DC | 177 |
| 01947 | 17D | 061-29 | DC | 17D |
| 01948 | 177 | 061-2A | DC | 177 |
| 01949 | 102 | 061-2B | DC | 102 |
| 01950 | 146 | 061-2C | DC | 146 |
| 01951 | 100 | 061-2D | DC | 100 |
| 01952 | 100 | 061-2E | DC | 100 |
| 01953 | 100 | 061-2F | DC | 100 |
| 01954 | 167 | 061-30 | DC | 167 |
| 01955 | 102 | 061-31 | DC | 102 |
| 01956 | 106 | 061-32 | DC | 106 |
| 01957 | 13F | 061-33 | DC | 13F |
| 01958 | 107 | 061-34 | DC | 107 |
| 01959 | 10F | 061-35 | DC | 10F |
| 01960 | 100 | 061-36 | DC | 100 |
| 01961 | 100 | 061-37 | DC | 100 |
| 01962 | 177 | 061-38 | DC | 177 |
| 01963 | 10A | 061-39 | DC | 10A |
| 01964 | 177 | 061-3A | DC | 177 |
| 01965 | 106 | 061-3B | DC | 106 |
| 01966 | 1C2 | 061-3C | DC | 1C2 |
| 01967 | 100 | 061-3D | DC | 100 |
| 01968 | 100 | 061-3E | DC | 100 |
| 01969 | 100 | 061-3F | DC | 100 |

PAGE NUMBER 061 CONTAINS 064 ROM WORDS

0194387

　　　　　　　　　　　　　　P.048
P.040

0194387

| ST-NO | OBJECT | ADRS | SOURCE STATEMENTS | |
|---|---|---|---|---|
| 01970 |  |  | ORG | 62-00 |
| *01971 | 100 | 062-00 | DC | 100 |
| 01972 | 160 | 062-01 | DC | 160 |
| 01973 | 137 | 062-02 | DC | 137 |
| 01974 | 175 | 062-03 | DC | 175 |
| 01975 | 16C | 062-04 | DC | 16C |
| 01976 | 15D | 062-05 | DC | 15D |
| 01977 | 15F | 062-06 | DC | 15F |
| 01978 | 170 | 062-07 | DC | 170 |
| 01979 | 17F | 062-08 | DC | 17F |
| 01980 | 17D | 062-09 | DC | 17D |
| 01981 | 17B | 062-0A | DC | 17B |
| 01982 | 141 | 062-0B | DC | 141 |
| 01983 | 118 | 062-0C | DC | 118 |
| 01984 | 104 | 062-0D | DC | 104 |
| 01985 | 17E | 062-0E | DC | 17E |
| 01986 | 13E | 062-0F | DC | 13E |
| 01987 | 100 | 062-10 | DC | 100 |
| 01988 | 167 | 062-11 | DC | 167 |
| 01989 | 157 | 062-12 | DC | 157 |
| 01990 | 137 | 062-13 | DC | 137 |
| 01991 | 16B | 062-14 | DC | 16B |
| 01992 | 15B | 062-15 | DC | 15B |
| 01993 | 13B | 062-16 | DC | 13B |
| 01994 | 16D | 062-17 | DC | 16D |
| 01995 | 15D | 062-18 | DC | 15D |
| 01996 | 13D | 062-19 | DC | 13D |
| 01997 | 15E | 062-1A | DC | 15E |
| 01998 | 16E | 062-1B | DC | 16E |
| 01999 | 13E | 062-1C | DC | 13E |
| 02000 | 100 | 062-1D | DC | 100 |
| 02001 | 100 | 062-1E | DC | 100 |
| 02002 | 100 | 062-1F | DC | 100 |
| 02003 | 110 | 062-20 | DC | 110 |
| 02004 | 140 | 062-21 | DC | 140 |
| 02005 | 170 | 062-22 | DC | 170 |
| 02006 | 1B0 | 062-23 | DC | 1B0 |
| 02007 | 120 | 062-24 | DC | 120 |
| 02008 | 150 | 062-25 | DC | 150 |
| 02009 | 180 | 062-26 | DC | 180 |
| 02010 | 1A0 | 062-27 | DC | 1A0 |
| 02011 | 130 | 062-28 | DC | 130 |
| 02012 | 160 | 062-29 | DC | 160 |
| 02013 | 190 | 062-2A | DC | 190 |
| 02014 | 1C0 | 062-2B | DC | 1C0 |
| 02015 | 1D0 | 062-2C | DC | 1D0 |
| 02016 | 1E0 | 062-2D | DC | 1E0 |
| 02017 | 1F0 | 062-2E | DC | 1F0 |
| 02018 | 100 | 062-2F | DC | 100 |
| 02019 | 1FF | 062-30 | DC | 1FF |
| 02020 | 1FF | 062-31 | DC | 1FF |
| 02021 | 1FF | 062-32 | DC | 1FF |
| 02022 | 1FF | 062-33 | DC | 1FF |
| 02023 | 1FF | 062-34 | DC | 1FF |
| 02024 | 1FF | 062-35 | DC | 1FF |

0194387

| ST-NO | OBJECT | ADRS | SOURCE STATEMENTS | |
|---|---|---|---|---|
| 01003 | 1FF | 062-36 | DC | 1FF |
| 01011 | 1FF | 062-37 | DC | 1FF |
| 01027 | 1FF | 062-38 | DC | 1FF |
| 01029 | 1FF | 062-39 | DC | 1FF |
| 01029 | 1FF | 062-3A | DC | 1FF |
| 01030 | 1FF | 062-3B | DC | 1FF |
| 01031 | 1FF | 062-3C | DC | 1FF |
| 01032 | 1FF | 062-3D | DC | 1FF |
| 01033 | 1FF | 062-3E | DC | 1FF |
| 01034 | 1FF | 062-3F | DC | 1FF |

PAGE NUMBER 062 CONTAINS 064 ROM WORDS

01035                                        END


TOTAL ERRORS 00000

| SYMBOL | ADRS | DEFINE | REFERENCE |
|---|---|---|---|
| A1 | 307-3F | 01719 | 01251 01714 |
| A11 | 029-0E | 01730 | 01725 01742 01744 |
| A12 | 029-2B | 01774 | 01725 |
| A13 | 027-05 | 01741 | 01773 01745 |
| A14 | 029-17 | 01743 | 01740 |
| A15 | 029-1C | 01745 | 01775 |
| AC | 005-09 | 00354 | 01096 01106 01255 01760 |
| AC1 | 005-0A | 00361 | 00359 |
| AC2 | 005-14 | 00364 | 00362 |
| AC3 | 005-03 | 00370 | 00360 |
| AAD | 006-3F | 00375 | 00572 00649 00687 |
| AAD1 | 006-0E | 00396 | 00397 |
| AAD2 | 006-35 | 00389 | 00387 |
| ADF | 029-10 | 01775 | 00574 00655 00692 00791 01863 |
| ADF1 | 029-00 | 01777 | 01781 |
| ADFX | 029-20 | 01776 | 00721 00874 |
| ADS | 000-34 | 00037 | 00465 00473 |
| ADS1 | 007-3D | 00442 | 00444 |
| ADS2 | 007-39 | 00448 | 00466 |
| ADS3 | 007-16 | 00456 | 00454 00474 |
| ADS4 | 007-30 | 00459 | 00449 |
| ADS5 | 007-38 | 00467 | 00457 |
| ADSET | 007-3F | 00440 | 00632 00738 01265 01477 |
| AISHU | 011-3F | 00686 | 01063 |
| AL1 | 017-2B | 01051 | 01056 01066 01071 01084 01092 |
| AL2 | 017-21 | 01055 | 01053 |
| AL2A | 017-0D | 01065 | 01060 |
| AL4 | 017-24 | 01072 | 01058 |
| AL5 | 017-19 | 01080 | 01074 |
| AL5A | 017-2A | 01085 | 01083 |
| AL6 | 017-28 | 01087 | 01081 |
| AL7 | 017-01 | 01091 | 01089 |
| AL8 | 017-07 | 01093 | 01090 |
| ALARM | 017-3F | 01037 | 01582 |
| ALC | 007-1A | 00475 | 01167 |
| ALC1 | 007-11 | 00481 | 00490 |
| AMDO | 013-31 | 00823 | 00798 01168 |
| AND | 009-3F | 00568 | 01583 01691 |
| AND1 | 009-3C | 00574 | 00576 |
| ANSET | 017-2F | 01042 | 00802 01064 01078 01086 |
| ASF1 | 014-25 | 00905 | 00917 |
| ASF2 | 014-15 | 00907 | 00912 |
| ASF3 | 014-07 | 00916 | 00906 |
| ASFT | 014-0C | 00902 | 01563 |
| ATSET | 018-02 | 01113 | 01022 01195 |
| CAL | 005-3F | 00311 | 00931 01021 |
| CAL1 | 005-3C | 00318 | 00326 |
| CCL | 000-2E | 00026 | 00327 00739 01112 01567 |
| CCLX | 000-21 | 00021 | 00735 01369 01580 01617 |
| CDSP | 000-03 | 00059 | 00582 00722 00823 00875 01147 |
| CDSF1 | 006-36 | 00408 | 00419 |
| CDSP2 | 006-24 | 00414 | 00410 00412 |
| CDSP3 | 006-13 | 00420 | 00413 |
| CDSPX | 006-0B | 00398 | 00059 |
| CL1 | 000-0E | 00012 | 00013 |

***** CROSS REFERENCE LIST *****

**0194387**

| SYMBOL | ADRS | DEFINE | REFERENCE |
|---|---|---|---|
| CLP | 053-35 | 00015 | 000.6 0 00076 |
| CLS | 000-05 | 00027 | 00025 |
| TLA | 000-39 | 00036 | 00070 |
| CLS | 000-1B | 00077 | 00074 |
| CRP | 010-3F | 00628 | 01113 01572 |
| CRTL | 010-7C | 00645 | 00664 |
| CRDC | 010-35 | 00648 | 00679 00687 |
| CRD3 | 010-0B | 00649 | 00631 |
| CRD4 | 010-31 | 00653 | 00659 |
| CRD5 | 010-12 | 00661 | 00647 |
| CRD6 | 010-04 | 00666 | 00670 |
| CRDP | 010-1E | 00677 | 00660 00673 00676 00684 01555 |
| D1 | 029-31 | 01747 | 01309 01342 01373 |
| D2 | 029-06 | 01749 | 00715 01050 01230 01250 |
| D3 | 029-0D | 01750 | 01748 |
| D4 | 029-12 | 01757 | 01773 |
| D5 | 029-09 | 01763 | 01761 |
| D6 | 029-32 | 01768 | 01765 |
| D7 | 029-29 | 01774 | 01767 |
| DCL | 000-33 | 00010 | 00704 01228 01248 01371 01579 01616 |
| DIA0 | 003-2A | 00237 | 00199 |
| DIA1 | 003-0F | 00246 | 00201 00205 00240 |
| DIA10 | 014-02 | 00876 | 00246 |
| DIA12 | 014-1C | 00881 | 00883 |
| DIA13 | 014-1A | 00890 | 00899 |
| DIA3 | 003-30 | 00206 | 00204 |
| DIA4 | 003-23 | 00215 | 00207 |
| DIA5 | 003-1A | 00221 | 00218 |
| DIA6 | 003-34 | 00222 | 00220 |
| DIA7 | 014-3F | 00858 | 00236 |
| DIA8 | 014-16 | 00873 | 00214 |
| DIAL | 003-3F | 00187 | 01647 |
| DIALM | 027-02 | 01619 | 01416 01598 01648 01656 |
| DIRECT | 022-39 | 01319 | 01367 |
| DLY1 | 016-0A | 01023 | 00723 01618 01887 |
| DLY2 | 016-28 | 01027 | 00703 00734 01402 01408 01660 |
| DLY3 | 016-20 | 01029 | 00234 00872 01025 01026 |
| DLY4 | 016-03 | 01032 | 01034 |
| DSP | 000-0F | 00060 | 00420 00437 00900 01048 01335 01401 01419 01902 |
| DSP1 | 030-3D | 01786 | 01799 |
| DSP2 | 030-33 | 01793 | 01791 |
| DSPX | 030-3F | 01784 | 00060 |
| E1 | 022-35 | 01325 | 01279 |
| E10 | 021-04 | 01298 | 01242 |
| E11 | 021-19 | 01301 | 01259 |
| E12 | 021-0A | 01304 | 01213 |
| E13 | 020-3F | 01205 | 01209 01306 |
| E14 | 021-27 | 01268 | 01281 |
| E14A | 021-1D | 01270 | 01264 01283 |
| E15 | 021-35 | 01271 | 01269 |
| E16 | 021-02 | 01278 | 01276 |
| E16A | 021-05 | 01279 | 01267 |
| E17 | 021-10 | 01307 | 01287 |
| E18 | 020-1E | 01211 | 01305 |

| SYMBOL | ADRS | DEFINE | REFERENCE |
|--------|------|--------|-----------|
| E19 | 020-27 | 01214 | 01213 |
| E2 | 022-0D | 01342 | 01340 |
| E21 | 020-1D | 01215 | 01206 |
| E22 | 020-2E | 01226 | 01247 |
| E23 | 020-29 | 01273 | 01224 |
| E24 | 020-04 | 01243 | 01233 |
| E25 | 020-15 | 01251 | 01241 |
| E27 | 019-3F | 01150 | 01237 |
| E28 | 019-3E | 01151 | 01148 01156 01166 01191 |
| E29 | 019-2F | 01155 | 01153 |
| E3 | 022-36 | 01343 | 01270 01348 01351 |
| E30 | 019-05 | 01169 | 01162 |
| E31 | 019-1B | 01179 | 01175 |
| E32 | 019-22 | 01188 | 01159 |
| E35 | 019-15 | 01196 | 01154 01214 |
| E35A | 018-21 | 01112 | 01103 |
| E35B | 018-3F | 01095 | 01201 |
| E36 | 018-0B | 01114 | 01199 |
| E37 | 018-2E | 01115 | 00935 01189 |
| E38 | 018-36 | 01123 | 01118 01121 |
| E39 | 018-15 | 01142 | 01140 |
| E39A | 019-28 | 01145 | 01137 |
| E4 | 022-12 | 01347 | 01345 |
| E40 | 019-20 | 01147 | 01141 |
| E41 | 019-00 | 01148 | 01122 |
| E5 | 021-3F | 01261 | 01350 |
| E5A | 021-2F | 01265 | |
| E9 | 021-17 | 01280 | 01262 |
| EMP | 011-1C | 00706 | 01407 |
| ENTRY | 022-3C | 01318 | |
| I1 | 001-37 | 00066 | 00064 |
| I2 | 001-3A | 00075 | 00076 |
| I3 | 001-18 | 00080 | 00078 |
| I4 | 001-05 | 00084 | 00079 |
| INT1 | 001-3F | 00062 | |
| ISH1 | 011-2F | 00690 | 00697 |
| ISH2 | 011-30 | 00702 | 00700 |
| ISH3 | 011-2D | 00714 | 00701 |
| ISH4 | 011-12 | 00717 | 00713 |
| ISH5 | 011-11 | 00720 | 00733 |
| ISH6 | 011-00 | 00734 | 00716 |
| ISHU | 011-17 | 00705 | 01266 |
| KEY | 000-10 | 00057 | 00982 01055 01155 01347 01378 01499 01523 |
| | | | 01588 01623 01873 |
| KEY1 | 030-29 | 01821 | 01827 |
| KEY2 | 030-12 | 01822 | 01817 |
| KEY3 | 030-24 | 01823 | 01806 01810 01814 |
| KEY4 | 030-22 | 01826 | 01820 |
| KEYS | 000-09 | 00045 | 01804 01808 01812 01816 |
| KEYS1 | 000-32 | 00050 | |
| KEYS2 | 000-25 | 00051 | 00048 |
| KEYS3 | 000-0A | 00052 | 00055 |
| KEYX | 030-2C | 01801 | 00057 |
| M1 | 028-0D | 01688 | 01683 |
| M12 | 026-3F | 01542 | 01622 |

| SYMBOL | ADRS | DEFINE | REFERENCE |
|---|---|---|---|
| M13 | 026-30 | 01560 | 01557 |
| M13A | 026-05 | 01563 | 01070 |
| M14 | 026-06 | 01570 | 01571 |
| M15 | 026-2D | 01573 | 01547 01559 |
| M16 | 026-34 | 01574 | 01613 |
| M17 | 026-26 | 01587 | 01578 |
| M18 | 026-19 | 01584 | 01589 01591 |
| M19 | 026-15 | 01588 | 01586 |
| M2 | 028-1A | 01691 | 01687 |
| M20 | 025-3F | 01481 | 01582 |
| M21 | 025-27 | 01491 | 01417 01469 01515 01518 01524 |
| M22 | 025-1D | 01493 | 01500 |
| M23 | 025-18 | 01499 | 01497 |
| M24 | 025-02 | 01502 | 01494 |
| M26 | 025-12 | 01519 | 01492 |
| M27 | 025-11 | 01522 | 01498 |
| M28 | 025-04 | 01523 | 01521 |
| M29 | 025-13 | 01525 | 01501 |
| M29A | 022-3F | 01712 | 01525 |
| M2A | 028-29 | 01692 | 01708 |
| M2B | 028-09 | 01699 | 01711 |
| M2C | 028-13 | 01700 | 01701 |
| M2D | 028-14 | 01709 | 01705 |
| M3 | 027-3F | 01600 | 01678 |
| M31 | 022-09 | 01352 | 01316 |
| M31A | 023-3F | 01369 | 01354 |
| M32 | 023-3C | 01374 | 01379 01387 |
| M33 | 022-19 | 01355 | 01353 |
| M34 | 022-01 | 01364 | 01356 |
| M36 | 023-1D | 01378 | 01376 |
| M37 | 023-30 | 01383 | 01381 |
| M38 | 023-05 | 01386 | 01384 |
| M39 | 023-17 | 01388 | 01385 |
| M3A | 027-1C | 01623 | 01621 |
| M4 | 027-36 | 01630 | 01365 |
| M40 | 025-0C | 01526 | 01517 |
| M41 | 024-36 | 01454 | 01452 |
| M42 | 024-2D | 01455 | 01453 01529 |
| M43 | 024-29 | 01458 | 01456 |
| M43A | 024-0A | 01471 | 01476 |
| M43B | 023-23 | 01392 | 01472 |
| M43BA | 024-2A | 01472 | 01479 |
| M43C | 024-28 | 01473 | 01462 01465 |
| M44A | 023-11 | 01403 | 01308 01363 |
| M45 | 023-09 | 01406 | |
| M45A | 023-0A | 01410 | 01406 |
| M45B | 023-20 | 01416 | 01413 |
| M4A | 024-06 | 01451 | 01540 |
| M5 | 027-2D | 01631 | 01651 |
| M6 | 027-29 | 01634 | 01653 01655 |
| M7 | 027-09 | 01641 | 01624 01627 01629 |
| M7A | 027-25 | 01647 | 01644 |
| M8 | 027-2A | 01649 | 01635 |
| M9 | 027-10 | 01652 | 01650 |
| MD0 | 028-37 | 01663 | 00981 01054 01114 01346 1137 01522 01573 |

BAD ORIGINAL

**0194387**

| SYMBOL | ADDS | DEFINE | REFERENCE | | |
|--------|------|--------|-----------|--|--|
| MINA | 028-2F | 01674 | 01622 | 01685 | |
| MINAX | 028-12 | 01676 | 01690 | 01694 | 01698 |
| NCL | 009-21 | 00554 | 01860 | | |
| NCL. | 009-02 | 00505 | 00589 | | |
| NCLC | 009-05 | 00506 | 00557 | | |
| OK | 008-3F | 00505 | 01263 | 01282 | |
| OK1 | 009-27 | 00515 | 00529 | | |
| OK2 | 008-3A | 00518 | 00512 | 00526 | |
| OK3 | 008-33 | 00524 | 00514 | 00517 | 00528 |
| OK4 | 009-21 | 00525 | 00510 | | |
| OK5 | 008-2E | 00530 | 00520 | 00533 | |
| OK6 | 008-38 | 00532 | 00523 | | |
| ONH | 002-00 | 00181 | 01317 | 01370 | |
| R1 | 031-35 | 01861 | 01865 | | |
| R1A | 031-1A | 01879 | 01874 | 01876 | |
| R1B | 031-04 | 01887 | 01889 | | |
| R2 | 031-10 | 01899 | 01897 | | |
| R2A | 021-03 | 01909 | 01904 | | |
| R3 | 028-3F | 01660 | 01310 | | |
| RCD | 012-3F | 00738 | 01307 | 01471 | |
| RCD0 | 012-3B | 00740 | 01478 | | |
| RCD1 | 012-3C | 00744 | 00774 | 00786 | |
| RCD3 | 012-0E | 00747 | 00765 | 00767 | |
| RCD4 | 012-35 | 00750 | 00748 | | |
| RCD5 | 012-21 | 00756 | 00762 | | |
| RCD6 | 012-38 | 00763 | 00781 | 00785 | |
| RCD7 | 012-31 | 00764 | 00752 | | |
| RCD8 | 012-36 | 00769 | 00759 | | |
| RCD9 | 012-1A | 00771 | 00777 | | |
| RCDD | 012-3D | 00739 | 00577 | 00705 | 01362 |
| RD | 024-3F | 01422 | 00691 | 00744 | 00787 |
| RD1 | 024-16 | 01437 | 01435 | | |
| RD2 | 024-21 | 01441 | 01439 | | |
| RDX | 024-33 | 01430 | 01422 | 01836 | |
| RESET | 031-3F | 01848 | | | |
| S1 | 000-1E | 00008 | 00006 | | |
| S10 | 009-38 | 00591 | 00180 | | |
| S11 | 009-06 | 00594 | 00610 | 00618 | 00626 |
| S12 | 009-1A | 00599 | 00596 | | |
| S13 | 009-11 | 00605 | 00146 | 00616 | |
| S14 | 009-13 | 00608 | 00604 | | |
| S15 | 009-19 | 00611 | 00593 | | |
| S16 | 009-14 | 00617 | 00612 | | |
| S17 | 009-07 | 00624 | 00622 | | |
| S18A | 001-31 | 00089 | 00607 | | |
| S2 | 002-3F | 00126 | 00009 | | |
| S20 | 001-23 | 00090 | 00250 | 00353 | |
| S21 | 001-17 | 00086 | 00095 | | |
| S22 | 004-37 | 00251 | 00088 | 00249 | |
| S23 | 004-3F | 00248 | 00252 | | |
| S25 | 004-1D | 00259 | 00309 | | |
| S26 | 004-16 | 00263 | 00299 | | |
| S27 | 004-0B | 00270 | 00268 | | |
| S28 | 004-38 | 00274 | 00272 | | |
| S29 | 004-08 | 00287 | 00291 | | |

```
         *****    CROSS    REFERENCE    LIST    *****        P 047/PAGE 300

                                                          0194387

   SYMBOL    VALUE    DEFINE   REFERENCE

   ..        007-16   00,42    0011  00174
   STP       004-28   00301    00260
   STL       005-02   00772    00709
   STT       005-2E   00776    00747
   STT       005-34   00747    00751
   ST4       005-34   00770    00749
   STT       005-2D   00753    00775  00772  00769
   S2a       001-1A   00096    00147
   S27       001-0C   00102    00099  00105
   S28       001-28   00116    00085
   S4        002-17   00148    00144  00165
   S5        002-1C   00150    00141  00179
   S6        002-0D   00155    00152
   S7        002-12   00162    00160
   S8        002-22   00166    00164
   S9        002-26   00170    00167
   T1        016-3F   00978    00824  00926  00983  00991
   T10       015-30   00936    00985
   T11       015-05   00938    00957
   T12       015-36   00949    00946
   T13       013-3F   00797    00955
   T14       013-3D   00799    00958
   T18       013-0E   00806    00827
   T19       013-30   00814    00812  00839  00849
   T2        016-2F   00982    00980
   T20       013-05   00817    00832  00835  00851  00853  00856
   T21A      013-23   00824    00834  00845  00847  00855
   T22       013-0D   00825    00807
   T23       013-34   00829    00809
   T24       013-04   00836    00830
   T25       013-2A   00846    00842
   T25A      013-28   00848    00844
   T26       013-20   00850    00837
   T3        016-23   01004    01012
   T4        015-3F   00920    00987
   T4A       015-1E   00926    00923  00930
   T5        016-0C   01021    00995
   T8        015-39   00927    00828  00925
   TDS1      006-15   00427    00436
   TDSP      006-0C   00422    00702  01689
   TIDSP     023-3B   01371    00803  01079
   TOT       000-00   00058    00960  01095  01097  01099  01105  01109  01111
                               01252  01254  01299  01301  01303  01713  01715
                               01891
   TOT1      008-08   00545    00546
   TOT2      008-26   00551    00553
   TOT3      008-32   00554    00552
   TOT5      008-01   00564    00565
   TOTY      008-06   00535    00058
   TSET      013-33   00804    00937  01093  01391
   TSTAT     000-3F   00002
   WCL       000-2C   00018    00398  00686  01042  01325  01392  01679  01892
   WR        030-0A   01835    00643  00654  01862
   XY1       007-03   00500    00502
   XXX       007-28   00495    01675
```

0194387

| SYMBOL | CODE | CONTROL | REFERENCE | | |
|--------|------|---------|-----------|------|------|
| | 015-07 | 00559 | 00795 | | |
| | 015-07 | 00775 | 00965 | | |
| YV4 | 017-07 | 01202 | 00790 | 00576 | |
| Y4 | 027-07 | 01657 | 01203 | | |
| | 037-07 | 01410 | 01658 | | |
| YYY | 013-09 | 00787 | 00794 | 01548 | |
| | 026-20 | 01712 | 01104 | 01203 | 01278 |

**WHAT IS CLAIMED IS:**

1.     A controlling apparatus for a user voice-operated telephone connected to a telephone line of a common carrier telephone system, said telephone comprising:

audio signal processing recognition and command means, responsive to user spoken input words, for generating digital command signals indicative of one of a predetermined set of states of operation and digital data signals indicative of a registered name and a first dialing number corresponding thereto or a second dialing number; and

means, responsive to said command and data signals for storing the first dialing number, for generating standard dialing signals recognized by the common carrier telephone system, for initiating and completing telephone connection with a subscriber at the first dialing number responsive to the registered name or the second dialing number, for generating visual display signals permitting visual display of information and cues, representing the state of operation, the command and data signals, the first and second dialing numbers and for causing a telephone connection and disconnection between the telephone and the telephone line by using a combination of predetermined words spoken at a predetermined time interval as an instruction command for connecting and disconnecting.

2.     A controlling method for a voice-operated telephone capable of operating in either a programming mode or a normal mode. including voice recognition means for recognizing predetermined input words registered therein, keyboard means for entering telephone numbers and visual display means responsive to said voice recognition means for displaying prompt and subscriber telephone number information to the user, the method comprising the steps of:

a) selecting the programming mode of operation;

b) displaying on the visual display means a predetermined prompt word for a command followed by a predetermined repetition numeral;

c) recognizing the prompt word spoken by the user a number of times equal to the repetition numeral and decrementing the repetition numeral after each recognized utterance of the prompt word, until said numeral has been decremented to zero;

d) repeating steps b) and c) a predetermined number of times for a predetermined number of commands and number digits;

e) entering the normal mode of operation;

f) recognizing the subscriber telephone number to be called, digit-by-digit via the keyboard means, and displaying on the visual display means each of the recognized numerals; and

g)     executing a telephone line connection and dialing operation by recognizing a predetermine combination of words as a connection command and executing a connection operation between the telephone and a telephone line and when said predetermined words are uttered at a predetermined time interval and by recognizing the commands and the subscriber telephone number to be dialed and dialing the subscriber telephone number.

3.     A controlling apparatus for a voice-operated telephone connected to a telephone line of a common carrier telephone system, said telephone comprising:

audio signal processing and recognition means, responsive to spoken input words, for generating digital command signals indicative of one of a predetermined set of states of operation and a digital data signal indicative of a registered name or dialing numbers;

processor and storage means, responsive to said command and data signals, for storing dialing numbers, for generating standard dialing signals recognized by the common carrier telephone system, for initiating and completing telephone connection with a subscriber at the dialing number or a subscriber dialing number corresponding to the registered name and for generating visual display signals permitting visual display of information and cues, representing the state of operation, the command and data signals, and the dialing numbers; and

visual display means, responsive to the signals, for displaying to the user the information, the cues, and the subscriber names and the dialing numbers.

4. A controlling method for a voice-operated telephone capable of operating in either a programming mode or a normal mode including voice recognition means for recognizing predetermined input words registered therein, keyboard means for entering telephone numbers and visual display means responsive to said voice recognition means for displaying prompt and subscriber telephone number information to the user, the method comprising the steps of:

a) selecting the programming mode of operation;

b) displaying on the visual display means a predetermined prompt word for a command followed by a predetermined repetition numeral;

c) recognizing the prompt word a number of times equal to said repetition numeral and decrementing said numeral after each recognized utterance of said prompt word, until said numeral has been decremented to zero;

d) repeating steps b) and c) a predetermined number of times for a predetermined number of commands and number digits;

e) entering the normal mode of operation;

f) recognizing the subscriber telephone number to be called digit-by-digit via the keyboard means, and displaying on the visual display each of the recognized entered subscriber's numbers;

g) recognizing one of the predetermined commands and causing the displayed subscriber telephone number to be dialed and a telephone connection to be established between the telephone and a subscriber telephone apparatus;

h) recognizing a subscriber name corresponding to the subscriber number recognized by step f); and

i) dialing the subscriber recognized by said step h) using the subscriber number.

5. A voice operated telephone, comprising:

conversion means for converting a voice analog signal into a digital signal;

control means for comparing the digital signal to all voice templates stored therein and dialing a telephone number corresponding thereto; and

display means for displaying the dialed telephone number.

6. A telephone as recited in claim 5, wherein said control means prompts a user through said display means to speak voice templates for comparison with the analog signal for dialing.

7. A telephone as recited in claim 6, further comprising speaker telephone control means for allowing the user to voice control the telephone in a hands free mode.

8. A voice operated telephone, comprising:

voice recognition means for comparing a voice analog signal with digital voice templates;

control and display means for dialing a telephone number corresponding to the voice analog signal and displaying the telephone number dialed.

9. A telephone as recited in claim 8, wherein said control and display means includes a visual display, prompts a user to speak voice templates and controls said voice recognition means to store the voice templates as the digital voice templates.

10. A method of controlling a user operated voice controlled telephone, comprising the steps of:

a) operating in a command programming mode comprising the steps of:

a1) displaying command words, numeral digits words and repetition numbers therefor as prompts to the user;

a2) decrementing the repetition number each time the user speaks a word corresponding to the displayed prompt;

a3) storing the user spoken words as a template when the repetition number equals zero;

b) operating in a subscriber number storing mode comprising the steps of:

b1) prompting the user to speak a subscriber's name a predetermined number of times;

b2) converting the spoken subscriber name into a subscriber template;

b3) storing the subscriber template; and

b4) prompting the user for a subscriber telephone number and storing the number as it is entered; and

c) operating the telephone in a dialing mode comprising the steps of:

c1) comparing user spoken words to the command words, the templates and the subscriber templates; and

c2) performing the command, displaying the digit or displaying the subscribers number corresponding to a recognized spoken word.

11. A method as recited in claim 10, further comprising:

d) operating the telephone in a hands free mode comprising the steps of:

d1) recognizing predetermined words spoken by the user at a predetermined interval;

0194387

- 24 -

d2) disconnecting the telephone if the telephone is in a connected state;

d3) connecting the telephone and operating the telephone in the dialing mode if the telephone is in a disconnected state.

12. A method as recited in claim 10, wherein step b4) comprises converting user spoken words into telephone number digits of the subscriber's telephone number.

13. A method as recited in claim 10, wherein the telephone includes a key pad and step b4) comprises storing key pad signals as the subscriber's telephone number.

FIG. 1.

FIG. 2

FIG. 3.

## FIG. 4.

```
FROM ON HOOK

   PHONE

   FREE
         ──(1)
```

NAME ──(2)── CANCEL ──(1)
              NAME ──(2)
              DIAL ── DIALING
              NUMBER ──(3)

NUMBER ──(3)── CANCEL ──(1)
                NAME ──(2)
                DIAL ── DIALING
                PAUSE ──(3)
                BACK ──(3)

DIAL

RECALL ── LAST NUMBER ── DIALING

LEARN ──(4)── NAME(ANY) ── TRAIN FOR THE NAME

              BACK
              NUMBER ── DIAL ── STORE
              PAUSE
              CANCEL ──(1)          (1)

              CANCEL ──(1)

FORGET ── NAME ── FORGET
          NUMBER
          CANCEL ──(1)        ERASE
                                (1)

PHONE ── FREE ── PHONE OFF

## FIG. 7.

## FIG. 5.

## FIG. 6.